(19) Europäisches Patentamt

European Patent Office

Office européen des brevets

(11) **EP 1 292 146 A1**

(12) **EUROPEAN PATENT APPLICATION**
published in accordance with Art. 158(3) EPC

(43) Date of publication:
    **12.03.2003 Bulletin 2003/11**

(51) Int Cl.⁷: **H04N 7/173**

(21) Application number: **00927770.8**

(22) Date of filing: **15.05.2000**

(86) International application number:
    **PCT/JP00/03103**

(87) International publication number:
    **WO 01/089216 (22.11.2001 Gazette 2001/47)**

(84) Designated Contracting States:
    **AT BE CH CY DE DK ES FI FR GB GR IE IT LI LU
    MC NL PT SE**
    Designated Extension States:
    **AL LT LV MK RO SI**

(71) Applicants:
    • **Dentsu Inc.**
      **Chuo-ku, Tokyo 104-8426 (JP)**
    • **Sumitomo Corporation**
      **Tokyo 104-8610 (JP)**

(72) Inventors:
    • **IIJIMA, Akio**
      **Setagaya-ku, Tokyo 158-0092 (JP)**
    • **ARIMURA, Takeshi,**
      **c/o SUMITOMO CORPORATION**
      **Chuo-ku, Tokyo 104-8610 (JP)**

(74) Representative: **HOFFMANN - EITLE**
    **Patent- und Rechtsanwälte**
    **Arabellastrasse 4**
    **81925 München (DE)**

(54) **METHOD AND APPARATUS FOR CONTROLLING TRANSMISSION OF ADVERTISEMENT**

(57)  A method and an apparatus (1) for transmitting advertisement data to a receiver (20) of each viewer/listener registered with a transmitting side are provided. In the transmitting side, from each registered viewer/listener, data characterizing a group to which the viewer/listener belongs is obtained (3); data characterizing viewers/listeners group targeted by each piece of advertisement data is received and associated with the piece of advertisement data (3); for each registered viewer/listener, based on a degree of coincidence between the data characterizing the group to which the viewer/listener belongs and the data characterizing the viewers/listeners group targeted by each piece of advertisement data, selecting from the pieces of advertisement data one or more pieces of advertisement data which will be transmitted to the receiver of the viewer/listener, and assigning the selected pieces of advertisement data to the viewer/listener (6); and, to each registered viewer/listener, transmitting the one or more pieces of advertisement data assigned to the viewer/listener to the receiver (20) of the viewer/listener.

*Fig.3*

## Description

FIELD OF THE INVENTION

The present invention relates to a method and an apparatus for controlling transmission of advertisements stored in a transmitting side from the transmitting side to a receiver, and a recording medium storing a computer program by which a computer executes procedures similar to those of the method.

DESCRIPTION OF THE RELATED ART

Conventionally, there are broadcast systems which require a viewer/listener to register as a subscriber at a transmitting side to be able to view or listen to broadcast transmissions. A signal of such a broadcast may be transmitted via CS, BS, terrestrial TV, cable, etc., by either by wire or wirelessly to a registered subscriber's receiver. In such broadcast systems, advertisements are inserted in programs (shows) and between broadcasts of programs, in a manner similar to that employed in conventional broadcasts, such as a conventional television broadcasts. The transmitting side stores advertisement data (data representing images, sounds, characters, etc.) of advertisements which are received from advertisers, and broadcasts a stored advertisement under conditions agreed to by contract between the advertiser and the broadcaster. Such conditions may include; a date on which to begin broadcasting the advertisement, a date on which broadcasting is to stop, and dates and times for broadcasting the advertisement (days of a week, time of a day), etc. In the conventional broadcast system, the same advertisement is broadcast at the same timings to all subscribers.

In an Internet environment, an advertisement is related to, in other words, tied to, a site accessed, a content displayed (a screen for retrieval, a home page, etc.), etc. For example, when a viewer/listener, who has registered as a subscriber with a provider, accesses a site on the Internet by using a terminal such as a computer or a mobile phone, an advertisement which is tied to the site is displayed on a display device of the terminal. Also, as another example in the Internet environment, there is a technique to display an advertisement when a subscriber accesses a site which uses and provides a retrieval engine. In such a case, each piece of information which can be retrieved by the retrieval engine and an advertisement relating to the piece of information are tied; and, when a subscriber uses the retrieval engine to retrieve a particular piece of information, an advertisement relating to the piece of information is displayed. For example, when information on a car is retrieved by using the retrieval engine, an advertisement relating to the car is displayed in addition to the information on the car that the subscriber desired to obtain. In the advertisement display technique of the prior art which involves the Internet as described above, there is a technique of displaying a predetermined advertisement, which is tied to a site or a content, to a subscriber who accessed the site or who viewed the content.

In broadcasting which is directed to viewers/listeners who are registered as subscribers, and image and sound information outputting which employs the Internet as described above, the same advertisement is provided at the same time to all viewers/listeners (subscribers) and reproduced. In such broadcasting and information outputting system, matching between a viewer/listener and an advertisement, for example, whether or not an advertisement is appropriate for a viewer/listener and meets the needs of the viewer/listener, whether a viewer/listener belongs to an audience group to which a sponsor attaches importance, etc., is not taken into consideration. Therefore, there is a disadvantage of reducing the effectiveness and efficiency of an advertisement.

As such, it is desired to select an advertisement which closely matches an audience group targeted by the advertisement and an audience group to which a viewer/listener belongs, and to display the advertisement on each corresponding receiver. Therefore, in a transmitting side (broadcasting side, content providing side, etc.), it is desired to compare, for each advertisement stored in the transmitting side and for each viewer/listener, information specifying an audience group targeted by an advertisement and information specifying an audience group to which the viewer/listener belongs; select, for each viewer/listener, an advertisement(s) based on the degree of coincidence (matching) between the audience group to which the viewer/listener belongs and the audience group targeted by the advertisement; store data indicating which advertisement is selected and assigned to which viewer/listener; and transmit one or more advertisements, among the assigned advertisements to be displayed to each viewer/listener, to the viewer/listener's receiver, at a timing when an advertisement is to be displayed on a receiver.

Also, in prior art advertisement display techniques, advertisements are read out and displayed at a predetermined timing and in a predetermined order. That is, advertisements are always displayed in the same order. However, for each advertisement selected and assigned for each receiver, degree of coincidence between the audience group to which the viewer/listener belongs and the audience group targeted by the advertisement may differ. That is, among the selected advertisements, advertisements which are optimally suitable, moderately suitable, and less suitable may be included. Therefore, when the effect and efficient of an advertisement is considered, it is desired to preferentially read out an advertisement(s) having a high degree of coincidence (matching) with the viewer/listener of each receiver, send the read out advertisement(s) to the receiver, and display it (them) on the receiver.

It should be remembered that a transmitting side is a side which transmits an advertisement to a receiver. The transmitting side includes a side which provides information such as images, sounds and characters to registered audiences (subscribers). Some examples of transmitting sides are a broadcast station (broadcasting company) which broadcasts a broadcast signal by using a predetermined channel to viewers/listeners who are registered as subscribers, by using a wired and/or wireless transmitting method such as CS, BS, terrestrial TV, cable; a provider which provides contents via a communication network, such as the Internet, etc., to users who are registered as subscribers; and a telephone company which provides a telephone which can be used with the Internet. A receiver is an apparatus which is able to receive a signal which represents information such as images, sounds, and/or characters, and to reproduce the information. Some examples of receivers are a television set which is provided with a function to receive a signal transmitted from a transmitting side to a subscriber; and a computer and a telephone which are able to connect to a communication network such as the Internet.

In a contract regarding displaying of an advertisement which is made between a sponsor and a transmitting side, conditions regarding a period for display, the number of times of displaying the advertisement, and a time of day for display, etc., are included. In order to display an advertisement on a receiver as defined in the contract, it is desired to actively control the transmissions of an advertisement.

For an advertisement for which the designated display period is short and/or an advertisement for which a remaining display period is short, it is necessary to increase the frequency of transmission to each receiver for increasing the displaying frequency on the receiver, in order to attain a predetermined total number of times of display during the period. That is, at a transmitting side, it is necessary to preferentially transmit an advertisement for which the remaining display period is short, among advertisements which are assigned to each receiver to each receiver to be displayed.

In addition, concerning an advertisement for which an ordered number of times of display (total number of displays), that is, for which a total number of times of transmission of the advertisement from a transmitting side to a receiver (corresponding to the ordered total number of times of display) is large and/or an advertisement for which the remaining number of times of transmission until the total number of transmissions is reached is large, it is necessary to increase a transmission frequency of the advertisement to each receiver in order to complete the number of times of contracted transmission within the agreed period. That is, at the transmitting side, among those advertisements assigned to each receiver, it is necessary to preferentially transmit an advertisement for which the remaining number of times of transmission is large to each receiver for the advertisement to be displayed.

In a configuration wherein advertisements are selected and assigned to each one of the audiences individually, the averaged number of times of display of an advertisement which is a minimum required in each of all receivers in order to attain the ordered total number of times of display of an advertisement (an averaged minimum display number, i.e., a minimum number of times of display required in each receiver, to which the advertisement is assigned, in order to attain the ordered total number of times of display of the advertisement), in other words, the minimum number of transmissions to each receiver, to which the advertisement is assigned, which is at least required to attain the total number of transmissions of an advertisement ordered (a minimum transmission number) can be calculated by dividing the total number of times of transmission of the advertisement by the total number of receivers to which the advertisement is assigned. That is, to complete a predetermined total number of transmissions (that is, to complete an ordered total number of transmissions) within a predetermined period, it is necessary to increase the frequency of transmissions to each receiver of an advertisement for which the remaining number of transmissions until the minimum display number is reached is large. However, if the number of transmissions of an advertisement to at least one of the audiences, or to at least one receiver, to which the advertisement is assigned did not reach the minimum number of transmissions (that is, if the number of times of display of the advertisement on one or more receivers did not reach the averaged minimum display number), the ordered total number of transmissions cannot be attained even if the minimum number of transmissions of the advertisement to each of other receivers is completed. In order to supplement the shortage of the number of transmissions, it is necessary to carry out a larger number of transmissions to the other receivers for them to display the advertisement. In addition, it is necessary to prevent the number of transmissions to a specific receiver from becoming too large. Thus, for each advertisement, it is necessary to determine, based on the minimum number of transmissions, the number of transmissions equally set for each receiver to which the advertisement is assigned; that allows each receiver to offset a shortage of the number of times of display of the advertisement of others, in other words, a shortage of the number of transmissions of the advertisement to the receivers; that defines an upper limit on the number of transmissions of the advertisement to each receiver in order to avoid an excessive number of transmissions and displays of the advertisement. Therefore, it is necessary to use the averaged upper limit number of transmissions, that is, the averaged transmission number, instead of the above averaged minimum transmission number to preferentially transmit to a receiver an advertisement for which the remaining number of transmissions until this averaged transmission number is reached is large. Thus, in order to complete a predetermined total number of transmissions within a predetermined period, it is necessary to increase the advertisement transmission frequency for which the remaining number of transmissions until the averaged transmission number is reached is large, among the advertisements assigned to each receiver (each viewer/listener). It should be understood that an averaged transmission number is a term which is used when the process is viewed from a transmitting side, whereas an averaged display number is a term which is used when the process is viewed from a receiver side; and the value represented by the averaged transmission number and that represented by the averaged display number are the same.

In addition, in the method of reading out and transmitting advertisements in a predetermined order at a predetermined timing, advertisements are always transmitted to the receivers in the same order. In addition, if a method in which a priority order of transmitting each advertisement is calculated each time one advertisement is transmitted and advertisements are transmitted in the order from one with a highest priority order, the same advertisement may be, potentially, sequentially transmitted. However, if advertisements are always transmitted in the same order or an identical advertisement is continuously transmitted to a receiver, a viewer/listener's attention cannot be drawn. That is, if the effects and efficiency of an advertisement are taken into consideration, it is not preferable to always transmit advertisements to a receiver in the same order or to continuously transmit the same advertisement to be displayed. Therefore, it is desirable for a new order of transmission to be predetermined after transmitting advertisements in a certain order for display, and that advertisements are transmitted in accordance with the new predetermined transmission order.

In addition, the value of the above averaged transmission number is the same for each viewer/listener (each receiver). That is, the degree of coincidence of information specifying an audience group targeted by an advertisement and information specifying an audience group to which a viewer/listener of a receiver belongs is not reflected at all. If efficiency of an advertisement is taken into consideration, it is not desirable to assign the same number of times of display, that is, the same number of transmissions to both a viewer/listener with a low degree of coincidence with the advertisement and a viewer/listener with a high degree of coincidence. Thus, it is necessary to set the number of transmissions that reflects a degree of coincidence between an advertisement and a viewer/listener; that offsets a shortage of the number of transmissions of an advertisement to one or more receivers, to which the advertisement is assigned, by other receivers; that prevents a certain advertisement from being transmitted too many times to each receiver. Therefore, it is necessary to use that transmission number, that is, the number of transmissions determined for each viewer/listener (each receiver) according to the degree of coincidence (hereinafter, referred to as an upper limit transmission number), instead of the above averaged transmission number, to preferentially read out at the transmitting side an advertisement which has a large upper limit transmission number, and transmit it to a receiver for display.

Moreover, it is desirable to transmit an advertisement to a receiver to be displayed in such a manner that the time of transmitting and displaying the advertisement coincides as much as possible with activity schedules in the lifestyle of the viewer/listener targeted by the advertisement, and that the advertisement is transmitted to the receiver during a time slot of day that a sponsor wishes the advertisement to be displayed.

In addition, for an advertisement, attributes such as cars, medical products, foods and the like (that is, a field to which goods advertised by an advertisement belong) exist, and tastes with respect to the attributes exist on the audience side. It is desirable for a viewer/listener to vote with respect to the attributes that he/she prefers, whereby an advertisement with an audience-preferred attribute is preferentially transmitted to the viewer/listener's receiver for display.

In addition, when an advertisement that should be preferentially transmitted to a receiver for display is determined, an advertisement that would not be selected as most preferential in a comprehensive determination may be selected in some cases, if determination is performed based on one element of determination. Therefore, it is desired that an advertisement that should be most preferentially transmitted to a receiver for display is comprehensively determined based on a plurality of elements of determination.

In addition, it is also necessary to modify conditions of platform for selecting the advertisement to be transmitted to each viewer/listener (each receiver) and to control transmission of the advertisement, based on feedback from the receiver, data accumulated in the transmitting side, and external instructions.

Moreover, it is desired to provide a mechanism to preferentially transmit and display a specified advertisement according to a request from a sponsor of the advertisement.

Therefore, it is an object of the present invention to provide an advertisement transmitting method, a recording medium for storing a computer program for causing a computer to execute procedures similar to those of the above method, and an advertisement transmitting apparatus for performing control, at a transmitting side, such that advertisements stored in the transmitting side are selected for each viewer/listener (a receiver of the viewer/listener) who is registered as a subscriber with the transmitting side, based on the degree of coincidence (matching) between an audience group targeted by the advertisement and an audience group to which the viewer/listener belongs, and the assigned advertisement is transmitted to the receiver of the viewer/listener for display.

It is an object of the present invention to provide an advertisement transmitting method, a recording medium for storing a computer program for enabling a computer to execute procedures similar to those of the above method, and an advertisement transmitting apparatus for performing control, at a transmitting side, such that a priority order of transmission, i.e., transmission to a receiver, of each of advertisements which are individually assigned to each receiver (each viewer/listener) is determined, and the advertisements are transmitted to the receiver according to the priority order for displaying them.

It is an object of the present invention to provide an advertisement transmitting method, a recording medium for storing a computer program for causing a computer to execute procedures similar to those of the above method, and an advertisement transmitting apparatus for performing control, at a transmitting side, such that, for each advertisement individually assigned to each receiver, a priority order of transmission of the advertisement to a receiver is determined based on the degree of coincidence, and the advertisements are transmitted to the receiver according to the priority order for displaying them.

It is an object of the present invention to provide an advertisement transmitting method, a recording medium for storing a computer program for causing a computer to execute procedures similar to those of the above method, and an advertisement transmitting apparatus for performing control, at a transmitting side, such that, for each advertisement individually assigned to each receiver, a priority order of transmission of the advertisement to a receiver is determined based on a displaying period of each advertisement, and the advertisements are transmitted to the receiver according to the priority order for displaying them.

It is an object of the present invention to provide an advertisement transmitting method, a recording medium for storing a computer program for causing a computer to execute procedures similar to those of the above method, and an advertisement transmitting apparatus for performing control, at a transmitting side, such that, for each advertisement individually assigned to each receiver, a priority order of transmission of each advertisement to each receiver is determined based on an averaged transmission number (the remaining number of transmissions until an averaged transmission number is reached) of each advertisement, that is, an averaged display number (the remaining number of times of display until an averaged display number is reached) on the receiver, and the advertisements are transmitted to the receiver according to the priority order for displaying them.

It is an object of the present invention to provide an advertisement transmitting method, a recording medium for storing a computer program for causing a computer to execute procedures similar to those of the above method, and an advertisement transmitting apparatus for performing control, at a transmitting side, such that, for each advertisement individually assigned to each receiver, a predetermined transmission order to transmit the advertisements for display on the receiver, that is, a predetermined display order of the advertisements on the receiver is assigned; the advertisements are transmitted to and displayed on the receiver in accordance with the order; a new predetermined transmission order is assigned after transmitting the advertisements; and the advertisements are transmitted to the receiver according to the new order for displaying them.

It is an object of the present invention to provide an advertisement transmitting method, a recording medium for storing a computer program for causing a computer to execute procedures similar to those of the above method, and an advertisement transmitting apparatus for performing control, at a transmitting side, such that, for each advertisement individually assigned to each receiver, such that the number of transmissions of an advertisement (upper limit transmission number), which is required for each receiver and which reflects a degree of coincidence between the audience group targeted by each advertisement and the audience group of a viewer/listener of the receiver, is determined; a priority order of transmitting each advertisement is determined based on the upper limit transmission number (the remaining number of transmissions until the upper limit transmission number is reached) of each advertisement; and the advertisements are transmitted to the receiver according to the priority order for displaying them.

It is an object of the present invention to provide an advertisement transmitting method, a recording medium for storing a computer program for causing a computer to execute procedures similar to those of the above method, and an advertisement transmitting apparatus for performing control, at a transmitting side, such that, for each advertisement individually assigned to each receiver, the advertisement is preferentially transmitted to the receiver and displayed, in accordance with the time schedules of activities in the lifestyle of the viewer/listener belonging to an audience group targeted by the advertisement.

It is an object of the present invention to provide an advertisement transmitting method, a recording medium for storing a computer program for causing a computer to execute procedures similar to those of the above method, and an advertisement transmitting apparatus for performing control, at a transmitting side, such that a viewer/listener can indicate, from the receiver side, tastes (preferences) with respect to an attribute of each advertisement displayed on the receiver; a priority order of transmitting each advertisement is determined based on the taste with respect to the attribute of the advertisement indicated by the viewer/listener; and the advertisements are transmitted to the receiver according to the priority order for displaying them.

It is an object of the present invention to provide an advertisement transmitting method, a recording medium for storing a computer program for causing a computer to execute procedures similar to those of the above method, and an advertisement transmitting apparatus for performing control, at a transmitting side, such that, for each advertisement individually assigned to each receiver, a plurality of elements for determining a priority order are comprehensively determined to give a priority order to each advertisement, and the advertisements are transmitted to the receiver according to the priority order for displaying them.

Further, it is an object of the present invention to provide an advertisement transmitting method, a recording medium for storing a computer program for causing a computer to execute procedures similar to those of the above method, and an advertisement transmitting apparatus for performing control, at a transmitting side, such that histories, which are actual display results of an advertisement on a receiver, are collected; and transmission of advertisements to the receiver is controlled based on the accumulated results.

Also, it is an object of the present invention to provide an advertisement transmitting method, a recording medium for storing a computer program for causing a computer to execute procedures similar to those of the above method, and an advertisement transmitting apparatus for performing control, at a transmitting side, such that designation of an advertisement that should be most preferentially transmitted is made possible and, for receivers to which the designated advertisement is assigned, the designated advertisement is most preferentially transmitted for display.

DISCLOSURE OF THE INVENTION

An advertisement transmitting method of the present invention is an advertisement transmitting method for transmitting one or more pieces of advertisement data of advertisements from a transmitting side to a receiver of each viewer/listener who is registered with the transmitting side, and it comprises the steps of: in the transmitting side; (1) obtaining, from each registered viewer/listener, data characterizing the viewer/listener; (2) associating data characterizing viewers/listeners targeted by each piece of advertisement data with the piece of advertisement data; (3) for each registered viewer/listener, based on a degree of coincidence between the data characterizing the viewer/listener and the data characterizing viewers/listeners targeted by the pieces of advertisement data, selecting from the pieces of advertisement data one or more pieces of advertisement data which may be transmitted to the receiver of the viewer/listener, and assigning the selected pieces of advertisement data to the viewer/listener; and (4) to each registered viewer/listener, transmitting the one or more pieces of advertisement data assigned to the viewer/listener from the transmitting side to the receiver of the viewer/listener.

An advertisement transmitting method of the present invention is characterized in that, in the above advertisement transmitting method, it further comprises the steps of: for each viewer/listener registered with the transmitting side; conducting, for each piece of advertisement data assigned to the viewer/listener, weighting with respect to a priority for transmitting the piece of advertisement data to the receiver of the viewer/listener; determining, based on the weight, a priority order of each piece of advertisement data for transmitting the advertisement data to the receiver, and; selecting, from the assigned pieces of advertisement data, one or more pieces of advertisement data to be transmitted to the receiver of the viewer/listener, based on the priority orders; and the step of item (4) comprises a step of transmitting, based on the priority orders, the one or more pieces of advertisement data selected on the basis of the priority orders from the assigned pieces of advertisement data to the receiver of the viewer/listener.

An advertisement transmitting method of the present invention comprises, in the above advertisement transmitting method, the steps of: (1) for each piece of advertisement data for an advertisement, adding data indicative of a viewing/listening period of the piece of advertisement data; (2) based on the viewing/listening period, determining a remaining viewing/listening period of the piece of advertisement data; (3) for the remaining viewing/listening period, determining a value of a coefficient representing a weight, wherein the weight becomes greater as the remaining viewing/listening period becomes shorter; and (4) based on the values of the coefficients for the respective pieces of advertisement data assigned to the viewer/listener, determining priority orders for transmitting the pieces of advertisement data to the receiver.

An advertisement transmitting method of the present invention comprises, in the above advertisement transmitting method, the steps of: (1) for each advertisement, selecting, from category data for specifying audience groups, categories which specify audience groups which are targets of the advertisement, wherein the category data for specifying audience groups comprises a plurality of items and each item comprises a plurality of categories of audience groups; assigning a value of a coefficient representing a weight to each of the selected categories, wherein a greater weight is assigned to a category having more importance; adding, to the advertisement data of the advertisement, first data which represents the selected categories and data which represents the values of the coefficients assigned to each of the selected categories; (2) selecting, from the category data for specifying audience groups, categories which specify audience groups to which the viewer/listener of the receiver belongs; and storing second data which represents the selected categories; (3) based on the assigned coefficient values of the selected categories among the first data which coincide with the selected categories represented by the second data, determining a value of a coefficient which represents the degree of coincidence between the categories targeted by the advertisement and the categories to which the viewer/listener belongs; and (4) based on the values of the coefficients representing the degrees of coincidence for the respective pieces of advertisement data assigned to the viewer/listener, determining priority orders for transmitting the pieces of advertisement data to the receiver.

An advertisement transmitting method of the present invention comprises, in the above advertisement transmitting method, the steps of: (1a) for each piece of advertisement data of the advertisement, adding data indicative of the number of transmissions of the piece of advertisement data to the receiver; (2a) based on the number of transmissions, determining a remaining number of transmissions of the piece of advertisement data of the advertisement; (3a) for the remaining number of transmissions, determining a value of a coefficient representing a weight, wherein a greater weight is given to a larger remaining number of transmissions; and (4a) based on the values of the coefficients for the respective pieces of advertisement data assigned to the viewer/listener, determining priority orders for transmitting the pieces of advertisement data to the receiver.

An advertisement transmitting method of the present invention is characterized in that, in the above advertisement transmitting method, the number of transmissions in the step of item (1a) defines an upper limit of the number of transmissions of the piece of advertisement data of an advertisement to the receiver of the viewer/listener to whom the advertisement is assigned, and the number of transmissions is an averaged transmission number which is assigned equally to each of all viewers/listeners to whom the advertisement is assigned.

An advertisement transmitting method of the present invention is characterized in that, in the above advertisement transmitting method, the number of transmissions in the step of item (1a) defines an upper limit of the number of transmissions of the piece of advertisement data of an advertisement to the receiver of the viewer/listener to whom the advertisement is assigned, and the number of transmissions is a transmission number which is assigned individually to each viewer/listener to whom the advertisement is assigned and which is derived based on a degree of coincidence between an audience group targeted by the advertisement and an audience group to which the viewer/listener to whom the advertisement is assigned belongs.

An advertisement transmitting method of the present invention comprises, in the above advertisement transmitting method, the steps of: (1) among the pieces of advertisement data assigned to the viewer/listener, detecting one or more pieces of advertisement data which has been transmitted to the receiver of the viewer/listener; (2) for each piece of advertisement data assigned to the viewer/listener, determining a value of a coefficient representing a weight, wherein the weight is determined so as to provide the detected piece of advertisement data with a lower rank in a predetermined transmission order of advertisements than each other piece of advertisement data which is waiting for transmission to the receiver; and (3) based on the values of the coefficients for the respective pieces of advertisement data assigned to the viewer/listener, determining priority orders for transmitting the pieces of advertisement data to the receiver.

An advertisement transmitting method of the present invention comprises, in the above advertisement transmitting method, the steps of: (1b) in order to specify one or more times of a day at which the advertisement is desired to be preferentially transmitted to the receiver, for each piece of advertisement data, selecting time slot data from preferential transmission time data which comprises time slot data for each of a plurality of time slots for specifying one or more times of a day at which the advertisement is desired to be preferentially transmitted to the receiver; assigning a value of a coefficient representing a weight to each selected piece of the time slot data, wherein a greater weight is assigned to a selected time slot having more importance; adding, to the advertisement data of the advertisement, one or more selected pieces of time slot data and data which represents the value of the coefficient assigned to each selected piece of the time slot data; (2b) determining a time slot to which the present time of day belongs; (3b) reading out the value of the coefficient assigned to the piece of time slot data which corresponds to the time slot determined in the step of item (2b); and (4b) based on the values of the coefficients for the respective pieces of advertisement data assigned to the viewer/listener, determining priority orders for transmitting the pieces of advertisement data to the receiver.

An advertisement transmitting method of the present invention comprises, in the above advertisement transmitting method, the steps of: (1) for each advertisement, selecting advertisement attribute data representative of a category to which an object to be advertised by the advertisement belongs; and adding the selected advertisement attribute data to the advertisement data of the advertisement; (2) to the advertisement attribute data, assigning a value of a coefficient which represents the importance of the category represented by the advertisement attribute data; (3) optionally increasing or decreasing, by the viewer/listener of the receiver, the value of the coefficient assigned to the advertisement attribute data; and (4) based on the values of the coefficients for the respective pieces of advertisement data assigned to the viewer/listener, determining priority orders for transmitting the pieces of advertisement data to the receiver.

An advertisement transmitting method of the present invention is characterized in that, in the above advertisement transmitting method, the step of determining priority orders for transmitting the pieces of advertisement data comprises a step of changing one or more values of the coefficient by applying thereto one or more values of one or more different coefficients.

An advertisement transmitting method of the present invention comprises, in the above advertisement transmitting method, the steps of: among the pieces of advertisement data, indicating a piece of advertisement data which should be most preferentially transmitted during a certain advertisement frame; and if the indicated piece of advertisement data which should be most preferentially transmitted is included in the pieces of advertisement data assigned to the viewer/listener, most-preferentially transmitting the piece of advertisement data to the receiver of the viewer/listener during the advertisement frame.

An advertisement transmitting apparatus of the present invention is an advertisement transmitting apparatus for transmitting one or more pieces of advertisement data of advertisements from a transmitting side to a receiver of each viewer/listener who is registered with the transmitting side, and it comprises: (1) means for obtaining, from each of the registered viewers/listeners, data characterizing the viewer/listener, and storing the data; (2) means for associating data characterizing viewers/listeners targeted by each piece of advertisement data with the piece of advertisement data, and storing the data; (3) means for selecting, for each registered viewer/listener and based on a degree of coincidence between the data characterizing the viewer/listener and the data characterizing viewers/listeners targeted by each piece of advertisement data, from the pieces of advertisement data one or more pieces of advertisement data which may be transmitted to the receiver of the viewer/listener; (4) means for assigning, to each registered viewer/listener, the pieces of advertisement data selected for the viewer/listener with the registered viewer/listener; and (5) means for transmitting the one or more pieces of advertisement data associated with the viewer/listener to the receiver of the viewer/listener.

An advertisement transmitting apparatus of the present invention is characterized in that, in the above advertisement transmitting apparatus, it further comprises: (A) means for conducting, for each piece of advertisement data of the advertisement associated with the viewer/listener, weighting regarding priority for transmitting the advertisement data to the receiver of the viewer/listener, and determining a value of a coefficient representing the weight in such a manner that the weight becomes greater as the priority becomes higher; (B) means for associating, for each piece of advertisement data associated with the viewer/listener, the piece of advertisement data and the value of the coefficient corresponding to the piece of advertisement data, and storing the data; (c) means for determining, based on the values of the weights, a priority order of each piece of advertisement data for transmitting the advertisement data to the receiver; and (D) means for selecting, from the pieces of advertisement data associated with the viewer/listener, one or more pieces of advertisement data to be transmitted to the receiver of the viewer/listener, based on the priority orders; and the means of item (5) comprises means for transmitting, based on the priority orders, the one or more pieces of advertisement data selected by the means of item (D) to the receiver of the viewer/listener.

An advertisement transmitting apparatus of the present invention is characterized in that, in the above advertisement transmitting apparatus, the means of item (A) comprises: (1) means for adding, for each piece of advertisement data, data indicative of a viewing/listening period of the piece of advertisement data; (2) means for determining, based on the viewing/listening period, a remaining viewing/listening period of the piece of advertisement data; and (3) means for determining a value of a coefficient representing a weight for the remaining viewing/listening period, in such a manner that the weight becomes greater as the remaining viewing/listening period becomes shorter.

An advertisement transmitting apparatus of the present invention is characterized in that, in the above advertisement transmitting apparatus, the means of item (A) comprises: (1) means for associating with each piece of advertisement data, data which is indicative of first selected categories which specify audience groups which are targets of the advertisement, and data which is indicative of values of coefficients assigned to the respective first selected categories, and storing the data; wherein the first selected categories are selected from category data for specifying audience groups, and the category data comprises a plurality of items and each item comprises a plurality of categories to specify audience groups; and the value of the coefficient is assigned in such a manner that a greater value representing a greater weight is assigned to the first selected category having more importance; (2) means for storing data which is indicative of second selected categories which are selected from the category data for specifying audience groups, wherein the second selected categories specify audience groups to which the viewer/listener of the receiver belongs; and (3) means for determining a value of a coefficient representing a degree of coincidence between the categories targeted by the advertisement and the categories to which the viewer/listener of the receiver belongs, based on the coefficient values assigned to the first selected categories which coincide with the second selected categories, wherein the degree of coincidence represents a weight which becomes greater as the degree of coincidence becomes higher.

An advertisement transmitting apparatus of the present invention is characterized in that, in the above advertisement transmitting apparatus, the means of item (A) comprises: (1a) means for associating with each piece of advertisement data, data indicative of the number of transmissions of the piece of advertisement data to the receiver; (2a) means for determining, based on the number of transmissions, a remaining number of transmissions of the piece of advertisement data; and

(3a) means for determining, for the remaining number of transmissions, a value of a coefficient representing a weight, wherein a greater weight is given to a larger remaining number of transmissions.

An advertisement transmitting apparatus of the present invention is characterized in that, in the above advertisement transmitting apparatus, the number of transmissions associated with the piece of advertisement data by the means of item (1a) defines an upper limit of the number of transmissions of the piece of advertisement data of an advertisement to the receiver of the viewer/listener to whom the advertisement is assigned, and the number of transmissions is an averaged transmission number which is assigned equally to each of all viewers/listeners to whom the advertisement is assigned.

An advertisement transmitting apparatus of the present invention is characterized in that, in the above advertisement transmitting apparatus, the number of transmissions associated with the piece of advertisement data by the means of item (1a) defines an upper limit of the number of transmissions of the piece of advertisement data of an advertisement to the receiver of the viewer/listener to whom the advertisement is assigned, and the number of transmissions is a transmission number which is assigned individually to each viewer/listener to whom the advertisement is assigned and which is derived based on a degree of coincidence between an audience group targeted by the advertisement and an audience group to which the viewer/listener to whom the advertisement is assigned belongs.

An advertisement transmitting apparatus of the present invention is characterized in that, in the above advertisement transmitting apparatus, the means of item (A) comprises: (1) means for detecting, among the pieces of advertisement data assigned to the viewer/listener, one or more pieces of advertisement data which has been transmitted to the receiver of the viewer/listener; and (2) means for determining, for each piece of advertisement data assigned to the viewer/listener, a value of a coefficient representing a weight, wherein the weight is determined so as to provide the detected piece of advertisement data with a lower rank in a predetermined transmission order of advertisements than each other piece of advertisement data which is waiting for transmission to the receiver.

An advertisement transmitting apparatus of the present invention is characterized in that, in the above advertisement transmitting apparatus, the means of item (A) comprises: (1b) means for associating with each piece of advertisement data, time slot data and data indicative of a value of a coefficient assigned to the time slot data, in order to specify one or more times of a day at which the advertisement is desired to be preferentially transmitted to the receiver, and storing the data; wherein the time slot data is selected from preferential display time data which comprises time slot data for each of a plurality of time slots, for specifying one or more times of day when the advertisement is desired to be preferentially transmitted to the receiver; and the value of the coefficient represents a weight of the selected time slot, and a greater weight is assigned to a selected time slot having greater importance; (2b) means for determining a time slot to which the present time of day belongs; (3b) means for reading out, from the means of item (1b), the value of the coefficient assigned to the time slot data which corresponds to the time slot determined by the means of item (2b); and (4b) means for determining priority orders for transmitting the respective pieces of advertisement data which are stored in association with the viewer/listener to the receiver of the viewer/listener, based on the values of the coefficient.

An advertisement transmitting apparatus of the present invention is characterized in that, in the above advertisement transmitting apparatus, the means of item (A) comprises: (1) means for obtaining, for each advertisement, advertisement attribute data representative of a category to which an object to be advertised by the advertisement belongs, and adding the selected advertisement attribute data to the advertisement data of the advertisement; (2) means for assigning to the advertisement attribute data, a value of a coefficient which represents the importance of the category represented by the advertisement attribute data; (3) means for optionally increasing or decreasing, by the viewer/listener, the value of the coefficient assigned to the advertisement attribute data; and (4) means for determining priority orders for transmitting the respective pieces of advertisement data which are stored in association with the viewer/listener to the receiver of the viewer/listener, based on the values of the coefficient.

An advertisement transmitting apparatus of the present invention is characterized in that, in the above advertisement transmitting apparatus, the means for determining a priority order of item (C) comprises means for changing one or more values of the coefficient by applying thereto one or more values of one or more different coefficients.

An advertisement transmitting apparatus of the present invention is characterized in that, in the above advertisement transmitting apparatus, it comprises means for indicating, among the pieces of advertisement data, a piece of advertisement data which should be most preferentially transmitted during a certain advertisement frame; and means for most-preferentially transmitting the piece of advertisement data to the receiver of the viewer/listener during the advertisement frame, if the indicated piece of advertisement data which should be most preferentially transmitted is included in the pieces of advertisement data assigned to the viewer/listener.

A storage medium of the present invention is a storage medium for storing a program which enables a computer to carry out a procedure for transmitting one or more pieces of advertisement data of advertisements from a transmitting side to a receiver of each viewer/listener who is registered with the transmitting side, and the procedure comprises the steps of: in the transmitting side, (1) obtaining, from each registered viewer/listener, data characterizing the viewer/listener; (2) associating data characterizing viewers/listeners targeted by each piece of advertisement data with the piece of advertisement data; (3) for each registered viewer/listener, based on a degree of coincidence between the data characterizing the viewer/listener and the data characterizing viewers/listeners targeted by the pieces of advertisement data, selecting from the pieces of advertisement data one or more pieces of advertisement data which may be transmitted to the receiver of the viewer/listener, and assigning the selected pieces of advertisement data to the viewer/listener; and (4) to each registered viewer/listener, transmitting the one or more pieces of advertisement data assigned to the viewer/listener from the transmitting side to the receiver of the viewer/listener.

A storage medium of the present invention is characterized in that, in the above storage medium, the procedure carried out by a computer based on the computer program recorded in the storage medium further comprises the steps of: for each viewer/listener registered with the transmitting side; conducting, for each piece of advertisement data assigned to the viewer/listener, weighting with respect to a priority for transmitting the piece of advertisement data to the receiver of the viewer/listener; determining, based on the weight, a priority order of each piece of advertisement data for transmitting the advertisement data to the receiver; and selecting, from the assigned pieces of advertisement data, one or more pieces of advertisement data to be transmitted to the receiver of the viewer/listener, based on the priority orders; and the step of item (4) comprises a step of transmitting, based on the priority orders, the one or more pieces of advertisement data selected on the basis of the priority orders from the assigned pieces of advertisement data to the receiver of the viewer/listener.

A storage medium of the present invention is characterized in that, in the above storage medium, the procedure carried out by a computer based on the computer program recorded in the storage medium comprises the steps of: (1) for each piece of advertisement data for an advertisement, adding data indicative of a viewing/listening period of the piece of advertisement data; (2) based on the viewing/listening period, determining a remaining viewing/listening period of the piece of advertisement data; (3) for the remaining viewing/listening period, determining a value of a coefficient representing a weight, wherein the weight becomes greater as the remaining viewing/listening period becomes shorter; and (4) based on the values of the coefficients for the respective pieces of advertisement data assigned to the viewer/listener, determining priority orders for transmitting the pieces of advertisement data to the receiver.

A storage medium of the present invention is characterized in that, in the above storage medium, the procedure carried out by a computer based on the computer program recorded in the storage medium comprises the steps of: (1) for each advertisement, selecting, from category data for specifying audience groups, categories which specify audience groups which are targets of the advertisement, wherein the category data for specifying audience groups comprises a plurality of items and each item comprises a plurality of categories of audience groups; assigning a value of a coefficient representing a weight to each of the selected categories, wherein a greater weight is assigned to a category having more importance; adding, to the advertisement data of the advertisement, first data which represents the selected categories and data which represents the values of the coefficients assigned to each of the selected categories; (2) selecting, from the category data for specifying audience groups, categories which specify audience groups to which the viewer/listener of the receiver belongs; and storing second data which represents the selected categories; (3) based on the assigned coefficient values of the selected categories among the first data which coincide with the selected categories represented by the second data, determining a value of a coefficient which represents the degree of coincidence between the categories targeted by the advertisement and the categories to which the viewer/listener belongs; and (4) based on the values of the coefficients representing the degrees of coincidence for the respective pieces of advertisement data assigned to the viewer/listener, determining priority orders for transmitting the pieces of advertisement data to the receiver.

A storage medium of the present invention is characterized in that, in the above storage medium, the procedure carried out by a computer based on the computer program recorded in the storage medium comprises the steps of: (1a) for each piece of advertisement data of the advertisement, adding data indicative of the number of transmissions of the piece of advertisement data to the receiver; (2a) based on the number of transmissions, determining a remaining number of transmissions of the piece of advertisement data of the advertisement; (3a) for the remaining number of transmissions, determining a value of a coefficient representing a weight, wherein a greater weight is given to a larger remaining number of transmissions; and (4a) based on the values of the coefficients for the respective pieces of advertisement data assigned to the viewer/listener, determining priority orders for transmitting the pieces of advertisement data to the receiver.

A storage medium of the present invention is characterized in that, in the above storage medium, the number of transmissions in step of item (1a) of the procedure carried out by a computer based on the computer program recorded in the storage medium defines an upper limit of the number of transmissions of the piece of advertisement data of an advertisement to the receiver of the viewer/listener to whom the advertisement is assigned, and the number of transmissions is an averaged transmission number which is assigned equally to each of all viewers/listeners to whom the advertisement is assigned.

A storage medium of the present invention is characterized in that, in the above storage medium, the number of transmissions in step of item (1a) of the procedure carried out by a computer based on the computer program recorded in the storage medium defines an upper limit of the number of transmissions of the piece of advertisement data of an advertisement to the receiver of the viewer/listener to whom the advertisement is assigned, and the number of transmissions is a transmission number which is assigned individually to each viewer/listener to whom the advertisement is assigned and which is derived based on a degree of coincidence between an audience group targeted by the advertisement and an audience group to which the viewer/listener to whom the advertisement is assigned belongs.

A storage medium of the present invention is characterized in that, in the above storage medium, the procedure carried out by a computer based on the computer program recorded in the storage medium comprises the steps of: (1) among the pieces of advertisement data assigned to the viewer/listener, detecting one or more pieces of advertisement data which has been transmitted to the receiver of the viewer/listener; (2) for each piece of advertisement data assigned to the viewer/listener, determining a value of a coefficient representing a weight, wherein the weight is determined so as to provide the detected piece of advertisement data with a lower rank in a predetermined transmission order of advertisements than each other piece of advertisement data which is waiting for transmission to the receiver; and (3) based on the values of the coefficients for the respective pieces of advertisement data assigned to the viewer/listener, determining priority orders for transmitting the pieces of advertisement data to the receiver.

A storage medium of the present invention is characterized in that, in the above storage medium, the procedure carried out by a computer based on the computer program recorded in the storage medium comprises the steps of: (1b) in order to specify one or more times of a day at which the advertisement is desired to be preferentially transmitted to the receiver, for each piece of advertisement data, selecting time slot data from preferential transmission time data which comprises time slot data for each of a plurality of time slots for specifying one or more times of a day at which the advertisement is desired to be preferentially transmitted to the receiver; assigning a value of a coefficient representing a weight to each selected piece of the time slot data, wherein a greater weight is assigned to a selected time slot having more importance; adding, to the advertisement data of the advertisement, one or more selected pieces of time slot data and data which represents the value of the coefficient assigned to each selected piece of the time slot data; (2b) determining a time slot to which the present time of day belongs; (3b) reading out the value of the coefficient assigned to the piece of time slot data which corresponds to the time slot determined in the step of item (2b); and (4b) based on the values of the coefficients for the respective pieces of advertisement data assigned to the viewer/listener, determining priority orders for transmitting the pieces of advertisement data to the receiver.

A storage medium of the present invention is characterized in that, in the above storage medium, the procedure carried out by a computer based on the computer program recorded in the storage medium comprises the steps of: (1) for each advertisement, selecting advertisement attribute data representative of a category to which an object to be advertised by the advertisement belongs; and adding the selected advertisement attribute data to the advertisement data of the advertisement; (2) to the advertisement attribute data, assigning a value of a coefficient which represents the importance of the category represented by the advertisement attribute data; (3) optionally increasing or decreasing, by the viewer/listener of the receiver, the value of the coefficient assigned to the advertisement attribute data; and (4) based on the values of the coefficients for the respective pieces of advertisement data assigned to the viewer/listener, determining priority orders for transmitting the pieces of advertisement data to the receiver.

A storage medium of the present invention is characterized in that, in the above storage medium, the step of determining priority orders for transmitting the pieces of advertisement data in the procedure carried out by a computer based on the computer program recorded in the storage medium comprises a step of changing one or more values of the coefficient by applying thereto one or more values of one or more different coefficients.

A storage medium of the present invention is characterized in that, in the above storage medium, the procedure carried out by a computer based on the computer program recorded in the storage medium further comprises the steps of: among the pieces of advertisement data, indicating a piece of advertisement data which should be most preferentially transmitted during a certain advertisement frame; and if the indicated piece of advertisement data which should be most preferentially transmitted is included in the pieces of advertisement data assigned to the viewer/listener, most-preferentially transmitting the piece of advertisement data to the receiver of the viewer/listener during the advertisement frame.

BRIEF DESCRIPTION OF THE DRAWINGS

Fig. 1 is a table indicating a concept of a method for determining the priority order of transmission of advertisements to be transmitted from a transmitting side to a receiver for display and a method for selecting advertisements appropriate for each viewer/listener, wherein basic data used for the priority order determination method and advertisement selection method is shown.

Fig. 2 is a table indicating a concept of a method for determining the priority order of transmission of advertisements to a single viewer/listener registered at the transmitting side.

Fig. 3 illustrates a configuration of an apparatus of the present invention to be installed at the transmitting side to control transmission of advertisements.

Fig. 4 illustrates a configuration of an apparatus at the receiving side, that is, a receiver, to which advertisements are transmitted from the advertisement transmitting apparatus of the present invention.

Fig. 5 is a flow chart showing steps of registering the viewer/listener at the transmitting side, that is, at the advertisement transmitting apparatus 1.

Fig. 6 is a flow chart showing steps of analyzing personal data of the viewer/listener at the transmitting side, that is, at the advertisement transmitting apparatus 1.

Fig. 7 is a flow chart showing steps of preparing data concerning advertisements at the transmitting side, that is, at the advertisement transmitting apparatus 1.

Fig. 8 is a flow chart showing steps of creating a personal calculation sheet at the transmitting side, that is, at the advertisement transmitting apparatus 1.

Fig. 9 is a flow chart showing steps of generating an instruction signal concerning deletion of advertisements at the transmitting side, that is, at the advertisement transmitting apparatus 1.

Fig. 10 is a flow chart showing steps of generating an instruction signal concerning the most preferential transmission of an advertisement at the transmitting side, that is, at the advertisement transmitting apparatus 1.

Fig. 11 is a flow chart showing steps of generating an instruction signal concerning change in a value of a control variable to be applied to a control coefficient at the transmitting side, that is, at the advertisement transmitting apparatus 1.

Fig. 12 is a flow chart showing the steps of determining the priority order of transmission of advertisements to each member of the audience at the transmitting side, that is, at the advertisement transmitting apparatus 1 and of transmitting and displaying the advertisements to and at the receiver of each viewer/listener; this flow chart continues on Fig. 13.

Fig. 13 is a flow chart continuing from Fig. 12 to indicate the steps of determining the priority order of transmission of advertisements to each viewer/listener at the transmitting side, that is, at the advertisement transmitting apparatus 1 and of transmitting and displaying the advertisements to and at the receiver of each viewer/listener.

Fig. 14 is a flow chart continuing from Fig. 13 to indicate the steps of determining the priority order of transmission of advertisements to each viewer/listener at the transmitting side, that is, at the advertisement transmitting apparatus 1 and of transmitting and displaying the advertisements to and at the receiver of each viewer/listener.

Fig. 15 is a flow chart continuing from Fig. 14 to indicate the steps of determining the priority order of transmission of advertisements to each viewer/listener at the transmitting side, that is, at the advertisement transmitting apparatus 1 and of transmitting and displaying the advertisements to and at the receiver of each viewer/listener.

Fig. 16 is a flow chart showing steps of processing and controlling history data at the transmitting side, that is, at the advertisement transmitting apparatus 1.

Fig. 17 is a flow chart showing steps of generating statistical data based on the history data at the transmitting side, that is, at the advertisement transmitting apparatus 1.

Fig. 18, which corresponds to Fig. 7, is a flow chart showing steps of preparing data concerning advertisements at the transmitting side, which will be explained in item C'.

DETAILED DESCRIPTION OF THE PREFERRED EMBODIMENTS

Embodiments of the present invention will be hereinafter described.

First, a basic concept of the present invention will be described. In the present invention, advertisements are respectively selected in advance from advertisements stored at the transmitting side for respective viewers/listeners (a receiver of each viewer/listener) registered as subscribers at the transmitting side, and are assigned to the viewers/listeners respectively; and the assigned advertisements are respectively transmitted to the respective receivers of the viewers/listeners for the purpose of display, whereby the effect of advertisements can be efficiently improved. Also, according to the present invention, advertisements assigned to the respective registered viewers/listeners are transmitted, in accordance with the priority order based on elements determined by sponsors of the advertisements, to the respective receivers of the viewers/listeners for the purpose of display, whereby the effect of advertisements can be efficiently improved.

The elements in determining the priority order of display of an advertisement assigned to each viewer/listener, that is, the priority order of transmission of the advertisements stored at a transmitting side from the transmitting side to a receiver of a viewer/listener are, for example, (1) a viewing/listening period (display period) of each advertisement, (2) the ordered number of times of reproduction of each advertisement, that is, the total number of times of reproduction (the total number of times of display), that is, the total number of times of transmission to the receivers, (3) a degree of coincidence between an audience group that each advertisement aims at and an audience group to which a viewer/listener of each receiver belongs, (4) preferred reproduction time (preferred display time), that is, preferred time for transmission to a receiver, which is designated by a sponsor, (5) a predetermined order of reproduction at a receiver (predetermined display order) to be assigned to each advertisement, that is, a predetermined order of transmission to a receiver, (6) the required number of times of display of each advertisement on each receiver, to which the advertisement is assigned, in order to attain the total number of times of display of the advertisement, that is, the required number of times of transmission of each advertisement to each receiver, to which the advertisement is assigned, in order to attain the total number of times of transmission of the advertisement, and (7) a category to which each advertisement belongs, that is, a degree of preference of a viewer/listener on the receiver side with respect to the attribute of each advertisement. Each of these elements is converted to a value representing a weight, and a high priority order of display is given to an advertisement with a large sum of weight values. Another element in determining the priority order of advertisements is (8) a cut-in (interruption) instruction (advertisement designation command) for instructing the transmitting side to transmit a specific advertisement to a receiver in response to an interruption instruction and display the advertisement.

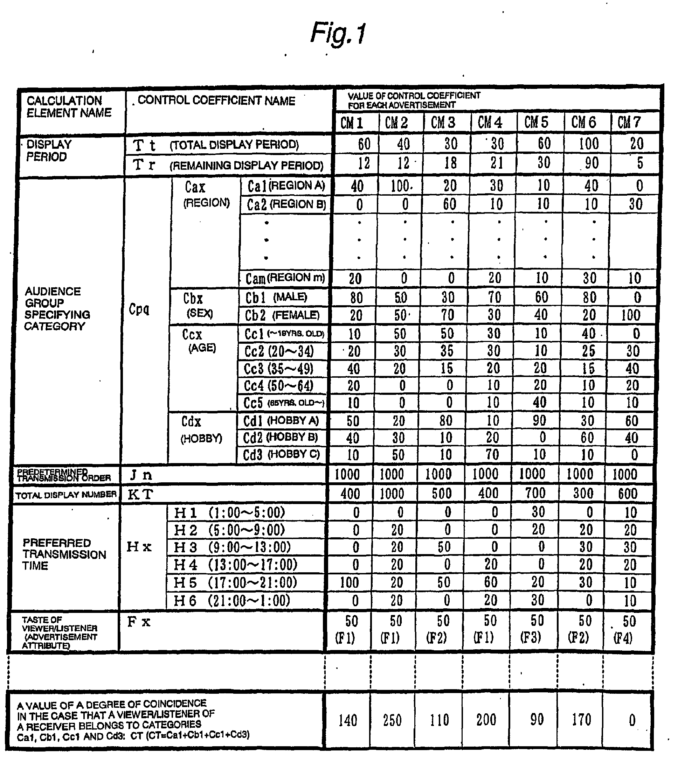

Fig. 1 is a table indicating a concept of a method for determining the priority order of transmission of advertisements, that is, a method for determining the priority order of display of advertisements, when advertisements are transmitted (delivered) from the transmitting side to a receiver for display, and a method for selecting advertisements appropriate for each viewer/listener, wherein basic data used for the priority order determination method and advertisement selection method is shown.

The data indicated in Fig. 1 concerns advertisements stored at the transmitting side. In this example, pieces of data concerning seven advertisements, CM1, CM2, CM3, CM4, CM5, CM6 and CM 7 are stored at the transmitting side.

The upper part of the table in Fig. 1 shows the names of calculation elements in determining the priority order of transmission of the advertisements CM1, CM2, CM3, CM4, CM5, CM6 and CM7 (priority order of transmission of the advertisements from the transmitting side to receivers), names of control coefficients with respect to the calculation elements, values of the control coefficients to be applied to the respective advertisements, and control variables to be applied to the control coefficients. The lower part of the table in Fig. 1 is related to the upper part of the table, and indicates a coincidence degree value indicative of a degree of coincidence between a viewer/listener and each advertisement.

The calculation elements include a display period, audience group specifying category, predetermined transmission order, total display number (which corresponds to the total number of times of transmission), preferred transmission time, taste of viewer/listener, and advertisement attribute.

The display period in the calculation elements is an element relating to the viewing/listening period of the above item (1). The display period element in Fig. 1 is represented by control coefficient Tt indicating a total display period of each advertisement (a period from the day when an advertisement was registered till the last day when the advertisement will be displayed at a receiver) and control coefficient Tr indicating a remaining display period of each advertisement. The control coefficient Tr varies with time. In this example, the total display period Tt and the remaining display period Tr are expressed in days, and as a day passes, the value of the control coefficient Tr decreases by 1. For example, the total display period of the CM1 is 60 days and its remaining display period is 12 days.

The audience group specifying category in the calculation elements is an element which is the basis for calculating the degree of coincidence in above item (3), and also functions as an element in selecting an advertisement(s) appropriate for each viewer/listener. The audience group specifying category is data that is inputted when a sponsor ordered the transmitting side to transmit an advertisement, in order to specify a target audience group of the advertisement. Information for specifying an audience group is classified into a plurality of items such as area, sex, age and the like, and each item is further classified into a plurality of classifications (categories). For example, when an item, that is, a main classification, is "sex," it is further classified into two categories, "male" and "female." With a view to specifying a target audience group of an advertisement, a sponsor assigns a value representing a weight to each category of the audience group specifying category. A weighted value is denoted by control coefficient Cpq, and the more significant a category, the greater a value to be assigned to the category. A value assigned by a sponsor is a fixed value and does not change. The weight values are reflected only on categories to which each viewer/listener belongs.

The predetermined transmission order in the calculation elements is an element corresponding to the predetermined transmission order in above item (5). The predetermined transmission order element is a weight value calculated based on a predetermined order of transmission, from a transmitting side to a receiver, of each advertisement assigned to each viewer/listener (receiver), that is, a weight value calculated based on a predetermined order of display at the receiver. The predetermined transmission order element is denoted by control coefficient Jn. In Fig. 1, a minimum value (1000 in this example) is assigned as an initial value to each advertisement. When an advertisement is assigned to each viewer/listener, the value of the control coefficient Jn is the lowest, and is changed, for each viewer/listener, according to the state of transmission of the advertisement to a receiver of the viewer/listener. The higher the predetermined transmission order, the greater a value of the control coefficient Jn.

The total display number in the calculation elements is an element corresponding to the total number of reproductions (total number of times of display), that is, the total number of times of transmission, of the above item (2); and is a value which is the basis for calculating the required number of displays of each advertisement for each receiver, to which the advertisement is assigned, in order to attain the total number of transmissions of the advertisement, that is, the required number of transmissions of each advertisement to each receiver, to which the advertisement is assigned, in order to attain the total number of transmissions of the advertisement, in above item (6). The total number of displays is denoted by control coefficient KT. When the remaining number of displays of an advertisement, that is, the remaining number of transmissions of an advertisement becomes zero, the advertisement is deleted and will not be displayed.

The value of a degree of coincidence (CT) indicates a degree of coincidence between an audience group targeted by an advertisement and an audience group to which a viewer/listener belongs. Each viewer/listener selects a category indicating an audience group to which the viewer/listener belongs, from the audience group specifying category data, and registers the selected category as personal data at the transmitting side. The total of control coefficients Cpq assigned by each sponsor to the categories which are indicated in the personal data becomes a value indicating the degree of coincidence of the above item (3). The lower part of the table in Fig. 1 shows coincidence values in the case that a viewer/listener registered at the transmitting side belongs to the categories Ca1, Cb1, Cc1 and Cd3 of the audience group specifying category. The higher the degree of coincidence, the greater the control coefficient CT.

Also, the degree of coincidence is used in selection of advertisements which are assigned to each viewer/listener.

The preferred transmission time of the calculation elements is an element corresponding to the preferred transmission time of the above item (4). The value of the preferred transmission time element, that is, a preferred transmission time value (Hx) is an element for the purpose of preferentially transmitting an advertisement and displaying the advertisement during a time slot designated by a sponsor, and the numerical value thereof to be reflected varies according to a time slot. If the present time and the designated time slot coincide with each other, the value for the designated time slot is made valid.

The taste of a viewer/listener of the calculation elements is an element corresponding to the preference of the viewer/listener of above item (7). An advertisement attribute (F1-F4 in the example shown in Fig. 1) indicates which category an advertisement belongs to. The advertisement attributes are classified into categories such as cars, foods, electric appliances, etc. In the example shown in Fig. 1, a reference value (50 in this example) is assigned to each advertisement as an initial value of audience tastes (Fx). After advertisements are assigned to a viewer/listener, this value increases or decreases for each category by a fixed numerical value, according to a vote of "interested-in" or "not-interested-in" (like/dislike) by the viewer/listener. For example, among the advertisements assigned to one viewer/listener, if an advertisement preferred by the viewer/listener, i.e., an advertisement that the viewer/listener is interested in, is an advertisement for a car, all the values Fx of advertisements belonging to the "car" category among the advertisements assigned to the viewer/listener are increased by a fixed value and, consequently, the priority of these advertisements becomes higher than advertisements belonging to other categories. In this case, advertisements belonging to the category of cars tend to be more preferentially transmitted. On the contrary, if the advertisement is not preferred by the viewer/listener, that is, if the viewer/listener is not interested in the advertisement, the priorities of these advertisements become lower and the advertisements tend to be transmitted less.

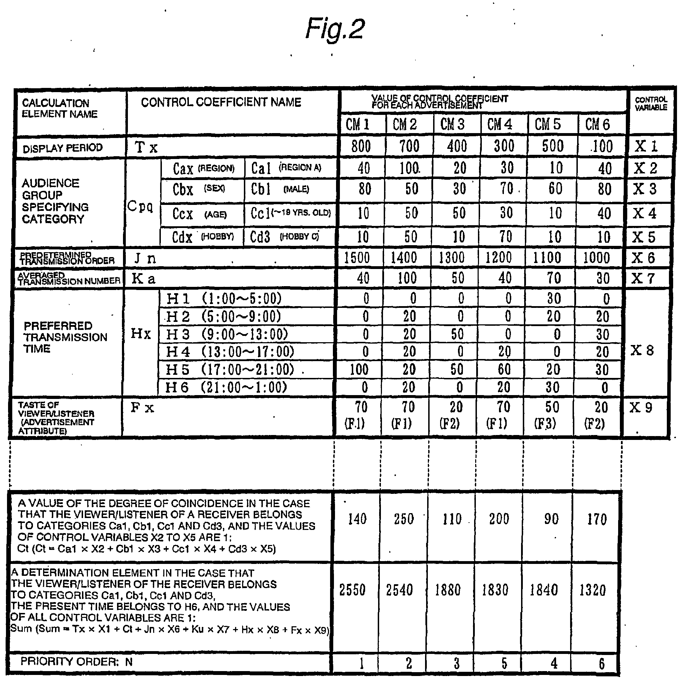

Fig. 2 is a table indicating a concept of a method of the present invention for determining a priority of transmission of advertisements to a single viewer/listener registered at the transmitting side.

It is assumed that the viewer/listener belongs to Ca1, Cb1, Cc1 and Cd3 of the audience group specifying categories, as is the same as the example indicated in the lower part of the table of Fig. 1. At the transmitting side, coincidence value CT (see the lower part of the table of Fig. 1) for the viewer/listener is calculated, and only the advertisement(s) having coincidence value CT larger than 0 (CM1 to CM6 in Fig. 1) is (are) considered to be appropriate for the viewer/listener and is (are) assigned to the viewer/listener. On the contrary, the advertisement having coincidence value CT of 0 (CM7 in Fig. 1) is considered to be inappropriate for the viewer/listener, and thus is not assigned to the viewer/listener. As a result, the advertisement CM7 will not be displayed to the viewer/listener.

The upper part of the table of Fig. 2 shows names of calculation elements for determining the priority order of transmission, to a viewer/listener's receiver, of the advertisements CM1, CM2, CM3, CM4, CM5 and CM6 assigned to the viewer/listener, names of control coefficients corresponding to the calculation elements, values of control coefficients to be applied to the advertisements, and control variables to be applied to the control coefficients. The lower part of the table of Fig. 2, which is related to the upper part of the table of Fig. 2, shows a coincidence value Ct representing a degree of coincidence between a viewer/listener and each advertisement, a value of an advertisement priority determining element Sum for each advertisement, and a priority N of each advertisement. The table shown in Fig. 2 is that corresponding to a personal calculation sheet (which will be described later), and is created and stored at the transmitting side.

The calculation elements include a display period, audience group specifying category, predetermined transmission order, averaged transmission number, preferred transmission time, and taste of viewer/listener (advertisement attributes).

The display period in the calculation elements corresponds to the viewing/listening period of the above item (1). The display period element is a weight value calculated based on the values of the display period element (Tt, Tr) indicated in Fig. 1, and is denoted by control coefficient Tx. The control coefficient Tx changes with time, and the shorter the remaining display period, the greater the value of the control coefficient Tx.

The audience group specifying category in the calculation elements is similar to the audience group specifying category of Fig. 1, and constitutes a base for determining a degree of coincidence of the above item (3). The audience group specifying category element in Fig. 2 is a copy of data and is formed by extracting data of categories to which a viewer/listener belongs from the audience group specifying category element (Cpq) of Fig. 1. Since the viewer/listener belongs to the categories Ca1, Cb1, Cc1 and Cd3, the data of the categories Ca1, Cb1, Cc1 and Cd3 is extracted from the data shown in Fig. 1.

The predetermined transmission order in the calculation elements constitutes an element corresponding to the predetermined transmission order of the above item (5). The predetermined transmission order element is a weigh value calculated, for each viewer/listener, based on the predetermined order of transmission of each advertisement assigned to the viewer/listener to the viewer/listener's receiver, that is, the predetermined order of display at the receiver, and is denoted by the control coefficient Jn. The control coefficient Jn is changed every time an advertisement is transmitted from the transmitting side to the receiver. The higher the predetermined transmission order, the greater a value of the control coefficient Jn. When a new advertisement is assigned to a viewer/listener, the value (minimum value) assigned to the predetermined transmission order element in Fig. 1 is assigned to the control coefficient Jn for the advertisement, and the values of the control coefficients Jn for all the other advertisements assigned to the viewer/listener are incremented by a predetermined value.

The averaged transmission number in the calculation elements constitutes an element corresponding to the number of transmissions of the above item (6). The averaged transmission number element is a weight value calculated based on the remaining number of transmissions until the number of transmissions reaches the averaged number of transmissions, and is denoted by the control coefficient Ka (Ka is a value obtained by applying a coefficient to the remaining number of times of transmission). A value of the averaged number of transmissions is obtained by first obtaining a value (minimum number of transmissions) by dividing the ordered total number of transmissions of an advertisement (total number of displays element KT in Fig. 1) by the number of receivers (viewers/listeners) to which the advertisement is assigned among all the viewers/listeners (all receivers) registered at the transmitting side, then multiplying the obtained value (minimum number of transmissions) by a coefficient. The value (initial value) of the averaged number of transmissions obtained for each advertisement is the same for each of all receivers (all the viewers/listeners) to which the advertisement is assigned. The remaining number of transmissions of an advertisement to a receiver (an viewer/listener) is obtained by subtracting 1 from the averaged number of transmissions every time the advertisement is transmitted to the receiver. The control coefficient Ka becomes 0 when the remaining number of transmissions becomes 0. If the control coefficient Ka for an advertisement assigned to a viewer/listener reaches 0, the advertisement will not be transmitted to the receiver of the viewer/listener, and will not be displayed.

The value of a degree of coincidence (Ct), like the coincidence degree value (CT) in Fig. 1, represents a degree of coincidence between an audience group targeted by an advertisement and an audience group to which a viewer/listener belongs. However, the control coefficient Ct in Fig. 2 varies according to a control variable application instruction. For example, in a case that a control coefficient(s) Cpq (Cax, Cbx, Ccx, Cdx) is multiplied by the control variable Xn (X2-X5), if the control variable(s) Xn is other than 1, the value of the control coefficient(s) Cpq changes and, thus, the value of the coincidence degree Ct also changes. The higher a coincidence degree, the greater the control coefficient Ct.

The preferred transmission time in the calculation elements constitutes an element corresponding to the preferred transmission time of above item (4), and is a copy of data of the preferred transmission time element in Fig. 1. A value of the preferred transmission time element, that is, preferred transmission time value (Hx), is an element which is set in order to preferentially transmit an advertisement to a receiver and display the advertisement during a time slot designated by a sponsor, and a numerical value to be reflected on the element varies according to a time slot.

The taste of viewer/listener in the calculation elements, like the audience taste indicated in Fig. 1, constitutes an element corresponding to the viewer/listener's taste of above item (7), and corresponds to the taste of viewer/listener in Fig. 1. The advertisement attribute (Fx) indicates which category an advertisement belongs to. The advertisement attributes are classified into categories such as, for example, cars, foods, electric appliances, etc., and the attributes are respectively weighted. The initial value of Fx is a reference value (50 in this example) which is assigned to the taste of viewer/listener in Fig. 1. For each category, the value of Fx increases or decreases by a predetermined value, according to a vote of "interested-in" or "not-interested-in" regarding the category.

The control variable Xn (X1-X9 in Fig. 2) applied by the control variable application instruction determines importance of each control coefficient (Tx, Cpq, Jn, Ka, Hx, Fx); and a control coefficient(s) which should be prioritized is determined at the transmitting side, based on history information (history regarding status of displaying of an advertisement, etc.) fed back from receivers, information about a history accumulated at the transmitting side, business information, etc. By multiplying all the control coefficients Tx, Cpq, Jn, Ka, Hx and Fx by respective Xn's (X1-X9) prepared for the respective control coefficients, a control coefficient(s) to which importance should be attached can be determined. The application of the control coefficients is conducted before all the control coefficients are summed, that is, before a determination element (Sum) which will be described below is calculated. For example, when a deadline for display approaches, values representing the number of times and (or) the period, that is, the control coefficients Tx and (or) Ka are multiplied by large values, whereas the other control coefficients are multiplied by smaller values, thereby increasing priority of the number of times and the period.

The determination element (Sum) indicates the sum of the values of the control coefficients Tx, Jn, Ka, Hx and Fx to which the control variables Xn are applied and the value of Ct (that is, a sum of the values of Tx', Jn', Ka', Hx', Fx', Cax', Cbx', Ccx' and Cdx'). This value of the sum is a value comprehensively indicating the weight of each advertisement, and a final priority order is determined based on this value. The control coefficient Tx is a variable that varies depending on time, the control coefficients Ka and Jn are variables that vary depending on transmission of an advertisement, the control coefficient Hx is a variable that varies depending on time of the day, the control coefficient Fx is a variable that varies according to the voting of a viewer/listener. Moreover, since the control variable (Xn) is applied to each of all the control coefficients, values of the control coefficients vary depending on values of the control variables. Therefore, the value of the sum of the control coefficients (Sum) also varies depending on time, transmission of an advertisement, time of day, the vote of a viewer/listener, and the control variables.

A priority order (N) indicates the ranks of higher to lower places assigned to advertisements in the order of a larger value of the determination element (Sum), and is a final priority order. In accordance with the priority order, the transmitting side transmits a stored advertisement(s) to the receiver, whereas the receiver displays the received advertisements in the order that they are received.

Next, an embodiment of the present invention will be described with reference to the drawings.

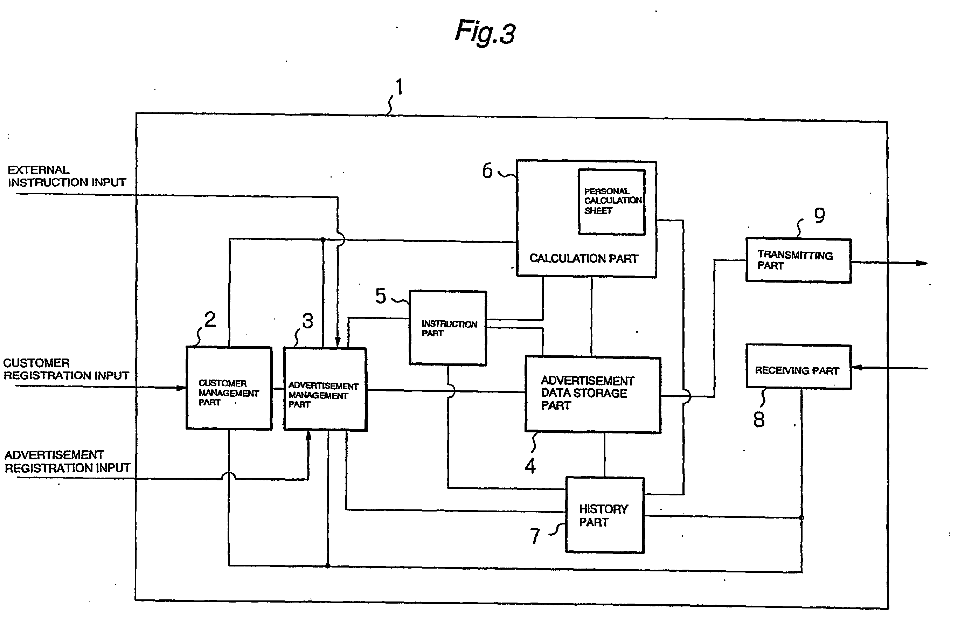

Fig. 3 illustrates a configuration of an apparatus of the present invention for controlling transmission (transmitting) of an advertisement, which is installed at the transmitting side. Advertisement transmitting apparatus 1 comprises customer management part 2, advertisement management part 3, advertisement data storage part 4, instruction part 5, calculation part 6, history part 7, receiving part 8, and transmitting part 9.

The customer management part 2 receives personal data (data necessary for registration of a subscriber) from a viewer/listener, provides the viewer/listener with personal ID, and stores the personal ID in association with the personal data. Personal data of each viewer/listener is used for selecting an advertisement suitable for each viewer/listener.

The advertisement management part 3 receives advertisement data representing an advertisement per se (image data, sound data, character data, etc.) and data to be added to the advertisement (additional data: data of the display period, audience group specifying category, total number of displays, preferred transmission time slot, and advertisement attribute), provides the advertisement with an advertisement ID, associates the advertisement ID with the additional data, stores the advertisement ID and the additional data in the storage part (not indicated in the drawings) of the advertisement management part 3, and sends the advertisement data to the advertisement data storage part 4. The additional data of each advertisement stored in the advertisement management part 3 is used for selecting an advertisement suitable for each viewer/listener, calculating the priority order of advertisement transmission, etc. The advertisement management part 3 receives history information from the history part 7 and determines, based on the history information and the information accumulated in the advertisement management part 3, a control variable used for calculation of the priority order of advertisements. The advertisement management part 3 also accepts an instruction from outside.

The advertisement data storage part 4 stores advertisement IDs and advertisement data transmitted from the advertisement management part 3. Also, in response to a signal (including advertisement ID and personal ID) from the calculation part 6 instructing transmission of an advertisement, the advertisement data storage part 4 retrieves the designated advertisement data and outputs the data to the transmitting part 9.

The instruction part 5, based on the data input from the advertisement management part 3, generates an instruction to the calculation part 6 to change a value of a control coefficient, an instruction to the advertisement data storage part 4, calculation part 6 and history part 7 to delete data, an instruction to the calculation part 6 to designate an advertisement that should be transmitted with first priority, etc.

The calculation part 6 generates a personal calculation sheet for each of the viewers/listeners individually. The personal calculation sheet contains the data indicated in Fig. 2. More specifically, a personal calculation sheet contains data indicating advertisement IDs of advertisements (IDs representing CM1-CM6) selected for and assigned to a viewer/listener, values of control coefficients (Tx, Cpq, Jn, Ka, Hx, Fx) for priority calculation based on additional data of each advertisement, values of control variables (Xn) to be applied to each of the control coefficients, a value (Sum) representing a weight of each advertisement which is calculated based on the control coefficients, and a value (N) representing a priority order. Upon receiving an advertisement display request signal from the receiver, the calculation part 6 sends to the advertisement data storage part 4 a signal for outputting pieces of advertisement data to the receiver in the priority order indicated in the personal calculation sheet corresponding to the receiver.

The history part 7 receives, from the receiver of the viewer/listener, data concerning the advertisements displayed at the receiver and generates history data concerning each advertisement based on the received data. The history part 7 also receives, from the advertisement data storage part 4, data concerning the transmitted advertisements and generates another history data concerning each advertisement based on the received data.

The receiving part 8 receives, from the receiver, personal data, advertisement display request signal, data concerning display of advertisements, etc., and sends the respective pieces of data to appropriate processing means (customer management part 2, calculation part 6 and history part 7).

The transmitting part 9 receives, from the advertisement data storage part 4, an advertisement ID(s), advertisement data, and data indicating a receiver to which the advertisement data will be transmitted (personal ID of the viewer/listener of the receiver), and sends these pieces of data to the receiver.

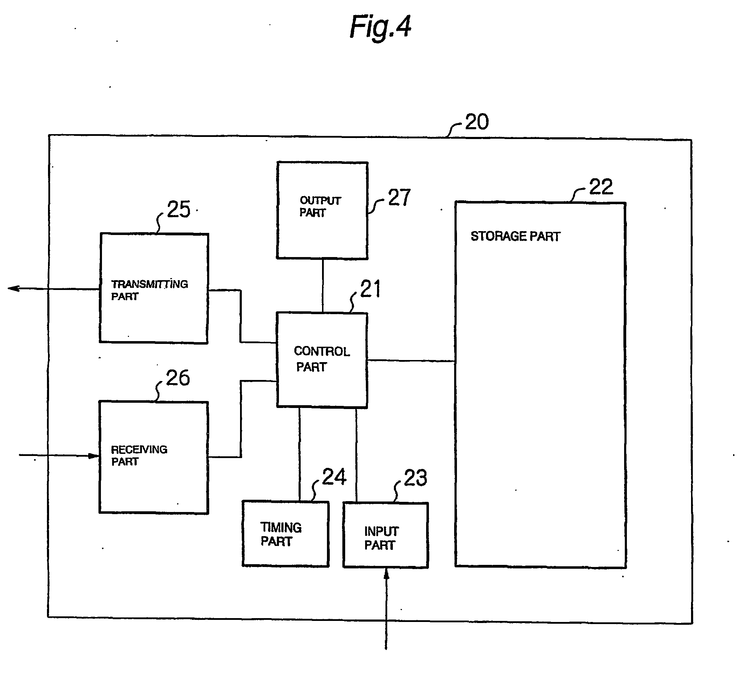

Fig. 4 illustrates a configuration of an apparatus, that is, a receiver, of the present invention on the receiving side, to which advertisements are transmitted from the advertisement transmitting apparatus.

The receiver 20 is provided with control part 21, to which storage part 22, input part 23, timing part 24, transmission part 25, receiving part 26, and output part 27 are connected.

The control part 21 performs processing for overall control of the receiver 20, control of display of an advertisement, control of management of history data concerning display status of each advertisement, and the like.

The receiver 20 receives broadcast data, advertisement data, and data added to the advertisement data on the receiving part 25. The broadcast data refers to program data transmitted via wired or wireless manner, such as via CS, BS, terrestrial TV, cable, etc., to a receiver of a viewer/listener registered as a subscriber; contents supplied via a communication network, such as the Internet, etc., to a user registered as a subscriber; and so on.

The control part 21 processes the data received by the receiving part 26 and outputs the processed data from the output part 27. The output part 27 is a device(s) for outputting information in the form of image, sound, characters, etc., and comprises an image display device, speech output device, etc. The control part 22 temporarily stores the data concerning advertisements reproduced at the output part 27 in the storage part 22, and reads out the data at a predetermined timing to transmit the same from the transmission part 25 to the transmitting side.

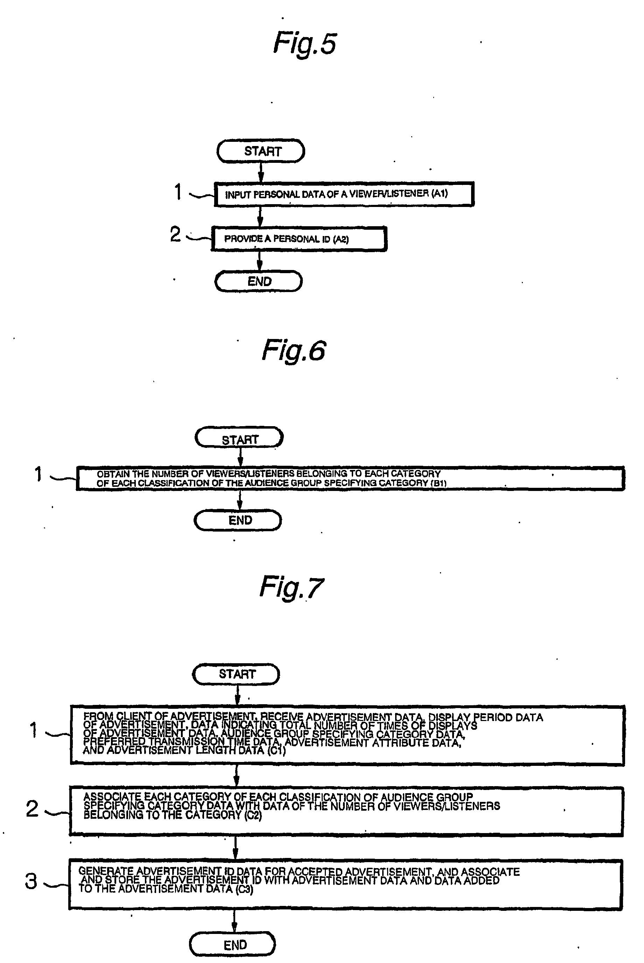

Next, operations of a first embodiment of the advertisement transmitting apparatus will now be described with reference to Figs. 5 to 17. In this embodiment, based on data indicating categories which are selected by a viewer/listener from each category of the audience group specifying category data (see the audience group specifying category in Fig. 1) and which a viewer/listener belongs to, and a value representing a weight assigned to each category of the audience group specifying category data by a sponsor in order to specify an audience group(s) targeted by an advertisement, it is determined whether to assign the advertisement to the viewer/listener. Further, in the present embodiment, the display period (control coefficient Tx), audience group specifying category (control coefficient Cpq), predetermined transmission order (control coefficient Jn), averaged number of transmissions (control coefficient Ka), preferred transmission time (control coefficient Hx), and taste of viewer/listener (advertisement attribute) (Fx), which are shown in Fig. 2, are used as calculation elements in calculating the priority order of transmission of advertisements.

Fig. 5 shows viewer/listener registration steps at the transmitting side, that is, at the advertisement transmitting apparatus 1.

A. Audience registration steps at the advertisement transmitting apparatus 1:

A1. In step 1, a viewer/listener of a receiver 20 fills in questionnaire sheet, mark sheet, or the like which is prepared at the transmitting side and provided to the viewer/listener with personal data about the viewer/listener, that is, address, name, etc., and data characterizing an audience group to which the viewer/listener belongs, and sends the completed sheet or the like to the transmitting side. The data characterizing an audience group, to which an viewer/listener belongs, contained in personal data is selected from, for example, a plurality of categories indicated in the audience group specifying category data (see the audience group specifying category in Fig. 1) listed in the questionnaire sheet, mark sheet, or the like prepared at the transmitting side.

It should be understood that a method of sending personal data to the transmitting side may be optional. For example, a method of writing personal data on paper and transmitting the same by facsimile or mail, a method of recording personal data on a recording medium such as a magnetic disk, optical disk, etc., and sending the medium by mail, etc., a method of orally transmitting personal data by phone, etc., may be employed.

Upon receiving personal data from a viewer/listener, the transmitting side inputs the personal data from the client registration input part to the customer management part 2.

In step 2, the customer management part 2 of the advertisement transmitting apparatus 1 creates a personal ID for the viewer/listener. The customer management part 2 stores the thus created personal ID in association with the personal data. Since the personal ID needs to be stored in the receiver 20 of the viewer/listener, it is sent to the viewer/listener by adequate means (for example, a sheet on which the personal ID is written may be mailed to the viewer/listener) and stored in the storage part 22 from the input part 23 of the receiver 20 by the viewer/listener.

Alternatively, if the receiver 20 is provided with an input means and functions to receive, install and execute software, it may be configured in such a manner that software for inputting personal data is transmitted from the transmitting part 9 of the advertisement transmitting apparatus 1 to the receiving part 26 of the receiver 20 and stored in the storage part 22; the control part 21 executes the software so that a viewer/listener inputs his/her personal data from the input part 23 of the receiver 20; the thus input personal data is transmitted from the transmission part 25 of the receiver 20 to the receiving part 8 of the advertisement transmitting apparatus 1 to be stored directly in the customer management part 2. Further, the apparatus may be configured such that the personal ID created at the customer management part 2 is transmitted from the advertisement transmitting apparatus 1 directly to the receiver 20 of the viewer/listener and is automatically stored in the storage part 22.

The audience groups specifying category data is classified into a plurality of main items, and each item is sub-classified into a plurality of categories. This subclassification is hereinafter referred to as a category. Referring to the example of Fig. 1, the audience group specifying category data is classified into four main classifications (items) of region (Cax), sex (Cbx), age (Ccx) and hobby (Cdx). Moreover, the classification Cax is sub-classified into m categories of region A (Ca1) to region m (Cam); the classification Cbx is sub-classified into two categories of male (Cb1) and female (Cb2); the classification Ccx is sub-classified into five categories of 19 years old or under (Cc1) to 65 years old or over (Cc5); and the classification Cdx is sub-classified into three categories of hobby A (Cd1) to hobby C (Cd3). In this embodiment, for example, if the viewer/listener of the receiver 20 lives in the region A, is a male, is 19 years old or under, and has the hobby C, the viewer/listener selects the categories Ca1, Cb1, Cc1 and Cd3. The data indicating the selected categories Ca1, Cb1, Cc1 and Cd3 is stored in the storage part of the customer management part 2.

The personal data may further include data indicating a channel number (name of a broadcasting company) of pay TV service that a viewer/listener subscribes to and other data (for example, data indicating a telephone number, a credit card number, the name of a place of employment, etc.).

In addition, for example, in the case that multiple viewers/listeners belonging to different groups of age, sex, hobby, etc., (for example, a family) use a single receiver or in the case that a single viewer/listener has a plurality of hobbies, it is necessary to designate a plurality of categories in each class in order to reflect all the characteristics. Therefore, the apparatus may be configured such that the viewer/listener of the receiver 20 can select a plurality of categories in one class, or that multiple viewers/listeners can be separately registered for a single receiver. When multiple viewers/listeners are separately registered for a single receiver, for example, selection buttons for identifying respective viewers/listeners may be provided on the receiver, so that each viewer/listener presses a selection button for identifying himself/herself to send a signal identifying himself/herself to the advertisement transmitting apparatus 1 when he/she uses the receiver. Alternatively, the apparatus may be configured such that the receiver may be provided with an identification device such as an ID card reading device, etc., in order to identify a viewer/listener, so that the viewer/listener's ID card is read when the viewer/listener uses the receiver.

The customer management part 2 of the advertisement transmitting apparatus 1 stores a computer program for performing the above steps.

Fig. 6 shows steps for analyzing personal data of a viewer/listener at the transmitting side, that is, at the advertisement transmitting apparatus 1.

B. Audience's personal data analyzing step at the transmitting side:

B1. In step 1, based on all the personal data stored in the customer management part 2, the customer management part 2 of the advertisement transmitting apparatus 1 obtains the number of the viewers/listeners (Sa1 to Sd3) belonging to each category (Ca1 to Cd3) of each classification of the audience group specifying category, with respect to all registered viewers/listeners. Sa1 denotes the number of viewers/listeners belonging to the category Ca1, Sa2 denoting the number of viewers/listeners belonging to the category Ca2, and so on. In the description below, among reference symbols representing categories and reference symbols representing the numbers of viewers/listeners, reference symbols having two characters on the right side in common are related.

The number of viewers/listeners as a target of an advertisement, that is, the size of the market can be determined from the number of viewers/listeners belonging to each category. The size of a market can be used as a standard for determination of an estimate of the number of times or period of displaying (transmitting) an advertisement. In addition, determination of a market size enables estimation of the effect of an advertisement, that is, the number of people who view the advertisement, and such data can be utilized at the time of selling an advertisement frame. Alternatively, the number of receivers may be counted instead of the number of viewers/listeners belonging to each category.

Further, for each channel (Ch1 to Chn) of broadcasting service, the number of viewers/listeners belonging to each category among the viewers/listeners who watch the channel is checked, or for each site of the Internet, the number of users belonging to each category among the users who access the site is checked. More specifically, it is checked according to a channel or site to see how many viewers/listeners belong to which category of which classification. For example, more detailed data can be prepared by obtaining data indicating, for example, how many viewers/listeners among the viewers/listeners of the channel 1 belong to the categories Ca1, Ca2, Ca3, ..., Cd2 and Cd3 of the classification Cax respectively; how many viewers/listeners among the viewers/listeners of channel 2 belong to the categories Ca1 ..., of the classification Cax respectively; how many viewers/listeners among the viewers/listeners of channel 3 belong to the categories Ca1, ..., of the classification Cax respectively; and so on.

In the case of broadcasting for example, such data can be estimated by obtaining the number of the viewers/listeners belonging to each category among all the viewers/listeners, obtaining a rating of each channel, and multiplying them together. Alternatively, even further accurate results can be obtained by causing each receiver to feed back information about a channel viewed by the viewer/listener of the receiver or information about an address accessed by the viewer/listener of the receiver.

The data, which is stored in the customer management part 2 and indicates the number of the viewers/listeners (receivers) belonging to each category, is used in calculating the upper limit number of transmissions (control coefficient Ku) in the second embodiment to be described later.

The customer management part 2 of the advertisement transmitting apparatus 1 stores a computer program for performing the above steps.

Fig. 7 indicates steps for preparing data relating to advertisements at the transmitting side, that is, at the advertisement transmitting apparatus 1.

C. Steps for preparing data relating to advertisements at the transmitting side:

C1. In step 1, the advertisement transmitting apparatus 1 receives from a client of an advertisement (sponsor of an advertisement), advertisement data of the advertisement, display period data of the advertisement, data indicating the total number of displays of the advertisement (corresponding to data indicating the total number of transmissions of the advertisement), data characterizing an audience group which is targeted by the advertisement (audience group specifying category data), data indicating a time slot during which the advertisement should be preferentially transmitted (preferred transmission time data), data indicating a field of the advertisement (advertisement attribute data), and data indicating the duration of the advertisement (advertisement duration data), inputs the above data from the advertisement registration input part to the advertisement management part 3, and stores the data in the advertisement management part 3.

The advertisement data represents image, sound, characters, etc., of the advertisement. The display period data represents the period of display of the advertisement, for example, the first and final days of display at the receiver, the number of days of a display period, etc. The data indicating the total number of displays of the advertisement indicates the ordered number of times of display, and corresponds to data indicating the total number of transmissions from the transmitting side to the receiver. The audience group specifying category data (the audience group specifying category in Fig. 1) specifies an audience group targeted by the advertisement. The preferred transmission time data indicates a time slot (time of day) during which the advertisement should be preferentially transmitted. The advertisement attribute data indicates a field (advertisement attribute) to which a product advertised by the advertisement belongs, and the advertisement attributes are classified into, for example, cars, insurance, foods and the like.

In order to specify an audience group as a target group of the advertisement, a sponsor assigns in advance a value representing a weight to each category of each classification of the audience group specifying category data.

For example, the sponsor selects a category (categories) indicating an audience group(s) as a target group(s) of an advertisement from a plurality of categories indicated in the audience group specifying category data which is described on a sheet such as a questionnaire, mark sheet, etc., that is prepared at the transmitting side and supplied to the sponsor; and marks the selected category on the sheet. Subsequently, the sponsor determines a value indicating how important a viewer/listener belonging to the selected category is (a value representing a degree of importance), and enters the value. Next, the data of the category (categories) indicating the audience group(s) as a target group of the advertisement and the data of the value(s) assigned to the category (categories) indicating the degree(s) of importance is associated with advertisement data, and the data is inputted from the advertisement registration input part of the advertisement transmitting apparatus 1 to the advertisement management part 3 and stored in the advertisement management part 3.

Alternatively, the advertisement transmitting apparatus 1 may be designed in such a manner that it is provided with an input device such as a keyboard and a display device and loaded with software for selecting a category (categories) from the audience group specifying category data and assigning a value(s) indicating a degree(s) of importance, so that the audience group specifying category data is displayed on the display device of the advertisement transmitting apparatus 1, the category (categories) is selected, and the value(s) is determined and inputted by using the input device.

In the example of Fig. 1, the audience group specifying category data is classified into four items (classifications) of Cax, Cbx, Ccx and Cdx, and each classification is sub-classified into a plurality of categories (Ca1 to Cam, Cb1 to Cb2, Cc1 to Cc5, Cd1 to Cd3).

A sponsor assigns a large value to a category which the sponsor considers important. Further, the sponsor distributes numerical values such that the total of values to be assigned to the categories in one classification amounts to 100. For example, in the classification Cbx (sex) of the advertisement CM1, 80 is assigned to the category Cb1 (male) and 20 is assigned to the category Cb2 (female), and the total of these values is 100. The proportion of the values in this example indicates that although CM1 aims at both male and female, male is regarded to be more important than female at a ratio of 80 to 20. Also, for example, in the class Cdx of CM5, 90 is assigned to the category Cd1, 0 is assigned to the category Cd2, and 10 is assigned to the category Cd3. This indicates that an audience group belonging to the category Cd1, an audience group belonging to the category Cd2 and an audience group belonging to the category Cd3 are attached importance at the ratio of 90 to 0 to 10. The value 0 assigned to an audience group means that the audience group is not at all considered as a target of the advertisement.

Further, in order to specify a time slot during which a sponsor desires to display his/her advertisement, i.e., a time slot during which the sponsor desires to transmit his/her advertisement to a receiver, the sponsor assigns a value representing a weight to each time slot of the preferred transmission time data.

For example, the sponsor selects a time slot (one or a plurality of time slots) during which the sponsor wishes to preferentially transmit the advertisement, from a plurality of time slots indicated in the preferred transmission time data printed on the above sheet such as a questionnaire, mark sheet, etc.; and determines and enters a value(s) indicating how important the sponsor considers the time slot(s) (a value indicating a degree of importance). Subsequently, the preferred transmission time data, which indicates the selected time slot(s) and the value(s) indicating a degree(s) of importance assigned to the time slot(s), is associated with the advertisement data, and the data is inputted to the advertisement management part 3 from the advertisement registration input part of the advertisement transmitting apparatus 1 and stored in the advertisement management part 3.

Alternatively, the advertisement transmitting apparatus 1 may be designed in such a manner that it is provided with an input device such as a keyboard and a display device and loaded with software for selecting a time slot(s) from the preferred transmission time data and assigning a value indicating a degree of importance, so that the preferred transmission time data is displayed on the display device and a time slot(s) is selected and the value(s) is determined and inputted by using the input device.

In the example of Fig. 1, the preferred transmission time data is classified into six time slots of H1 (1 o'clock to 5 o'clock), H2 (5 o'clock to 9 o'clock), H3 (9 o'clock to 13 o'clock), H4 (13 o'clock to 17 o'clock), H5 (17 o'clock to 21 o'clock) and H6 (21 o'clock to 1 o'clock). The sponsor assigns a larger value to a time slot during which the sponsor wishes to transmit his/her advertisement, that is, a time slot which the sponsor regards as important. Further, the sponsor distributes numerical values such that the total of values assigned to all the time slots amounts to 100. For example, in the case of the advertisement CM4, 0 is assigned to the time slots H1, H2 and H3, 20 is assigned to H4, 60 is assigned to H5, 20 is assigned to H6, and the total of these values is 100. This indicates that the sponsor attaches importance to the time slots of H1, H2, H3, H4, H5 and H6 at the ratio of 0 to 0 to 0 to 20 to 60 to 20, and wishes that the advertisement is transmitted preferentially in the time slots of H4, H5 and H6 (especially in the time slot of H5). Further, the value of 0 means that the sponsor does not wish the advertisement to be transmitted in the time slot.

Moreover, the sponsor designates an advertisement attribute in order to specify a field (attribute) to which the goods to be advertised by the advertisement belongs. The advertisement attribute includes, for example, car, food, electric appliance, and so on. From the advertisement attribute data printed on a sheet such as a questionnaire, mark sheet, etc., the sponsor selects an advertisement attribute that coincides with the attribute of his/her advertisement. The advertisement attribute data indicating the selected attribute is associated with advertisement data and inputted to the advertisement management part 1 from the advertisement registration input part of the advertisement transmitting apparatus 1 and stored in the advertisement management part 1. Also, the advertisement transmitting apparatus 1 may be designed in such a manner that it is provided with an input device such as a keyboard, etc., and loaded with software for selecting an advertisement attribute, so that the advertisement attribute data is displayed at the display device and the advertisement attribute is selected and input by using the input device.

In the example of Fig. 1, an advertisement attribute is stated in parentheses "( )" in the column of the calculation element "taste of viewer/listener (advertisement attribute)." The advertisement attribute of the advertisements CM1, CM2, CM4 is F1, the advertisement attribute of CM3 and CM6 is F2, the advertisement attribute of CM 5 is F3, and the advertisement attribute of CM7 is F4. The symbols F1 to F4 shown here indicate advertisement attributes, that is, fields to which advertisements (products advertised by the advertisements) belong.

C2. In step 2, the advertisement management part 3 associates each category (Ca1 to Cd3 of Fig. 1) of each classification of the stored audience group specifying category data with data of the number of the viewers/listeners belonging to the category (Sa1 to Sd3, the data obtained in the above step B). The data of the number of the viewers/listeners for each category can be obtained based on all pieces of the personal data stored in the customer management part 2. For example, if personal data of ten viewers/listeners is stored in the customer management part 2, and seven viewers/listeners out of the ten viewers/listeners belong to the category Ca2, the viewer/listener number data Sa2 indicating seven is associated with the data of Ca2 and stored. (The data Sa1 to Sd3 are used in a step for calculating the upper limit number of transmissions, which will be described in the second embodiment of the advertisement transmitting apparatus.)

C3. In step 3, the advertisement management part 3 generates an advertisement ID for the advertisement stored in the step 1; associates the advertisement ID with the advertisement display period data (first day of display, last day of display), audience group specifying category data (Ca1-Cd3), the number of viewers/listeners data associated with each category of each classification of the audience group specifying category data (Sa1-Sd3), the total number of displays data (total number of transmissions data)(KT), preferred transmission time data (Hx), advertisement attribute data (F1-F3), and advertisement duration data; and stores the data in the advertisement management part 3. At this time, in addition to the data inputted from the advertisement registration input part, the advertisement management part 3 further associates the predetermined transmission order data (Jn) and the viewer/listener's taste data (Fx) therewith. As a value of the predetermined transmission order data (Jn), the smallest value is assigned, whereas as a value of the viewer/listener's taste data (Fx), a reference value (median value in this example) is assigned. As for the display period data, data indicating the entire display period (Tt) and data indicating the remaining display period (Tr) is also calculated and stored. In this example, the display period data, audience group specifying category data, data of the number of viewers/listeners for each category of the audience group specifying category, the total number of displays data (total number of transmissions data), preferred transmission time data, advertisement attribute data, predetermined transmission order data, viewer/listener's taste data, and advertisement duration data are collectively referred to as additional data.

The advertisement management part 3 also transfers the generated advertisement ID and advertisement data (data indicating an advertisement per se) to the advertisement data storage part 4 and stores the same therein. Still further, the advertisement management part 3 transmits the advertisement ID and initial data (data shown in Fig. 1) of the advertisement to the history part 7 for the history part 7 to prepare generation of history data of the advertisement.

The other advertisements are also subjected to the same procedure as items C1-C3, whereby the advertisement data is tied to the additional data.

The advertisement management part 3 of the advertisement transmitting apparatus 1 stores a program for carrying out the above steps.

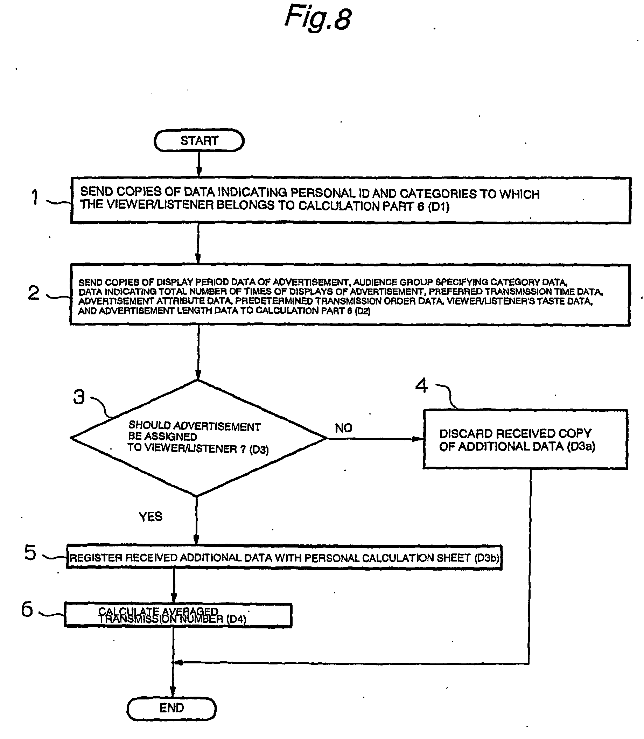

Fig. 8 describes a personal calculation sheet making steps on the transmitting side, that is, on the advertisement transmitting apparatus 1.

A personal calculation sheet is data which includes data used for determining a priority order of transmission of respective advertisements, which are assigned to one viewer/listener, to a receiver, that is, a priority order of displaying advertisements on the receiver, and data indicating a determined priority order. The personal calculation sheet is made for each of all viewers/listeners who are registered with the transmitting side.

D. Steps for making a personal calculation sheet on the transmitting side:

D1. In step 1, the customer management part 2 extracts, from personal data stored in the customer management part 2, a personal ID and data indicating categories which the viewer/listener identified by the personal ID belongs to and which is selected from the audience group specifying category data by the viewer/listener; and sends a copy of the data to the calculation part 6. The calculation part 6 makes a personal calculation sheet (refer to the table of Fig. 2) for the viewer/listener who is identified by the personal ID. It should be understood that, at this point, only a personal ID and data indicating categories which the viewer/listener belong to are recorded on the personal calculation sheet.

D2. In step 2, the advertisement managing part 3 transfer a copy of additional data of the advertisement (data added to the advertisement), which is copies of the display period data, the audience group specifying category data, the total display number data (total transmission number data), the preferred transmission time data, the advertisement attribute data, the predetermined transmission order data, the viewer/listener's taste data, and advertisement's duration data, to the calculation part 6. In the first embodiment, since data of the number of viewers/listeners for respective categories (Sa1 to Sd3) is not used for calculating the priority order of the advertisements, this data is not included in the additional data to be sent to the calculation part 6.

D3. In step 3, the calculation part 6 selects advertisements which will be assigned to the viewer/listener. The calculation part 6 compares data which is received from the customer management part 2 and indicates categories to which the viewer/listener belongs, and the audience group specifying category data (Ca1 to Cd3) which is included in the additional data of an advertisement and is received from the advertisement management part 3; and, based on the comparison result, determines whether or not the advertisement to be assigned to the viewer/listener. In this comparison, among the categories included in the audience group specifying category data, categories to which the viewer/listener belongs are extracted; and it is examined whether or not the sponsor has selected a category (categories) that is selected by the viewer/listener, that is, whether or not a numerical value(s) is assigned to the matched category (categories).

In this example, it is assumed that data indicating the categories Ca1 (region A), Cb1 (male), Cc1 (19 years old or under) and Cd3 (hobby C) is included in the personal data. The calculation part 6 examines the categories Ca1, Cb1, Cc1 and Cd3 in the audience group specifying category data (Ca1 to Cd3) in the additional data of the advertisement, and examines whether or not the sponsor selected these categories, that is, whether or not numerical values are assigned to those categories.

D3a. If the numerical value zero is assigned to all of the above four categories, it is determined that there is no coincidence; and, in step 4, the calculation part 6 discards the additional data without recording it on the personal calculation sheet which has no coincidence in the categories. Among the advertisements shown in Fig. 1, for advertisement CM7, a numerical value zero is assigned to all of the above four categories and, consequently, no coincidence exists. As such, the advertisement ID and additional data are not recorded on the personal calculation sheet. Advertisements which are not recorded on the personal calculation sheet are not displayed to the viewer/listener corresponding to the personal calculation sheet.

D3b. If a numerical value other than zero is assigned to any of the above four categories, it is determined that the audience group selected by the sponsor and the audience group to which the viewer/listener belongs coincide with each other at least partially and, in step 5, the calculation part 6 decides to assign the advertisement to the viewer/listener and records the additional data of the advertisement on the personal calculation sheet. Among the advertisements shown in Fig. 1, for advertisements CM1-CM6, a numerical value other than zero is assigned to at least one of the above four categories and, consequently, the advertisement. ID and additional data of the advertisement are recorded on the personal calculation sheet.

A criterion in the above selection for determining whether or not the additional data of the advertisement is recorded on the personal calculation sheet, that is, whether or not the advertisement is assigned to the viewer/listener, is based on whether or not the numerical value zero is assigned to all of the categories selected by the viewer/listener. However, as another method, for example, it is possible to determine whether or not an advertisement is assigned based on a total of values assigned to each category selected by the viewer/listener. For example, it is possible to define the criterion that only an advertisement having the total value larger than a predetermined value is assigned to the viewer/listener.

In the personal calculation sheet, among pieces of audience groups specifying category data, data corresponding to categories selected by the viewer/listener is recorded. Also, although the display period data (Tt, Tr) are recorded in association with the advertisement ID, it is not recorded in the form of raw data in the personal calculation sheet; instead, it is recorded in the form of a coefficient value of the display period (Tx) obtained by the calculation described in following step H5.

Also, in this example, data relating to the averaged transmission number which is described in following step (D4), that is, data indicating the averaged number of transmissions (an initial value) and data indicating the number that the advertisement is transmitted (the number that the advertisement is transmitted to this viewer/listener), is recorded in association with the advertisement ID. However, in the personal calculation sheet, the data relating to the averaged transmission number is recorded in the form of a coefficient value (Ka). The coefficient value (Ka) is obtained by multiplying, by a predetermined coefficient, a remaining number of transmissions until the averaged transmission number is reached, which will be described in following item H(H1). The number that the advertisement is transmitted and actually displayed can be obtained based on a personal ID and an advertisement ID included in data which is transmitted from a receiver 20 to the advertisement transmitting apparatus 1 after the advertisement is displayed (refer to steps 31, 32 of H).

D4. In step 6, the calculation part 6 generates data indicating the number of viewers/listeners (receivers) to which the advertisement is assigned, in other words, the number of personal calculation sheets on which the advertisement is recorded, and stores the data. For all advertisements recorded on personal calculation sheets stored in the calculation part 6, this data is generated.

The calculation part 6 calculates an averaged transmission number for this advertisement. The averaged transmission number is obtained by dividing the ordered total number of displays of the advertisement by the number of receivers to which the advertisement is assigned, in order to obtain an averaged number of transmissions which is a minimum required number of transmissions (a minimum transmission number) for each of these receivers, and multiplying the minimum transmission number by a coefficient.

However, for some of receivers, the apparatus may not be able to complete the minimum transmission number within a predetermined period. Therefore, it is difficult to attain the ordered total number of transmissions of an advertisement if the minimum transmission number calculated for the advertisement is assigned to each receiver to which the advertisement is assigned. Therefore, by multiplying the minimum transmission number by a coefficient, the transmission number (averaged transmission number), which gives scope for offsetting (mutually supplementing) a shortage of the number of transmissions of the advertisement of some receivers by other receivers to which the advertisement is assigned, which defines an upper limit of the transmission number for avoiding the advertisement being transmitted to each receiver too many times, and which is assigned equally, is determined.

The value of the coefficient multiplying the minimum transmission number becomes small, for example, if it is determined that the advertisements are aimed at an audience group including a large number of people, that is, the number of receivers to which the advertisement is assigned is large. To the contrary, the value becomes large if it is determined that the advertisements is aimed at an audience group including the small number of people, that is, the number of receivers to which the advertisement is assigned is small. The value of the coefficient can be experientially determined from, for example, data of display results (transmission results) of advertisements in the past, data concerning the number of people of an audience group or the like obtained by a questionnaire or the like described in the above item A, and data concerning an audience group that is targeted by an advertisement and is designated by the sponsor.

For example, it is assumed that the ordered total number of display is 10,000 for an advertisement belonging to a certain field, and the number of receivers to which the advertisement is assigned (in other words, the number of personal calculation sheets on which the advertisement ID of the advertisement is recorded) is 500. In such a case, the minimum transmission number for each of these receivers is 20 (10,000/500). By further applying a coefficient to give scope to this value, the averaged transmission number is determined.

If an advertisement which is already assigned to one or more viewers/listeners (receivers), in other words, which is registered with one or more personal calculation sheets, is newly assigned to a different receiver, data indicating the number of receivers to which the advertisement is assigned is updated. The calculation part 6 re-calculates the averaged transmission number of the advertisement each time the advertisement is newly assigned to a new receiver. In this calculation, the calculation part 6 makes a request to and obtains from the advertisement management part 3 the remaining number of displays until the total advertisement display number is reached (that is, the remaining number of transmissions until the total transmission number is reached); divides the remaining number by data indicating the number of receivers to which the advertisement is assigned (data indicating the updated number of receivers) to obtain an average number of transmissions which is a minimum required number of transmissions (a minimum transmission number) for each of these receivers at this point; and multiplies the minimum transmission number by a coefficient, thereby obtaining the new averaged transmission number. Further, in relation to personal calculation sheets corresponding to receivers to which the advertisement is assigned, the calculation part 6 updates the initial value of the averaged transmission number with the above new averaged transmission number; and, for each personal calculation sheet, generates new remaining transmission number data (data which is the basis of the control coefficient Ka) by subtracting from the updated averaged transmission number the number of completed transmissions of the advertisement stored in relation to the advertisement ID. The calculation part 6 also changes the coefficient, which is multiplied to the remaining transmission number for obtaining the control coefficient Ka, based on the data indicating updated numbers of receivers (for example, based on a ratio between the previous number of receivers and the updated numbers of receivers).

In addition, the personal calculation sheet records a coincidence value (Ct) indicating the degree of coincidence between the viewer/listener and the advertisement, a sum of control coefficients for each advertisement which is obtained in the priority order calculation step which will be described in item H, and a priority order given to an advertisement based on the sum.

For a newly accepted advertisement, the advertisement transmitting apparatus 1 performs the above steps. Also, if the same advertisement is already recorded on a personal calculation sheet, the advertisement is not newly recorded on the personal calculation sheet.

The calculation part of the advertisement transmitting apparatus 1 stores a computer program for performing the above steps.

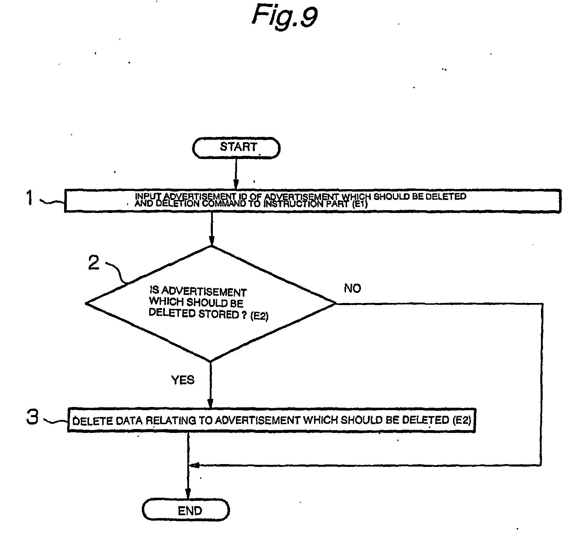

Fig. 9 describes steps for producing command signals relating to deletion of an advertisement, on the transmitting side, that is, in the advertisement transmitting apparatus 1.

E. Steps for producing command signals relating to deletion of an advertisement on the transmitting side:

E1. In step 1, if it is wished to delete an advertisement which cannot be deleted by a regular control operation, for example, when a sponsor has decided to cancel an advertisement even if its number of displays has not reached the total number of displays, the advertisement's advertisement ID and deletion command are inputted from the external instruction input part to the advertisement management part 3 for deleting the advertisement. The advertisement management part 3 inputs the inputted advertisement ID and deletion command to the instruction part 5.

Also, if it is determined by the advertisement management part 3, based on the data indicating the remaining number of transmissions until the total transmission number of each advertisement is reached, which is calculated based on data regarding the transmission (display) number of each advertisement obtained from the history part 7, that an advertisement for which ordered total display number, that is, total transmission number is completed exists; and/or if it is determined by the advertisement management part 3, based on the data indicating the remaining display period of each advertisement which is stored in the advertisement management part 3, that an advertisement for which display period is expired exists, the advertisement ID and deletion command for the advertisement to be deleted is inputted.

The history part 7 generates and stores history data for each advertisement, based on data (data which is the basis of the history data) received from the receiver 20. The history data includes the number of displays of the advertisement, the person received the advertisement (indicating a viewer/listener who viewed/listened to the advertisement), the time of day that the advertisement was viewed/listened to, and others. In this example, the advertisement management part 3 uses the advertisement display number data in the history data to calculate the remaining number of displays until the total number of displays is reached, that is, the remaining number of transmissions until the total transmission number is reached, of the advertisement.

Also, for each advertisement, the history part 7 generates, based on data which is transmitted from the advertisement data storage part 4 after the advertisement data storage part 4 transmits an advertisement, history data and stores it. The history data includes data indicating the number of transmissions of the advertisement, data indicating the person received the advertisement (indicating a viewer/listener who viewed/listened to the advertisement), data indicating the time of day that the advertisement was viewed/listened to, and others.

After every predetermined period, the customer management part 2 reads out data, which is accumulated during the predetermined period, from the history part 7 for reflecting the data on the data managed by the customer management part 2. In this example, by using the history data which is generated based on the data received from the receivers 20, each piece of data for advertisements which are actually displayed on the receivers are updated. Alternatively, it is possible to construct the apparatus in such a manner that new data is transmitted from the history part 7 to the customer management part 2 when the new data is inputted to the history part 7. If whether an advertisement is actually displayed on a receiver or not is not taken into consideration, in other words, if it is regarded that all advertisements transmitted from the advertisement transmitting apparatus 1 to a receiver 20 are displayed, it is possible to use history data which is generated based on data from the advertisement data storage part 4. The steps relating to the history data will be described in item I.

E2. In step 2, the instruction part 5 inputs the advertisement ID and the deletion command inputted from the advertisement management part 3 to the advertisement data storage part 4, calculation part 6 and history part 7.

The advertisement data storage part 4 determines, based on the advertisement ID and the deletion command inputted from the instruction part, whether the advertisement ID of the advertisement which should be deleted is recorded or not. The calculation part 6 checks all personal calculation sheets to determine whether the advertisement ID of the advertisement which should be deleted is recorded or not. The history part 7 determines whether the advertisement ID of the advertisement which should be deleted is recorded or not.

In the case that the advertisement management part 3 received an advertisement ID of an advertisement to be deleted and a deletion command from the external instruction input part, it determines whether the advertisement ID of the advertisement which should be deleted is recorded or not, in response to the received advertisement ID and deletion command.

If the advertisement ID of the advertisement which should be deleted is recorded, in step 3, the advertisement management part 3 deletes from its storage part the advertisement ID of the advertisement and the additional data related to the advertisement ID. The advertisement data storage part 4 deletes the advertisement ID and the advertisement data. The calculation part 6 deletes, from personal calculation sheets on which the advertisement ID is recorded, data relating to the advertisement. The history part 7 starts generation of statistical data used for later marketing, profit sharing, etc., of the advertisement corresponding to the advertisement ID, based on data stored in the history part 7, after a predetermined time (the time sufficient to receive data relating to display of the advertisement from all receivers) passed since the history part 7 received the advertisement ID and deletion command (refer to item J). The history part 7 deletes the history data of the advertisement after the statistical data is generated (the statistical data will not be deleted until it is read out).

If, in step 2, the advertisement management part 3 generates, in accordance with its own judgement, an advertisement ID of an advertisement which should be deleted and a deletion command, and inputs them in the instruction part 5, the advertisement management part 3 deletes the advertisement ID and data relating to the advertisement ID after it sends the advertisement ID of the advertisement which should be deleted and the deletion command. The advertisement data storage part 4 determines, upon receiving the advertisement ID and the deletion command from the instruction part 5, whether the advertisement ID of the advertisement which should be deleted is recorded or not. The calculation part 6 checks all personal calculation sheets to determine whether the advertisement ID of the advertisement which should be deleted is recorded or not. The history part 7 also determines whether the advertisement ID of the advertisement which should be deleted is recorded or not. If the advertisement ID of the advertisement which should be deleted is recorded, in step 3, the advertisement data storage part 4 deletes the advertisement ID and the advertisement data corresponding to the advertisement ID. The calculation part 6 deletes, from personal calculation sheets on which the advertisement ID is recorded, data relating to the advertisement. The history part 7 starts generation of statistical data used for later marketing, profit sharing, etc., of the advertisement corresponding to the advertisement ID, based on data stored in the history part 7, after a predetermined time passed since the history part 7 received the advertisement ID and deletion command from the instruction part 5. The history part 7 deletes the history data of the advertisement after the statistical data is generated.

The advertisement management part 3, advertisement data storage part 4, instruction part 5, calculation part 6, and history part 7 respectively store a computer program for performing the above steps.

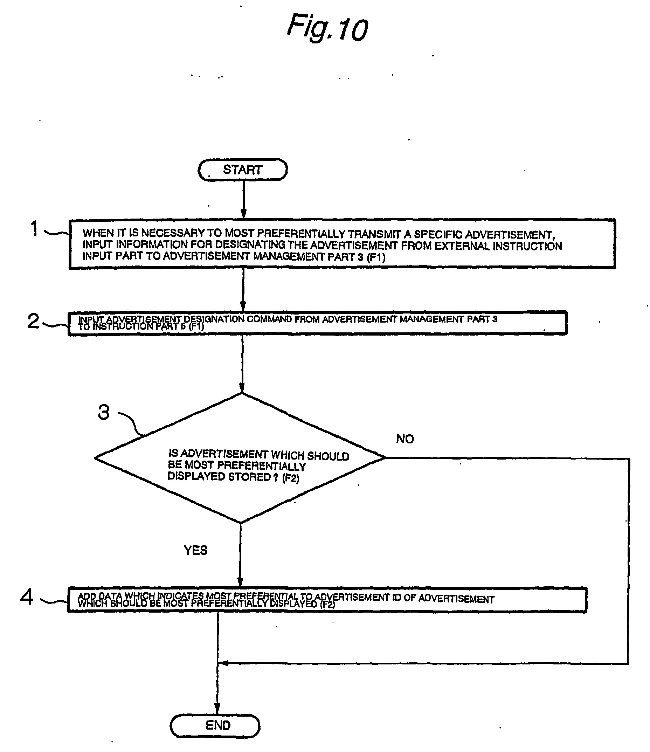

Fig. 10 describes steps for producing command signals relating to most preferentially transmitting an advertisement, on the transmitting side, that is, in the advertisement transmitting apparatus 1.

F. Steps for producing command signals relating to most preferentially transmitting an advertisement, on the transmitting side:

F1. In step 1, if it is necessary to transmit a specific advertisement most preferentially, that is, if it is necessary to most preferentially transmit a specific advertisement to a receiver of a viewer/listener in order to most preferentially display the advertisement, an advertisement designation command is inputted from the external instruction input part to the advertisement management part 3. The advertisement designation command includes an advertisement ID of an advertisement which should be most preferentially transmitted and an instruction for instructing that the advertisement be transmitted most preferentially. In step 2, the advertisement management part 3 sends the inputted advertisement designation command to the instruction part 5, and the instruction part 5 sends the advertisement designation command to the calculation part 6.

F2. In step 3, the calculation part 6 checks all personal calculation sheets to determine whether the advertisement ID specified by the advertisement designation command is recorded or not. If the advertisement ID of the advertisement which should be most preferentially transmitted is recorded on a personal calculation sheet, the calculation part 6 records, in association with the advertisement ID in the personal calculation sheet, data indicating the most preferential transmission, in step 4.

As will be described in item H below, when advertisement data is transmitted to a receiver, if an advertisement ID with which data indicating the most preferential transmission is associated exists in a personal calculation sheet, the calculation part 6 most preferentially sends the advertisement ID and a personal ID of the viewer/listener corresponding to the personal calculation sheet to the advertisement data storage part 4. Upon receiving the advertisement ID and the personal ID, the advertisement storage part 4 most preferentially reads out advertisement data corresponding to the advertisement ID, and transmits the advertisement data via the transmitting part 9 to the receiver of the viewer/listener corresponding to the personal ID. On the other hand, if no advertisement ID with which data indicating the most preferential transmission is associated exists in a personal calculation sheet, the calculation part 6 sends, in accordance with the priority order, the advertisement ID and a personal ID of the viewer/listener to which the advertisement is transmitted. Upon receiving the advertisement ID and the personal ID, the advertisement storage part 4 reads out advertisement data corresponding to the advertisement ID in the order of receiving of the advertisement ID, and transmits the advertisement data via the transmitting part 9 to the receiver of the viewer/listener corresponding to the personal ID in the above order.

The advertisement management part 3, instruction part 5, calculation part 6, and transmitting part 7 respectively store a computer program for performing the above steps.

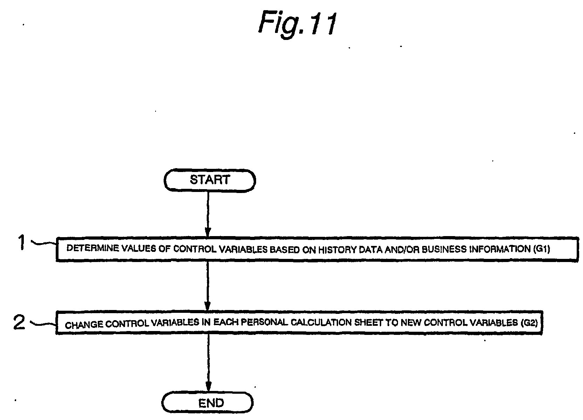

Fig. 11 describes steps for producing command signals relating to change of values of control variables applying to the control coefficients, on the transmitting side, that is, in the advertisement transmitting apparatus 1.

G. Steps for producing command signals relating change of the values of control variables applying to the control coefficients, on the transmitting side:

G1. In step 1, values of the control variables Xn respectively apply to the six kinds of control coefficients (Tx, Ka, Jn, Cpq, Hx, Fx) of a personal calculation sheet are inputted to the instruction part 5 from the external instruction input part via the advertisement management part 3, or from the advertisement management part 3 itself.

In the case that values of the control variables Xn are inputted to the instruction part 5 from the external instruction input part via the advertisement management part 3, the values of the control variables are determined based on business information (including an instruction from a sponsor, for example) and/or others. In the case that values of the control variables Xn are generated in the advertisement management part 3 and inputted to the instruction part 5, the values of the control variables are automatically generated by the advertisement management part 3 based on data which is stored in the advertisement management part 3 and history part 7 and which relates to a transmission (display) status of an advertisement (for example, a remaining display period, a remaining number of transmissions until a total number of transmissions is reached, etc.).

Upon receiving the values of control variables Xn from the advertisement management part 3, the instruction part 5 generates a control variable application command in order for the control variables Xn to be applied to respective control coefficients in a personal calculation sheet. The control variable application command includes newly determined values of respective control variables and an instruction to instruct changing the values of the control variables.

For example, in the case that if it is determined from the history data that data of an advertisement for which a large remaining number of transmissions remains although its display deadline is approaching is stored in the advertisement transmitting apparatus 1; in the cases in which a sponsor issues instructions to promptly complete the display (the remaining numbers of displays) of a specific advertisement; in the case that it is necessary to promptly complete the display (the remaining number of displays) of a specific advertisement due to some reason, etc., it is necessary to raise the priority order of the advertisement higher in order to display it more. That is, in order to raise the priority order of the advertisement higher, it is necessary to increase a value(s) of the coefficient(s) which is the basis of the priority order. In such a case, values of the coefficients (variables Xn) applied to the six kinds of control coefficients (Tx, Kt, Jn, Cpq, Hx and Fx) are changed for the value of each control coefficient to be varied, whereby the priority order of the display of the object advertisement is raised. A method of determining a control variable will be described in item 13 below.

G2. In step 2, the instruction part 5 sends the control variable application command to the calculation part 6. The calculation part changes the values of the control variables (Xn) in all personal calculation sheets to the new values indicated by the control variable application command.

In this example, for each personal calculation sheet, as soon as the control variable application command is received, the values of the control variables included in the control variable application command are reflected on the personal calculation sheet; the priority order of the advertisements is calculated; in an advertisement frame right after this calculation, a certain number of advertisements which can be displayed during the advertisement frame are transmitted in accordance with the priority order determined by the calculation; and, after transmitting the certain number of advertisements, the values of the control variables are changed to the original control variables and the priority order is re-calculated. However, in a different example, it is possible to construct the apparatus in such a manner that the values of the control variables indicated by a latest control variable application command are maintained until a new control variable application command is received.

The advertisement management part 3, instruction part 5, and calculation part 6 store a computer program for performing the above steps.

The processing relating to deletion of an advertisement described in above item E, the processing relating to most preferentially transmit an advertisement described in above item F, and the processing relating to change a control variable described in above item G are respectively performed at any time when required. For example, the processing for raising the priority order of a certain advertisement to the highest as described in above item F is performed, when an instruction to instruct most preferentially transmit and display a certain advertisement is received from the sponsor urgently. Also, for example, if the processing for changing control variables described in item G is performed every time when new history data is received, more precise control of the advertisement transmission can be attained.

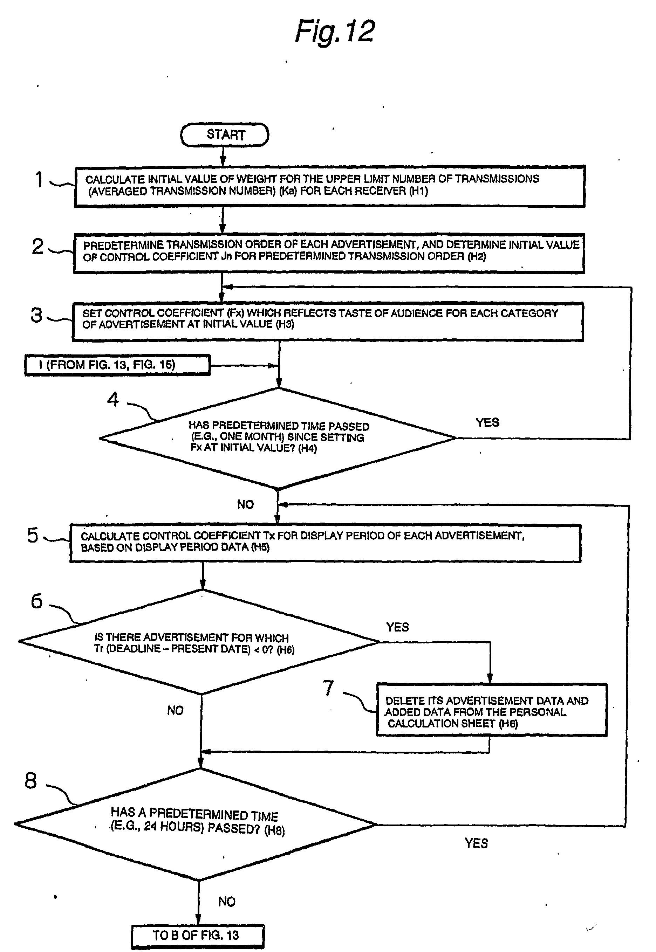

Figs. 12, 13, 14, and 15 show one continuous flow chart, and describe steps, on the transmitting side, that is, in the advertisement transmitting apparatus 1, for determining the priority order of transmissions of advertisements to each of the viewers/listeners, and transmitting the advertisements to a receiver of each of the viewers/listeners.

H. Steps for determining the priority order of advertisements for each of the viewers/listeners, and transmitting the advertisements to a receiver of each of the viewers/listeners:

The following series of steps is respectively performed for each of all viewers/listeners who are registered with the transmitting side. In the following description, steps, for one of the registered viewers/listeners, for determining the priority order of pieces of advertisement data and transmitting the pieces of advertisement data to a receiver of the one viewer/listener are described.

H1. In step 1 of Fig. 12, the calculation part 6 of the advertisement transmitting apparatus 1 determines, based on the averaged transmission number data which is stored in association with advertisements assigned to a registered viewer/listener, in other words, which is stored in association with advertisement IDs recorded on the personal calculation sheet corresponding to the viewer/listener, an initial value of a value representing a weight for the averaged transmission number of each advertisement (the control coefficient Ka of Fig. 1). The control coefficient Ka is obtained by multiplying, by a coefficient, the remaining number of transmissions until the averaged transmission number is reached (i.e., Ka = remaining number of transmissions x coefficient). For example, if a value of the control coefficient Ka is desired to be the same as a value of the remaining number of transmissions, the coefficient to multiply the remaining number of transmissions is set to 1, and a value of a control variable X7 to be applied is set to 1.

One is subtracted from the remaining number of transmissions each time the advertisement is transmitted. When the remaining number of transmissions reaches zero, the control coefficient Ka becomes zero. An advertisement with its control coefficient Ka reached zero is not transmitted.

In the example of Fig. 1, the values of the control coefficient Ka is 40 for CM1, 100 for CM2, 50 for CM3, 40 for CM4, 70 for CM5, and 30 for CM6. In the case that the calculation part 6 determines a priority order of advertisements based only on the values of the control coefficient Ka at this point, the priority order is CM2, CM5, CM3, CM1 and CM4, and CM6 from the top.

H2. In step 2, the calculation part 6 predetermines an order for transmitting (delivering) each advertisement assigned to the viewer/listener to the receiver, that is, an order for displaying each advertisement assigned to the viewer/listener on the receiver, and determines an initial value of a value representing a weight for the predetermined transmission order (the control coefficient Jn of Fig. 2).

An initial predetermined transmission order may be determined by any appropriate method. For example, a method of assigning a higher predetermined transmission order to an advertisement recorded on the personal calculation sheet earlier, a method of assigning a predetermined transmission order in the order of an alphabet or the number of an ID number added to each pieces of advertisement data, or the like may be used. If a new advertisement is assigned to the viewer/listener later, the value assigned to the predetermined transmission order element in Fig. 1 (the lowest value) is assigned as the value of the control coefficient Jn of the advertisement.

In assigning an initial control coefficient Jn, a control coefficient for an advertisement of the lowest predetermined display order is set to be a predetermined minimum value, and a predetermined increment value is added each time the predetermined display order is up by one. In the example of Fig. 2, the minimum value of the control coefficient Jn is set to 1,000, and the increment value is set to 100. In the example of Fig. 2, CM6 is the lowest in the predetermined display order, thus, the value of its control coefficient is 1,000. The predetermined display order of CM5 is the second lowest, and the value of its control coefficient is 1,000 + 100, that is, 1,100. The predetermined display order of CM4 is the third lowest, and the value of its control coefficient is 1,100 + 100, that is, 1,200. The value of the coefficient that is calculated in a similar manner is 1,500 for CM1, 1,400 for CM2 and 1,300 for CM3.

The control coefficient Jn of each advertisement is updated when the advertisement is displayed. That is, the calculation part 6 makes the values of the control coefficients Jn for the transmitted advertisements lower, and makes the values of the control coefficients Jn for advertisements that are not transmitted higher. A method of updating the control coefficient Jn will be described in detail in item H23 below.

In the case that the calculation part 6 determines a priority order of advertisements based only on the values of the control coefficient Jn at this point, the priority order is CM1, CM2, CM3, CM4, CM5 and CM6 from the top.

H3. In step 3, the calculation part 6 assigns an initial value to a value reflecting a taste (preference) of a viewer/listener (the control coefficient Fx) for a field (advertisement attribute) of each advertisement assigned to the viewer/listener. This initial value is the value (a base value) of the taste of a viewer/listener (Fx) included in the data transmitted from the advertisement management part 3 to the calculation part 6; in other words, the initial value is the value of the control coefficient Fx shown in Fig. 1, and the base value is 50 in this example. That is, initially, the calculation part 6 assigns the same initial value to all the advertisement attributes, and stores the value on the personal calculation sheet.

The input part 23 of the receiver 20 is provided with voting buttons with which a viewer/listener expresses (votes on) whether the viewer/listener is interested in or is not interested in an advertisement while the advertisement is received and displayed to the viewer/listener ("interested-in button" and "not-interested-in button"). When a viewer/listener presses the "interested-in button" while an advertisement is displayed, data indicating that the viewer/listener voted "interested-in" for the advertisement attribute of the advertisement is stored in the storage part 22 of the receiver 20. On the other hand, when a viewer/listener presses the "not-interested-in button" while an advertisement is displayed, data indicating that the viewer/listener voted "not-interested-in" for the advertisement attribute of the advertisement is stored in the storage part 22 of the receiver 20. The control part 21 of the receiver 20 reads out the data indicating the vote results from the storage part 22 at a predetermined timing, and transmits the data via the transmitting part 25 to the advertisement transmitting apparatus 1. The receiving part 8 of the advertisement transmitting apparatus 1 receives the data of the vote results and sends it to the calculation part 6. The calculation part 6 retrieves and reads out the personal calculation sheet corresponding to the viewer/listener (receiver) who (which) transmitted the data of the vote results. Then, for the read out calculation sheet, based on the data of vote results, the calculation part 6 increases the values of the control coefficient Fx for all advertisements having the same advertisement attribute as the advertisement attribute which is voted "interested-in"; and decreases the values of the control coefficient Fx for all advertisements having the same advertisement attribute as the voted advertisement attribute which is voted "not-interested-in." Operations of these voting buttons will be described in detail in item H25 below.

For the value of the control coefficient Fx, an upper limit value is set such that it does not increase too much, that is, the priority of an advertisement(s) having a specific advertisement attribute does not become too high, and a lower limit value is set such that the priority of an advertisement(s) having a specific advertisement attribute does not become too low. The above initial value is set at, for example, a value in the middle of the upper limit value and the lower limit value. Also, when the control coefficient Fx is set to the initial value, data indicating the time and day of this event is obtained from the timing part (not shown) of the advertisement transmitting apparatus 1 and stored in relation to the personal calculation sheet.

In the example of Fig. 2, the initial value is 50, the lowest limit value is 0, and the upper limit value is 100, and, in Fig. 2, the values of the control coefficients Fx for attributes of respective advertisements, after the voting buttons are pressed a plurality of times, are indicated. In Fig. 2, the value of the control coefficient Fx for the advertisement attribute (F1) of the advertisements CM1, CM2 and CM4 is 70, which indicates that the "interested-in button" has been pressed more. The value of the control coefficient Fx for the advertisement attribute (F2) of CM3 and CM6 is 20, which indicates that the "not-interested-in button" has been pressed more. The value of the control coefficient Fx for the advertisement attribute (F3) of CM5 is 50, which indicates that the voting buttons have not been pressed or the "interested-in button" and the "not-interested-in button" have been pressed the same number of times. In the case that a priority order of advertisements is determined based only on the values of the control coefficient Fx at this point, CM1, CM2 and CM4 at the top, CM3 and CM6 are at the second place, and CM5 is at the third place of the priority order.

H4. In step 4, the calculation part 6 determines whether or not a predetermined period (for example, one week, one month, etc.) has passed after setting the control coefficient Fx at an initial value, based on data of time and date which can be obtained from the timing part of the advertisement transmitting apparatus 1. If the predetermined period has passed, the operation step returns to step 3, and resets the control coefficient Fx for all the advertisements to the initial value. If the predetermined period has not passed, the operation step proceeds to step 5.

If a value of the control coefficient Fx for an advertisement having a specific attribute is maintained to be high over a certain period, the other advertisements tend to be transmitted (displayed) less during the period. Also, to the contrary, if a value of the control coefficient Fx for an advertisement having a specific attribute is maintained to be low over a certain period, the advertisement tends to be transmitted less during the period. When the efficiency of advertisements is taken into consideration, it is not preferable to maintain excessively long a biased transmitting period of advertisements reflecting a taste of a viewer/listener, as described above. Therefore, the control coefficient Fx for every advertisement is reset to an initial value when a predetermined period has passed.

Also, it may be possible to configure the apparatus such that, when the control coefficient Fx for any advertisement attribute reaches an upper limit value or a lower limit value, the control coefficient Fx for every advertisement is reset to an initial value. By this configuration, for example, a situation in which a value of the control coefficient Fx only for an advertisement having a specific attribute is increased and the priority of the advertisement becomes higher, whereby display of the other advertisements is excessively disturbed, can be prevented. In addition, to the contrary, a situation in which a value of the control coefficient Fx only for an advertisement having a specific attribute is decreased and the priority of the advertisement becomes lower, whereby the display of the advertisement is excessively disturbed, can be prevented.

H5. In step 5, the calculation part 6 determines a value representing a weight for a display period of each stored advertisement, that is, a weight for a remaining display period (the control coefficient Tx of Fig. 2), based on the total display period data Tt and the remaining display period data Tr of the display period data.

The control coefficient Tx is calculated as described below.

i. A total display period (Tt) is obtained based on the date of a deadline of display on a receiver and the date that an advertisement is registered with the advertisement transmitting apparatus 1 (the date that data relating to the advertisement is inputted to the advertisement management part 3).

$$Tt = \text{(Deadline date)} - \text{(Advertisement registered date)}$$

The value of Tt is calculated in the advertisement management part 3, and provided to the calculation part 3 during the above steps for making the personal calculation sheet.

ii. A remaining display period (Tr) is obtained based on the date of the deadline of display and the present date.

$$Tr = \text{(Deadline date)} - \text{(Present date)}$$

iii. A ratio of the remaining display period to the total display period is obtained, and the ratio is multiplied by a coefficient (1,000 in this example) to obtain a value Tx".

$$Tx'' = (Tr/Tt) \times 1,000$$

The shorter the remaining display period the smaller the value Tx" becomes.

iv. The period coefficient Tx" is subtracted from a predetermined coefficient (1,000 in this example) to obtain a period coefficient Tx.

$$Tx = 1,000 - Tx''$$

Data to be the basis of date and time in the calculation of the remaining display period is generated in the timing part. If the display period is calculated by a unit of one day, the calculation part 6 calculates the control coefficient Tx and updates the value every time one day passes (that is, everyday) (see step 8). The control coefficient Tx becomes a maximum value (1,000) when the remaining display period reaches zero.

However, there may be an advertisement for which the display period is only one day and, in this case, the date of the deadline of display and the date when an advertisement is registered (the date to start displaying of the advertisement) become the same. In such a case, the value of the total display period (Tt) obtained in the above step i is zero. If Tt = 0, an answer for the expression of the following step iii cannot be obtained. Therefore, the calculation part 6 determines whether Tt is zero or not immediately after the above step i. If Tt is zero, the calculation part 6 assigns a maximum value to the control coefficient Tx without performing the above steps ii to iv, and if Tt is not zero, the calculation part 6 performs the above steps ii to iv to calculate Tx.

In the example of Fig. 2, the value of the control coefficient Tx is 800 for CM1, 700 for CM2, 400 for CM3, 300 for CM4, 500 for CM5, and 100 for CM6. In the case that the calculation part 6 determines a priority order of the advertisements based only on the values of the control coefficient Tx at this point, the priority order is CM1, CM2, CM5, CM3, CM4 and CM6 from the top.

H6. In step 6, the calculation part 6 examines each advertisement to find if an advertisement for which value of Tr (a value obtained in step ii of the above step 5), that is, the value obtained by subtracting the present date from the date of the deadline is smaller than zero is stored. If there is an advertisement for which Tr < 0, the advertisement data and additional data is deleted from the personal calculation sheet.

The examination as to whether Tr < 0 or not is also performed in the advertisement management part 3. If it is found that an advertisement for which Tr < 0 exists, the advertisement management part 3 inputs the advertisement ID of the advertisement which should be deleted and a deletion command to the instruction part 5, and the instruction part 5 sends the advertisement ID and the deletion command to the calculation part 6 (refer to above item E). However, if the calculation part already deleted the advertisement ID and data related thereto from the personal calculation sheet, the deletion command from the instruction part 5 becomes invalid. After the advertisement management part 3 has inputted the advertisement ID of the advertisement which should be deleted and the deletion command to the instruction part 5, the advertisement management part 3 deletes data for the advertisement from its storage part.

It should be noted that, the history data, which is stored in the history part 7, of an advertisement for which display period is expired (Tr < 0) is maintained until statistical data used for later marketing, profit sharing, etc., of the advertisement is generated.

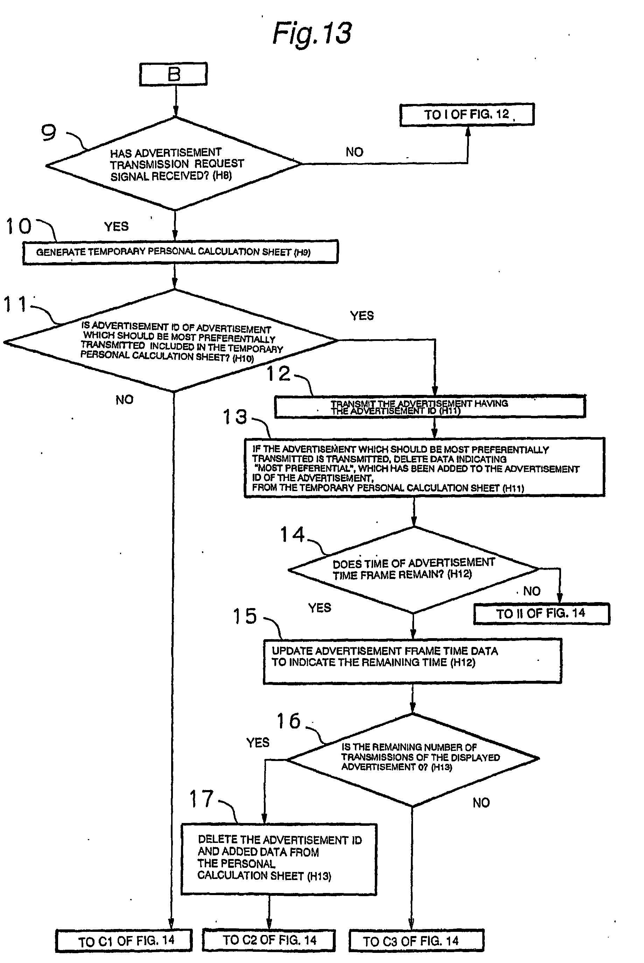

H7. Next, in step 8, the calculation part 6 examines whether or not a predetermined time, for example, one day has passed, based on the data to be a basis of date and time obtained from the timing part. If the predetermined time has passed, the operation of the calculation part 6 returns to step 5, and the control coefficient Tx is calculated again. If the predetermined time has not passed, the operation proceeds to step 9 of Fig. 13.

H8. In step 9 of Fig. 13, the advertisement transmitting apparatus 1 waits for an advertisement transmission request signal. The advertisement transmission request signal is a signal for instructing the advertisement transmitting apparatus 1 to transmit an advertisement. The advertisement transmission request signal includes advertisement frame time data for specifying the length of time of an advertisement frame, data for identifying a receiver 20 which requested transmission of advertisements, such as a personal ID, and others.

In the case that if the transmitting side is a provider which provides users, who has been registered as subscribers, with contents via a communication network such as an Internet, and/or a company which provides services for communication such as a mobile phone service, the advertisement transmission request signal is transmitted from a receiver 20 to the advertisement transmitting apparatus 1. In this example, the receiver 20 is programmed in such a manner that, when a user inputs data from input part 23 of the receiver 20 for connecting to the provider and/or accessing to a certain site, the control part 21, in response to the input, automatically generates an advertisement transmission request signal and transmitting the signal to the advertisement transmits apparatus 1. This program is stored in the storage part 22 of the receiver 20 in advance. For a mobile phone, it is possible to program it in such a manner that the advertisement transmission request signal is automatically generated and transmitted to the advertisement transmits apparatus 1 when the switch of the mobile phone is turned on for calling. Also, data for the advertisement frame time is set in advance for respective receivers and stored in storage parts of respective receivers.

In the case that if the transmitting side is a broadcast company which uses a predetermined channel for broadcasting a program to receivers of users, who has been registered as subscribers, via wired and/or wireless means such as CS, BS, terrestrial TV, cable, etc., and transmits advertisements to each receiver during an advertisement frame in a program under broadcast, it is possible to display the advertisements on the receiver with more certainty if a means for checking whether or not each receiver is receiving a program which is presently being broadcasted, in other words, a means for checking whether or not each viewer/listener is watching a program, is provided. In order to do so, for example, an apparatus on the transmitting side for broadcasting a program is provided with a means for sending, a little before a starting time of an advertisement frame, a confirmation signal to each receiver 20 for checking whether the receiver 20 is receiving the program or not (for example, a confirmation signal is superimposed on a program signal). The confirmation signal includes data of an advertisement frame time, data of starting time of the advertisement frame, etc.; and the data of an advertisement frame time in the confirmation signal is set in accordance with the length of the advertisement frame in the program. The receiver 20 is provided with a means for receiving the above confirmation signal, generating an advertisement transmission request signal base on the confirmation signal, and transmitting the generated advertisement transmission request signal to the advertisement transmitting apparatus 1 on the timing that the advertisements could be received at an advertisement frame starting time for the advertisements to be displayed, in other words, the timing that concerns time required for the processing in the advertisement transmitting apparatus 1 to receive the advertisement transmission request signal, read out advertisements, and transmit the advertisements to the receiver 20. The advertisement transmission request signal generated in the receiver includes a personal ID of the viewer/listener of the receiver, and the advertisement frame time data and the advertisement frame starting time data read out of the confirmation signal.

Also, it is possible to configure the receiver in such a manner that, when the receiver is turned on during an advertisement frame, an advertisement of a still image stored in the storage part 22 of Fig. 4 is temporarily outputted until the advertisement frame ends. In such a construction, for example, a signal indicating that the program is presently entered in an advertisement frame is transmitted from the transmitting side to the receiver from the beginning to the end of the advertisement frame, and a still-imaged advertisement stored in the storage part 22 is read out and displayed in response to the signal. The material, that is, still-imaged advertisement stored in the storage part 22 is that which is transmitted to the receiver on an optional timing and stored therein. This advertisement is displayed just for preventing an image on the screen of the receiver from being not displayed and, therefore, this advertisement is treated differently from those processed in the personal calculation sheet. The data of the still-imaged advertisement is inputted from the advertisement registration input part to the advertisement management part 3 of the advertisement transmitting apparatus 1, and stored in the advertisement data storage part 4. When the advertisement data storage part 4 receives an instruction from the advertisement management part 3 via the instruction part 5, it transmits the still-imaged advertisement data from the transmitting part 9 to the receiver. On the receiver side, the still-imaged advertisement data is stored in the storage part 22. The still-imaged advertisement data stored in the storage part 22 of the receiver is updated when a new still-imaged advertisement data is inputted.

If the receiving part 8 of the advertisement transmitting apparatus 1 has not received the advertisement transmission request signal, the operation returns to step 4 of Fig. 12, and repeats the steps from step 4. When the advertisement transmitting apparatus 1 receives the advertisement transmission request signal at the receiving part 8, the operation proceeds to step 10. The calculation part 6 of the advertisement transmitting apparatus 1 reads out data included in the advertisement transmission request signal and performs processing in accordance with the data.

H9. In step 10, the calculation part 6 of the advertisement transmitting apparatus 1 reads out, based on the personal ID included in the advertisement transmission request signal, the personal calculation sheet corresponding to the personal ID. The calculation part 6 copies the read out calculation sheet for producing a temporary calculation sheet. If it is confirmed in the following steps (Refer to H24) that the advertisement was displayed on the receiver 20, the read out calculation sheet will be discarded and the temporary personal sheet will be stored as a new personal calculation sheet.

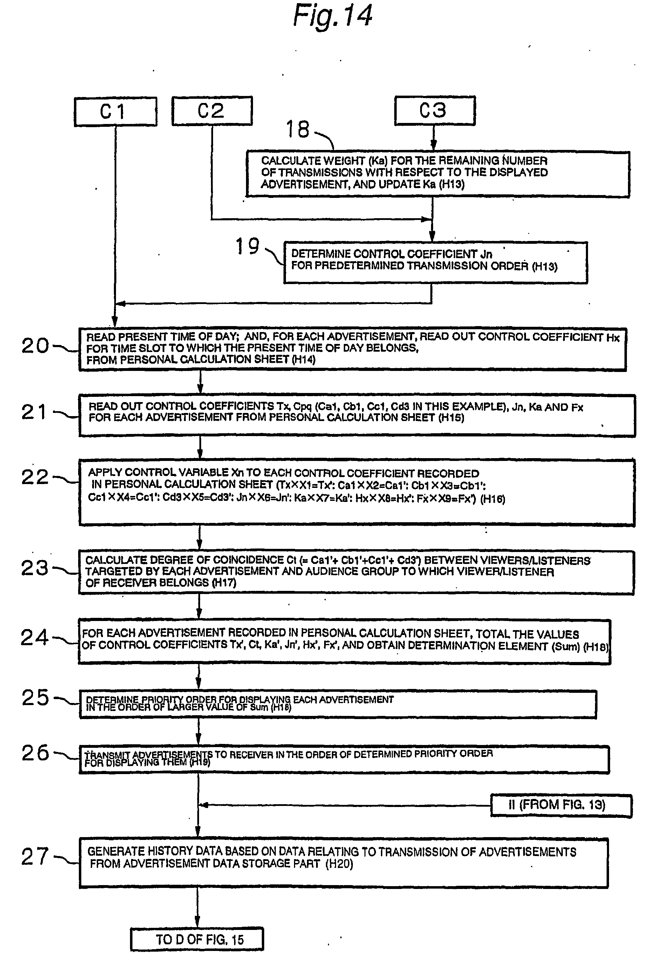

H10. In step 11, the calculation part 6 checks the temporary personal calculation sheet to determine whether any advertisement which should be most preferentially transmitted is assigned to the viewer/listener or not, in the other words, whether any advertisement ID to which data indicating the most preferential is attached is recorded or not. If no advertisement ID to which the data indicating the most preferential is attached is recorded on the temporary personal calculation sheet, the process proceeds to step 19 of Fig. 14 (H14).

H11. If an advertisement ID to which the data indicating the most preferential is attached is recorded on the temporary personal calculation sheet; in step 12, the calculation part 6 most preferentially sends to the advertisement data storage part 4 the advertisement ID of the advertisement and the personal ID of the viewer/ listener (receiver) which is the destination of transmission of the advertisement, regardless of the priority order of transmission of the advertisement calculated based on the control coefficients. The advertisement data storage part 4, which received the above data, reads out advertisement data corresponding to the advertisement ID, and sends it together with the advertisement ID and the personal ID to the transmitting part 9. The transmitting part 9 transmits the advertisement ID and the advertisement data to the receiver 20 which is identified by the personal ID.

When the receiver 20 received the advertisement ID and the advertisement data at the receiving part 26, the control part 21 of the receiver 20 transfers the advertisement data to the output part 27 to reproduce the advertisement, then stores the advertisement ID of the reproduced advertisement and data relating to display of the advertisement in the storage part 22. The data relating to display of the advertisement includes, for example, the ID of a program (a content) which was viewed/listened to until the advertisement data is received, time and date that the advertisement is received (date, time of day), the location of the receiver positioned when the advertisement is received (geographical position), the voting data (data indicating whether "interested-in" or "not-interested-in") recorded while the advertisement is displayed, and others (explanations of these pieces of data will be provided later).

In step 13, the calculation part 6 deletes the data indicating the most preferential, which is attached to the advertisement ID, from the temporary personal calculation sheet.

H12. In step 14, the calculation part 6 of the advertisement transmitting apparatus 1 subtracts the displaying time of the most preferentially transmitted advertisement (indicated by advertisement duration data) from the length of the advertisement frame indicated by the advertisement frame time data included in the advertisement transmission request command for determining whether time of the advertisement frame remains or not. If it is determined that the remaining time is insufficient to display another advertisement, the process proceeds to step 27 of Fig. 14. On the other hand, if it is determined that the remaining time is sufficient to display another advertisement, the advertisement frame time data is updated to indicate the remaining time in step 15, and the process proceeds to step 16.

H13. In step 16, the calculation part 6 of the advertisement transmitting apparatus 1 subtracts one from the remaining number of transmissions of the advertisement which was most preferentially transmitted, in the data in the temporary personal calculation sheet; and determines whether or not the remaining number of transmissions is zero. If it is determined that the remaining number of transmissions is zero, the advertisement ID and the additional data of the advertisement is deleted from the temporary personal calculation sheet in step 17. If the advertisement ID and the additional data of the advertisement is deleted from the temporary personal calculation sheet in step 17, the operation process proceeds to step 19 of Fig. 14.

On the other hand, in step 16, if it is determined that the remaining number of transmissions is not zero, the operation of the calculation part 7 proceeds to step 18 of Fig. 14. In step 18, the calculation part 6 calculates the weight for the remaining number of transmissions (the control coefficient Ka) with respect to the advertisement, and updates the value of the control coefficient Ka in the temporary personal calculation sheet.

Next, in step 19, the calculation part 6 updates a value representing a weight for a predetermined transmission order (the control coefficient Jn) of each advertisement recorded on the temporary personal calculation sheet. The calculation part 6 maintains without change the control coefficient Jn of an advertisement(s) which is ranked higher in the predetermined transmission order than the advertisement transmitted in step 12, makes the control coefficient of the advertisement transmitted in step 12 a minimum value, and adds an increment value (100) to the control coefficient for each advertisement which is ranked lower in the predetermined transmission order than the advertisement transmitted in step 12 to increase the value of the control coefficient Jn for each advertisements by the amount for one rank. (A method of updating the control coefficient Jn will be described in detail in item H22 below.)

Note that steps 12 to 19 can be performed while the advertisement designated by the advertisement designation command is transmitted and displayed.

H14. In step 20, the calculation part 6 reads out a present time from the timing part. The calculation part 6 then reads a control coefficient (Hx) assigned to a time slot to which the present time belongs out of the control coefficients (Hx) assigned respectively to a plurality of time slots (H1 to H6 of Fig. 2) in the preferred transmission time data recorded on the temporary personal calculation sheet.

In the example of Fig. 2, for example, for the time slot H6 (21 o'clock to 1 o'clock), values 0, 20, 0, 20, 30 and 0 are assigned to CM1, CM2, CM3, CM4, CM 5 and CM6, respectively. These control coefficients assigned to the time slot H6 are only effective during the time between 21 o'clock and 1 o'clock in one day, and increase the priorities of CM2, CM4 and CM5 during this time slot. A sponsor can designate to some extent a time slot(s) during which an advertisement is transmitted and displayed, by using this control coefficient Hx.

For example, in the case that the present time is 22 o'clock and the calculation part 6 determines a priority order of advertisements based only on the values of the control coefficients Hx at the point, CM5 is at the top, CM2 and CM4 are at second place, and CM1, cM3 and CM6 are at third place.

H15. Next, in step 21, the calculation part 6 reads out all control coefficients Tx, Cpq (Ca1, Cb1, Cc1 Cd3), Jn, Ka, Hx and Fx for each advertisement in the temporary personal calculation sheet.

H16. In step 22, the calculation part 6 applies control variables (Xn) to the control coefficients (Tx, Cpq, Jn, Ka, Hx and Fx) to newly determine the control coefficients. That is, the calculation part 6 reads out the control variables X1 to X9 recorded on the temporary personal calculation sheet, and multiplies corresponding control coefficients by corresponding control variables to calculate values of new control coefficients, Tx' (= Tx x X1), Cax' (= Cax x X2), Cbx' (= Cbx x X3), Ccx' (=Ccx x X4), Cdx' (= Cdx x X5), Jn' (= Jn x X6), Ka' (= Ka x X7), Hx' (= Hx x X8) and Fx' (= Fx x X9). If the value of a control variable for a certain control coefficient is set to one, the value of the control coefficient does not change.

It is desirable that this step is performed before a step for calculating the value of the degree of coincidence Ct and a step for totaling the values of all the control coefficients (Tx, Cpq (Ct), Ka, Jn, Hx and Fx). By applying a control variable, which is determined for each control coefficient, to a corresponding control coefficient, it becomes possible in the advertisement transmitting apparatus 1 to control which calculation element (s) recorded on the temporary personal calculation sheet should have attached importance.

H17. In step 23, the calculation part 6 determines the value indicating a weight for a degree of coincidence (the degree of coincidence value Ct) between an audience group targeted by each stored advertisement and an audience group to which the viewer/listener of the receiver 20 belongs, based on the audience group specifying category data in the temporary personal calculation sheet.

The degree of coincidence Ct is obtained by totaling numerical values, wherein each of the numerical values is obtained by applying one of control variables (X2, X3, X4, X5) to the value assigned to corresponding one of the categories (in this example, Ca1, Cb1, Cc1 Cd3), wherein these categories are those which coincide with categories to which the viewer/listener belongs, and these categories are selected from all the categories of the audience group specifying category data. As shown in Fig. 2, pieces of data of Ca1, Cb1, Cc1 and Cd3 in the audience group specifying category data of Fig. 1 are selected and copied on the personal calculation sheet.

In this example, it is assumed that values of the control variables X2, X3, X4 and X5 applied to Ca1, Cb1, Cc1 and Cd3 in the above step 22 were all one. In this case, as shown in the bottom table of Fig. 2, the numerical value Ct (= Ca1' + Cb1' + Cc1' + Cd3') representing the degree of coincidence for CM1 of the viewer/listener corresponding to this personal calculation sheet is 40 + 80 + 10 + 10 = 140. Similarly, the numerical value Ct is 250 for CM2, 110 for CM3, 200 for CM4, 90 for CM5 and 170 for CM6.

In the case that the calculation part 6 determines a priority order of advertisements based only on these values of the control coefficients Ct's, the priority order is CM2, CM4, CM6, CM1, CM3 and CM5 from the top.

H18. In step 24, the calculation part 6 totals the values of control coefficients Tx', Ka', Jn', Hx' and Fx' and Ct for each advertisement recorded on the temporary personal calculation sheet to obtain a determination element (the determination element (Sum) of Fig. 2). Next, in step 25, based on this determination element (Sum), the calculation part 6 determines a final priority order (the priority order (N) of Fig. 2) for transmitting each advertisement in the order of the value of the determination element.

In the case of the example of Fig. 2, that is, in the case in which the viewer/listener corresponding to this personal calculation sheet belongs to the categories Ca1, Cb1, Cc1 and Cd3, a present time belongs to the time slot H6, and all the control variables Xn (X1 to X9) are one; values of the determination elements (Sum) of CM1 to CM6 are 2,550, 2,540, 1,880, 1,830, 1,840 and 1,320, and the priority order N (the first to sixth places) based on the determination elements Sum is CM1, CM2, Cm3, CM5, CM4 and CM6 from the top.

H19. Next, in step 26, the calculation part 6 reads out the advertisement frame time data; selects a certain number of advertisements, which can be displayed (transmitted) during the time indicated by the advertisement frame data, in the order of the determined priority order; and sends the advertisement ID(s) of the selected advertisement(s) and the personal ID of the viewer/listener corresponding to this personal calculation sheet to the advertisement data storage part 4 in the order of the determined priority order.

In response to the advertisement ID(s) and the personal ID received from the calculation part 6, the advertisement storage part 4 reads out from its storage part a piece(s) of advertisement data corresponding to the advertisement ID(s), and sends the advertisement data together with the advertisement ID(s) and the personal ID to the transmitting part 9. The transmitting part 9 transmits the advertisement data and the advertisement ID(s) to the receiver 20 corresponding to the personal ID.

Upon receiving the advertisement ID(s) and the advertisement data on the receiving part 26 of the receiver 20, the control part 21 of the receiver 20 reproduces the advertisement data on the output part 27 in substantially real time, and stores the advertisement ID(s) which is accompanied with the reproduced advertisement data in the storage part 22.

It should be understood that, although an advertisement is reproduced in real time in this embodiment, it is possible to construct the apparatus in such a manner that an advertisement is first stored in the storage part 22 of the receiver 20 and reproduced thereafter.

Also, if the transmitting side added to the program (content) signals a program ID which identifies the program (content), the control part 21 of the receiver 20 stores the program ID of the program which was watched/listened to when an advertisement ID and advertisement data were received, in association with the received advertisement ID in the storage part 22. Also, it is possible to construct the apparatus in such a manner that the receiver 20 reads time and date from the timing part 24 when it received an advertisement ID and advertisement data, and stores the time and date in association with the advertisement ID. Also, if the receiver 20 is provided with a function to identify the location (geographical position) of the receiver, it is possible to construct the apparatus in such a manner that data indicating the position where an advertisement is received is stored in association with the advertisement ID.

Further, when the viewer/listener has pressed the "interested-in button" on the input part 23, that is, voted "interested-in" while the advertisement is reproduced, the control part 21 of the receiver 20 stores, in the storage part 22, voting data indicating that the viewer/listener voted "interested-in" with respect to the advertisement attribute of the advertisement. On the other hand, when the viewer/listener pressed the "not-interested-in button," that is, voted "not-interested-in," the control part 21 stores, in the storage part 22, voting data indicating that the viewer/listener voted "not-interested-in" with respect to the advertisement attribute of the advertisement. Also, even if the viewer/listener conducted a plurality of votes while one advertisement were displayed, the control part 21 validates one vote only and stores the one vote in the storage part 22.

Later, the control part 21 of the receiver 20 reads out the advertisement ID(s) (that is, the advertisement ID of the reproduced advertisement), personal ID, program ID of the program which was viewed/listened to until the advertisement was displayed, time and date that the advertisement was displayed, and voting data stored in the storage part 22, and transmits them from the transmitting part 25 to the advertisement transmitting apparatus 1 (refer to item H24).

Also, as described (refer to item H8), if the transmitting side is a broadcast company which broadcasts a program, and if an advertisement(s) is inserted in a predetermined advertisement frame in the program during broadcasting, the advertisement transmission request signal to be received by the advertisement transmitting apparatus 1 includes a personal ID, advertisement frame time data, and data indicating the starting time of the advertisement frame. The advertisement transmitting apparatus 1 comprises a means for reading the data indicating the starting time of the advertisement frame from the advertisement transmission request signal, and controlling the timing to transmit the advertisement data to the receiver of the viewer/listener in such a manner that the advertisement is shown on the receiver at the starting time.

H20. In step 27, the advertisement data storage part 4 sends data such as the advertisement ID of the transmitted advertisement, the personal ID of the viewer/listener of the receiver to which the advertisement was transmitted, time and date that the advertisement data was transmitted, etc., to the history part 7. Based on the above data, the history part 7 produces and stores, for each advertisement, history data including the number of transmissions of the advertisement, the receiver of the advertisement (indicating to whom the advertisement was transmitted), time that the advertisement was transmitted, etc. It should be noted that this history data is produced and stored differently from the history data which is produced based on the data transmitted from the receiver. The history data produced based on the data from the calculation part 6 is useful. For example, by comparing this history data and the history data which is produced based on the data transmitted from the receiver, it becomes possible to confirm an actual status of display of advertisements and to correct the history data and, therefore, more precise history data can be produced.

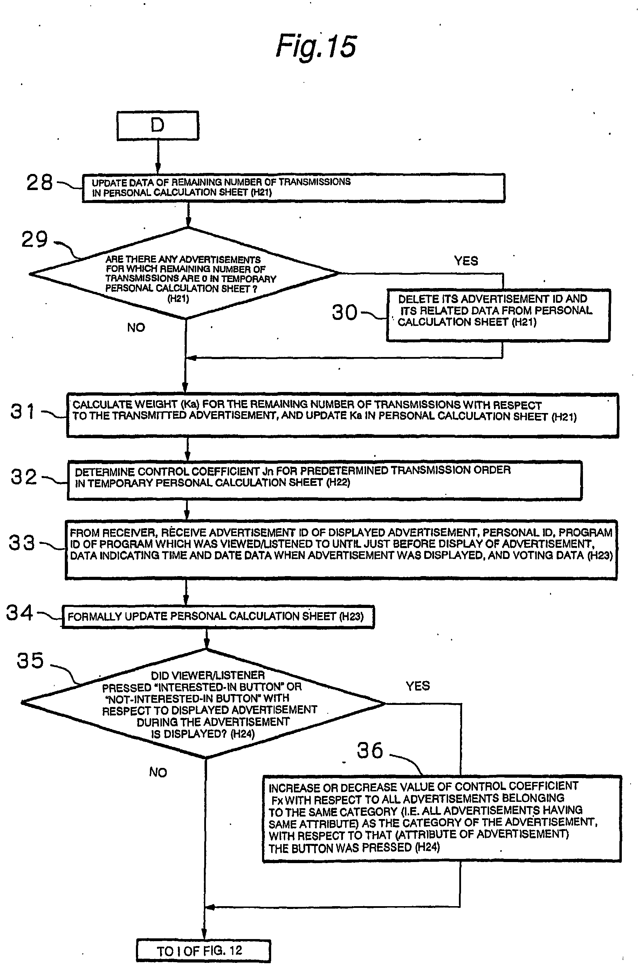

The process continues from step 27 of Fig. 14 to step 28 of Fig. 15.

H21. In step 28, for the transmitted advertisement, the calculation part 6 subtracts a value indicating the number of transmissions of the advertisement, that is, the assumed number of displays of the advertisement on the receiver (usually, one) from the remaining number of transmissions of the advertisement recorded on the temporary personal calculation sheet.

In step 29, the calculation part 6 checks the remaining number of transmissions of each advertisement which is stored in association with the temporary personal calculation sheet. If an advertisement for which the remaining number of transmissions is zero is found, the calculation part 6 deletes the advertisement ID of the advertisement and the data stored in association with the advertisement ID from the temporary personal calculation sheet, in step 30.

For each advertisement which is judged in step 29 that the remaining number of transmissions thereof is not zero, the calculation part 6 calculates a value representing the weight for the remaining number of transmissions (control coefficient Ka), and updates the value of the control coefficient Ka in the temporary personal calculation sheet in step 31.

H22. In step 32, the calculation part 6 updates the value representing the weight for the predetermined transmission order of each advertisement (control coefficient Jn) recorded on the temporary personal calculation.

For example, if an advertisement at the first place of the predetermined transmission order among the advertisements recorded on the personal calculation sheet only has selected and transmitted to the receiver 20, the calculation part 6 sets the control coefficient for the advertisement to the minimum value (1,000), and adds the above increment value to the control coefficient for each advertisement in the second place and lower in the predetermined display order to increase the value of the control coefficient Jn by the amount for raising one place. In this example, if CM1 is selected and transmitted, the control coefficient of CM1 is changed to the minimum value of 1,000, and 100 is added to each of the control coefficients of CM2 to CM6. As a result, the values of the control coefficients for CM2, CM3, CM4, CM5. CM6 become 1,500, 1,400, 1,300, 1,200, 1,100, respectively. The priority order of transmission for the next time based only on the updated control coefficient Jn is CM2, CM3, CM4, CM5, CM6 and CM1 from the top.

Also, for example, if the length of time of the advertisement frame is long, and the calculation part 6 sequentially selects a plurality of advertisements in the order of the priority order based on the control coefficient Jn and transmits these advertisements to the receiver 20, the calculation part 6 collectively recalculates the control coefficient Jn. For example, it is assumed that the advertisements are in the order of CM1, CM2, CM3, CM4, CM5 and CM6 from the highest to the lower values of the control coefficients Jn, and CM1 to CM3 are sequentially selected and transmitted in the order. In this case, the calculation part 6 moves CM1 to CM3 collectively to the last place in this order, and assigns control coefficients in the manner similar to the above. That is, the control coefficients of CM 1, CM2 and CM3 are set to 1,200, 1,100 and 1,000, respectively. Since each of the orders for CM4, CM5 and CM6 is raised up by three places, an increment value for the three places (300) is add to their original control coefficients, respectively.

Note that when the calculation part 6 uses a plurality of determination elements in determining a priority order of transmission of advertisements recorded on the temporary personal calculation sheet, other determination elements (one or more) may be prioritized. Thus, even if the advertisements are in the order of CM1, CM2, CM3, CM4, CM5 and CM6 from the one with a higher value of the control coefficient Jn, an advertisement having an intermediate control coefficient value Jn, for example, CM3 may be selected and transmitted earlier than others. Also, there may be a case that the data which instructs most preferential transmission is added to a certain advertisement ID recorded on the personal calculation sheet. For example, if the data instructing most preferential transmission is added to CM3, the calculation part 6 selects CM3 and transmits it most preferentially to the receiver 20 without taking any control coefficient value into consideration (i.e., even if the control coefficient value Jn of CM3 is not the maximum value). In these cases, the control coefficients Jn, which are in places higher than that of CM3, of the advertisements, that is, those of CM1 and CM2 in this example, are maintained as they are; the minimum value 1,000 is assigned to CM3; and the increment value 100 is added to the control coefficient Jn of each of the advertisements having the control coefficient Jn in a place lower than that of CM3, that is, CM4, CM5 and CM6 in this example. As a result, the priority order of the next transmission based only on this control coefficient becomes CM1, CM2, CM4, CM5, CM6 and CM3 from the top.

H23. The control part 21 of the receiver 20 reads the advertisement ID of the advertisement which was reproduced on the receiver, the personal ID, the program ID of the program which was viewed/listened to just before the advertisement was displayed, data of time and date when the advertisement was displayed, voting data, location data, etc., from the storage part 22, and transmits the data from the transmitting part 25 to the advertisement transmitting apparatus 1.

In step 33, the receiving part 8 of the advertisement transmitting apparatus 1 receives the above data and sends it to the history part 7. The history part 7 stores the received data, and sends the advertisement ID, personal ID and voting data in the received data to the calculation part 6.

The calculation part 6 comprehends that the advertisement corresponding to the advertisement ID received from the receiver 20 is actually displayed on the receiver 20.

In order to increase accuracy of calculation of the priority order of advertisements to be transmitted to each receiver, it is necessary to promptly reflect status of displaying of advertisements on the receiver, on each personal calculation sheet. In this embodiment, it is necessary for the advertisement transmitting apparatus 1 to promptly receive at least the advertisement ID, personal ID and voting data among pieces of data stored in the storage part 22 of the receiver 20. Therefore, the receiver 20 is programmed to transmit the above data to the advertisement transmitting apparatus 1 at the end or within a short period after the end of an advertisement frame.

However, as an alternative embodiment, if the apparatus is constructed in such a manner that the history data which is produced based on the advertisement transmission operations within the advertisement transmitting apparatus 1 only is used as data to be reflected on each personal calculation sheet, in other words, the data regarding actual display of advertisements on each receiver is not reflected, it is not necessary to receive history data from the storage part 22 of the receiver 20 for calculation of the priority order of each advertisement in the personal calculation sheet. However, if it is necessary to obtain detailed data to be used for later marketing, profit sharing, etc., the data regarding actual display of advertisements on each receiver may be necessary. Therefore, in such a case, it is configured that the data is stored in the storage part 22 of the receiver 20, and the transmitting side retrieves the data from the receiver 20 each time a predetermined period elapsed, for example.

In step 34, the calculation part 6 actually (formally) updates the personal calculation sheet, based on the received advertisement IDs. First, the calculation part 6 compares the advertisement IDs received from the receiver 20 and the advertisement IDs of the advertisements transmitted to the receiver 20. If these advertisement IDs coincide completely, the personal calculation sheet is updated by storing the temporary personal calculation sheet in place of the original personal calculation sheet.

If the advertisement IDs received from the receiver 20 and the advertisement IDs of the advertisements transmitted to the receiver 20 do not coincide partially (for example, in a case that three advertisements are transmitted, a situation that advertisements IDs for two advertisements only are returned from the receiver, a situation that although the advertisement IDs for three advertisements are returned from the receiver 20, one of the returned advertisement IDs does not coincide with any advertisement IDs of the transmitted three advertisements, etc.), the temporary personal calculation sheet is discarded. Next, the calculation part 6 comprehends that the advertisements for which advertisement IDs coincide with the returned advertisement IDS are displayed, and updates the original personal calculation sheet based on the received data.

Also, in the case that the temporary personal calculation sheet is discarded, if the calculation part 6 has received an advertisement ID of an advertisement to which the data indicating most preferential transmission is attached, the calculation part 6 deletes from the original personal calculation sheet the data indicating most preferential transmission having been added to the advertisement ID of the advertisement. On the other hand, if the calculation part 6 has not received an advertisement ID of an advertisement which should be transmitted most preferentially, the calculation part 6 leaves the data indicating most preferential transmission added to the advertisement ID of the advertisement in the original personal calculation sheet.

Also, if no advertisement ID is received from the receiver 20, or if the advertisement IDs received from the receiver 20 and the advertisement IDs of the advertisements transmitted to the receiver 20 do not coincide at all, the temporary personal calculation sheet is discarded and the original personal calculation sheet is maintained as it stands.

The above process includes a procedure for confirming that an advertisement is actually displayed on the receiver 20, in other words, a procedure to receive an advertisement ID of an advertisement displayed on the receiver 20. However, in a construction in which it is regarded that all of the advertisements transmitted from the advertisement transmitting apparatus 1 are displayed on the receiver 20, that is, it is not confirmed whether or not the transmitted advertisements are actually displayed on the receiver 20, updating of a personal calculation sheet is performed directly on the personal calculation sheet by using the data which is produced based on the advertisement transmission operation within the advertisement transmitting apparatus 1 and stored therein. In other words, no temporary personal calculation sheet is produced. Therefore, in such a case, the process for making a temporary personal calculation sheet, the process for receiving a personal ID and an advertisement ID from a receiver 20 and comparing the received advertisement ID and the advertisement ID of the transmitted advertisement, etc., are not required.

H24. In step 35, the calculation part 6 of the advertisement transmitting apparatus 1 checks the received voting data. If the voting data indicates that the viewer/listener voted "interested-in," the calculation part 6 increases the control coefficient Fx for all advertisements having the same advertisement attribute as the advertisement attribute of the advertisement which was voted "interested-in," among all advertisements recorded on the personal calculation sheet, in step 36. To the contrary, if the voting data indicated that the viewer/listener voted "not interested-in," the calculation part 6 decreases the control coefficient Fx for all advertisements having the same advertisement attribute as the advertisement attribute of the advertisement which was voted "not interested-in," among all advertisement recorded on the personal calculation sheet, in step 36. If, after checking the voting data received from the receiver 20, it is found that nothing is recorded, the operation returns to step 4 of Fig. 12 and a similar operation to the above is performed.

For example, in the example of Fig. 2, the advertisement attribute of the advertisements CM1, CM2 and CM4 is F1 (for example, car), the advertisement attribute of CM3 and CM6 is F2 (for example, food), and the advertisement attribute of CM5 is F3 (for example, cosmetic). In addition, the initial value, the upper limit value and the lower limit value of the control coefficient Fx are set at 50, 100 and 0, respectively.

If an viewer/listener voted "interested-in" through the input part 23 of the receiver 20 when the viewer/listener views/listens to CM1, and the calculation part 6 of the advertisement transmitting apparatus 1 received the voting data and processed, the numerical value for the advertisement attribute F1 to which CM1 belongs increases by a predetermined value, and the priority of the advertisement becomes higher than that of other advertisements having other advertisement attributes. That is, the priorities of the advertisements of cars, CM1, CM2 and CM4 become higher than those of CM3, CM5 and CM6. If a viewer/listener voted "not interested-in" when the viewer/listener views/listens to CM3 which is an advertisement of food, and the calculation part 6 of the advertisement transmitting apparatus 1 has received the voting data and processed it, the numerical value for the advertisement attribute F2 to which CM3 belongs decreases by a predetermined value, and the priority of the advertisement becomes lower than that of other advertisements having other advertisement attributes. That is, the priorities of the advertisements of foods CM3 and CM6, become lower than those of CM1, CM2, CM4 and CM5. If voting is not made while an advertisement is displayed, voting data will not be generated, and voting data will not be included in the data which is transmitted from the receiver 20 to the advertisement transmitting apparatus 1; therefore, the control coefficient Fx for the advertisement attribute for the advertisement does not change.

In addition, to an advertisement that is recorded anew on the personal calculation sheet, the calculation part 6 assigns a corresponding present control coefficient Fx in the personal calculation sheet. For example, if the advertisement attribute of an advertisement CMX that is recorded anew on the personal calculation sheet is F1, and the value of the present control coefficient Fx for the advertisement attribute F1 on the personal calculation sheet is 70, value 70 is assigned to the advertisement attribute F1 of the advertisement CMX.

After step 36, the operation step returns to step 4 of Fig. 12, and performs operations similar to those described above.

The advertisement transmitting apparatus 1 stores a computer program for performing the above steps.

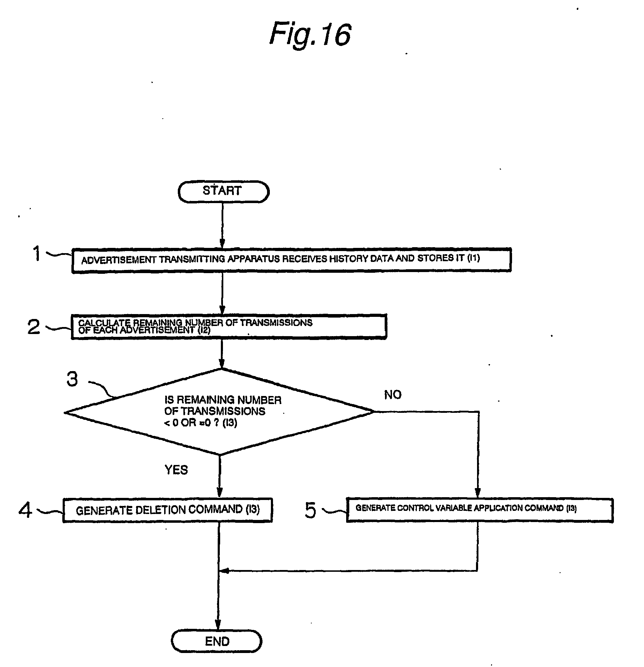

Fig. 16 describes steps on the transmitting side, that is, on the advertisement transmitting apparatus 1, for processing and controlling history data.

In the following, a case wherein data relating to advertisements stored in the advertisement transmitting apparatus 1 is updated by using history data transmitted from the receiver 20 will be described.

I. Steps for processing and controlling history data on the receiving side:

I1. When an advertisement is registered with the advertisement management part 3 of the advertisement transmitting apparatus 1, the history part 7 receives the advertisement ID of the advertisement and additional data (data such as that shown in Fig. 1) from the advertisement management part 3 and prepares a storage location for storing the history data of the advertisement.

In step 1, the receiving part 8 of the advertisement transmitting apparatus 1 receives from the receiver 20 data including advertisement IDs of respective advertisements displayed on the receiver 20, the personal ID of the viewer/listener of the receiver 20, program IDs of respective programs which were viewed/listened to just before respective advertisements are displayed, data of times and dates that the respective advertisements are displayed, locations data, voting data, etc., which is stored in the storage part of the receiver 20 (refer to above item E1).

Based on the received data, the history part 7 produces history data including the number of displays of respective advertisements, the receivers of the advertisements (indicating which viewers/listeners viewed/listened to respective advertisements), times and dates that the respective advertisements were viewed/listened to, programs which were viewed/listened to just before the respective advertisements were displayed, etc.; and stores the history data in the assigned location in association with the respective advertisement IDs. The data included in the history data is updated each time when new data is received from the receiver 20.

The history data of each advertisement includes data received from all receivers. For example, the display number data included in history data of a certain advertisement indicates the total number of displays of the advertisement on all receivers to which the advertisement is assigned and, when new data is received from a certain receiver, the number of displays indicated by the display number data is increased by the amount (number) indicated by the received data.

I2. In step 2, the history part 7 sends the display number data (total number of displays on all receivers) of the respective advertisement to the advertisement management part 3 at a predetermined timing (for example, when the history part 7 received new data and updated the history data). The advertisement management part 3 compares each piece of the display number data received from the history part 7 and each total display number (KT of Fig. 1) which was defined when each advertisement was ordered; and obtains the remaining number of displays of each advertisement, that is, the remaining number of transmissions until the total number of transmissions is reached.

Based on the remaining number of transmissions obtained in above item I2, the advertisement management part 3 produces data for controlling transmission of each advertisement.

I3. In step 3, the advertisement management part 3 checks the remaining number of transmissions of each advertisement. If the remaining number of transmissions becomes zero or less than zero, the advertisement management part 3 produces a deletion command for the advertisement and sends the command together with the advertisement ID of the advertisement to the instruction part 5, in step 4 (refer to above item E).

In above step 3, if it is determined that the remaining number of transmissions is not zero, the control variable of the advertisement is determined and a control variable application command including the determined control variable is generated in step 5 (refer to above item G).

The advertisement management part 3 first calculates the number of transmissions per a unit time, which is required in order to complete the total number of displays, that is, the total number of transmissions within the remaining display period.

The advertisement management part 3 obtains the number of displays per a unit time (the actual number of displays) from the number of times an advertisement was displayed in a certain period. For example, the number of times the advertisement was displayed on all receivers during a period spanning from the date when transmission of the advertisement is started until the date when the history data was obtained is divided by a unit time (for example, the number of days during the period) to find the number of times the advertisement was displayed in one unit of time. Then, the value of the actual number of displays and the value of the required number of transmissions per the unit time to complete the total transmission number (a required transmission number) are compared; and, if the required transmission number is larger, a value of a control variable $Xn$ is determined so as to make the priority order of the advertisement higher, and a control variable application command including the determined control variable is sent to the instruction part 5.

In an embodiment that the advertisement management part 3 automatically determines how the values of control variables ($Xn$) of control coefficients to be changed, the advertisement management part 3 is provided with a program for determining values of control variables according to situations. For such a program, for example, data indicating a control coefficient(s) for which control variable value(s) should be changed and how the control variable value(s) should be changed in each situation is empirically produced, and such data is added to the program. Also, after time has passed since the apparatus was operated, data for determining the values of the control variables is generated based on the obtained statistical data and added to the program.

Also, it is also possible, according to the situation, to input data indicating a value of control variable

($Xn$) and a control coefficient to which the value of control variable is applied from the external instruction input part via the advertisement management part 3 to the instruction part 5.

For example, in the example of Fig. 2, it is assumed that the priority order of an advertisement having a short remaining display period is desired to be made higher. In this case, the value of the control variable $X1$ included in the control variable application command is increased. For example, the value of the control variable $X1$ applied to the control coefficient Tx of Fig. 2 is set to 10. When the control coefficient Tx is multiplied by the control variable 10, determination elements (Sum) of CM1 to CM6 become 9,750, 8,840, 5,480, 4,530, 6,340 and 2,220, respectively. The priority order based on these determination elements is CM1, CM2, CM5, CM3, CM4 and CM6 from the top. In this example, the priority order of CM1 which has the shortest remaining display period (i.e., having the largest value of the control coefficient Tx) becomes the first place, and the priority order of CM2 having the second shortest remaining display period becomes the second place. Although the newly determined priority order of CM1 and CM2 is the same as the original priority order, it is in the order of shortness of the remaining display period. The priority order of the advertisement CM5 which has the third shortest remaining display period is up one rank from the fourth place to the third place, and the priority order of the advertisement CM3 having the fourth shortest remaining display period is down one rank from the third place to the fourth place. In order to attach more importance to an advertisement having a short remaining period, a larger control variable is multiplied to the control coefficient thereof.

The way in which a priority order goes up changes depending on a control variable ($Xn$) to multiply.

The advertisement management part 3 and history part 7 respectively store computer programs for performing the above steps.

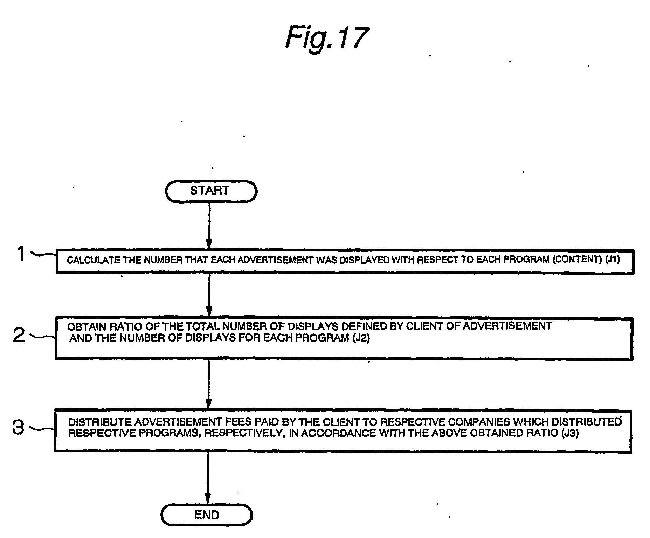

Fig. 17 describes steps on the transmitting side, that is, the advertisement transmitting apparatus 1, for generating statistical data based on the history data.

J. Steps on the transmitting side for generating statistical data based on the history data:

J1. In step 1, after a predetermined time has passed since the history part 7 received an advertisement ID and a deletion command from the instruction part 5 (for example, after a time sufficient to receive complete data regarding display of the advertisement from all receivers), the history part 7, based on the data stored therein, starts generation of statistical data which is used for later marketing, profit sharing, etc., of the advertisement corresponding to the advertisement ID. The data stored in the history part 7 includes the initial data of the advertisement copied from the advertisement management part 3 (data shown in Fig. 1), the history data produced based on the data received from the receivers 20, and the history data produced based on the data received from the advertisement data storage part 4. In this example, the history part 7 uses the history data produced based on the data received from the receivers 20, when it generates the statistical data.

If program data which indicates a program (a content, a site) which was watched/listened to until just before the advertisement is watched/listened to is included in the history data, the history part 7 generates data indicating the number of displays of the advertisement in relation to respective programs (data indicating the number of displays for each program).

The statistical data to be generated for the advertisement includes data such as the advertisement ID, personal IDs of all viewers/listeners who watched/listened to the advertisement, times and dates that the advertisement was displayed, the number of displays on all receivers, the number of displays for each program, the location received, etc., and data such as the display period, the audience group specifying categories, the total number of displays, the preferential transmission times, etc., indicated in Fig. 1.

Also, if the transmitting side is a broadcasting company which broadcasts programs on a predetermined channel, and if the advertisement transmitting apparatus is used for inserting an advertisement(s) in an advertisement frame in a program under broadcast, and if program data indicating a channel number(s) which was watched/listened to until just before the advertisement is watched/listened to on the receivers 20 is included in the history data; data indicating the number of displays of the advertisement on respective channels (data indicating the number of times of display for each channel) is generated.

After completion of generation of the statistical data of the advertisement, the history part 7 deletes other data relating to the advertisement (the history data, the copy of data of Fig. 1, etc.).

J2. In step 2, the history part 7 reads out the total number of displays (KT) from the generated statistical data, and obtains, for each program, a ratio of the total number of times of display and the number of times the advertisement was displayed in relation to the program.

Also, for example, in the case that the total number of displays of the advertisement in all the receivers exceeds the total number of displays defined by the client (sponsor), or becomes less than the total number of displays defined by the client due to discontinuation of the advertisement or the like, it may be configured to obtain a ratio of the number of times the advertisement was displayed in all the receivers and the number of times the advertisement was displayed in relation to each program (content, site).

Also, if the transmitting side is a broadcasting company which broadcasts programs on a predetermined channel, the total number of displays (KT) is read out from the generated statistical data and, for each channel, a ratio of the total number of times of displays and the number of times the advertisement was displayed in relation to the channel.

J3. In step 3, the advertisement fee paid by the sponsor is divided and distributed, in accordance with the above ratio, to each company which provided each program (a company which provided a content, a company which opens and operates a site, a broadcasting company which uses a predetermined channel for broadcasting),

The history part 7 of the advertisement transmitting apparatus 1 stores a computer program for performing the above steps.

A series of steps, from receipt by the advertisement transmitting apparatus 1 of a request for an advertisement, through transmission of the advertisement to each receiver 20 for display, to distribution of advertisement fees to each program providing company after displays of the advertisement, are completed as described above.

A second example of operations of an advertisement transmitting apparatus will now be described.

In this example, as calculation elements of a priority order of transmission of advertisements, a display period (control coefficient Tx), an audience group specifying category (control coefficient Cpq), a predetermined transmission order (control coefficient Jn), an upper limit transmission number (control coefficient Ku), a preferred transmission time (control coefficient Hx), and a taste of a viewer/listener (advertisement attribute) (Fx) are used. That is, in the second example, the upper limit transmission number (control coefficient Ku) is used instead of the averaged transmission number (control coefficient Ka) used in the first example.

The averaged transmission number (Ka) for an advertisement in the above first example is the same value for all the people (receivers) who are assigned the advertisement. That is, it does not take into consideration a weight for an audience group to which a listener/viewer of each receiver belongs. For example, in the example of Fig. 1, a sponsor assigns, in the category Cdx of the audience group specifying element of CM3, 80 to the category Cd1, 10 to the category Cd2, and 10 to the category Cd3. This means that the sponsor attaches importance to an audience group belonging to the category Cd1, an audience group belonging to the category Cd2 and an audience group belonging to the category Cd3 at the ratio of 80 to 10 to 10. However, whether CM3 is assigned to a listener/viewer belonging to the category Cd1 (hobby A) to which importance is attached, or assigned to a listener/viewer belonging to the category Cd3 (hobby C) to which less importance is attached, the averaged transmission number assigned to each listener/viewer, that is, the initial value of the control coefficient indicating a weight is the same. Therefore, the viewer/listener to whom importance is attached and the viewer/listener to whom importance is not attached are equally induced to see the advertisement. This is inconvenient when effects and efficiency of an advertisement are taken into consideration.

Therefore, in the second example, the number of transmissions that takes into consideration the degree of coincidence between an audience group targeted by each advertisement and an audience group to which each listener/viewer belongs, that is, the upper limit transmission number (control coefficient Ku) is used, instead of the averaged transmission number (control coefficient Ka).

The second embodiment is similar to the first embodiment except that the upper limit transmission number (control coefficient Ku) is used instead of the averaged transmission number (control coefficient Ka). Therefore, if a concept of a method of determining the priority order for transmitting advertisements is shown in the form of a table, it will become similar to the table shown in Fig. 2. That is, the table of the second embodiment will be a table in which the calculation element name "averaged transmission number" and the control coefficient name "Ka" of Fig. 2 are replaced by "upper limit transmission number" and "Ku."

Since the operations of the second embodiment and those of the first embodiment of the advertisement transmitting apparatus have many points in common, only different points are described.

A'. Audience registration steps at the advertisement transmitting apparatus 1:

The steps of item A' are those corresponding to the steps described in item A of the above first embodiment (the steps shown in Fig. 5), and the steps similar to the steps described in item A are performed. The customer management part 2 of the advertisement transmitting apparatus 1 stores a computer program for performing the steps of item A'.

B'. Audience personal data analyzing step at the transmitting side:

The steps of item B' are those corresponding to the steps described in item B of the above first embodiment (the steps shown in Fig. 6), and the steps similar to those described in item B are performed. The customer management part 2 of the advertisement transmitting apparatus 1 stores a computer program for performing the steps of item B'.

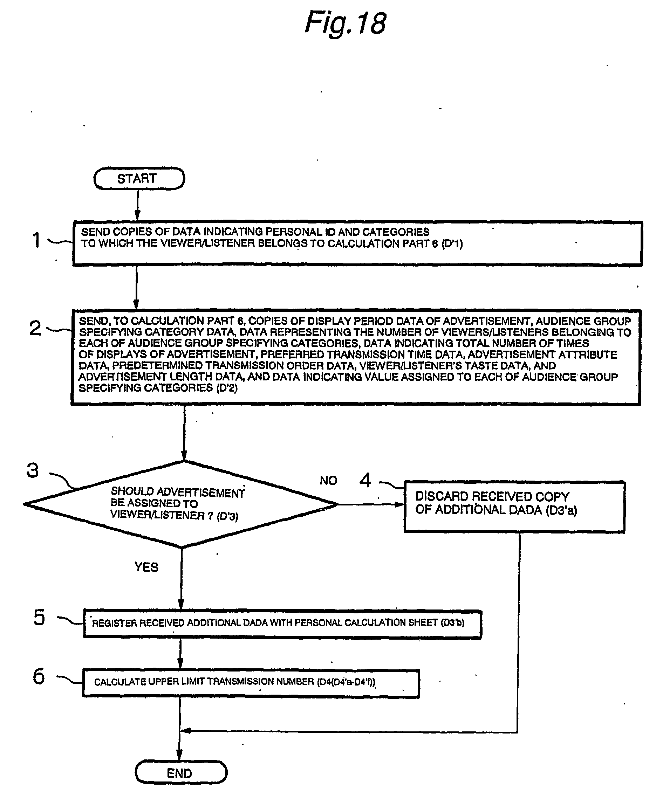

Fig. 18 is a figure corresponding to Fig. 7, and describes steps on the transmitting side, which will be described in item C' below, for preparing data regarding advertisements.

C'. Steps for preparing data relating to advertisements at the transmitting side:

The steps of item C' are those corresponding to the steps described in item C of the above first embodiment (the steps shown in Fig. 7), and the steps similar to those described in item C are performed. The advertisement management part 3 of the advertisement transmitting apparatus 1 stores a computer program for performing the steps of item C'.

D' Steps for making a personal calculation sheet on the transmitting side:

The steps of item D' correspond to the steps described in item D of the above first embodiment (the steps of Fig. 8). However, the second embodiment is different from the first embodiment in that the averaged transmission number (control coefficient Ka) used in the first embodiment is replaced by the upper limit transmission number (control coefficient Ku). As such, procedures relating to calculation of the upper limit transmission number is different from the procedures in the first embodiment.

D1'. In step 1, a step similar to the step described in item D1 of the first embodiment is performed.

D2'. In step 2, for each classification (classification Cax, classification Cbx, classification Ccx, and classification Cdx of Fig. 1), the advertisement management part 3 calculates the sum of the values assigned by the sponsor to all categories included in the classification (for example, categories Ca1 to Cam in the case of classification Cax). In this example, the sum of the values assigned to each classification, in other words, the sum of the values assigned to categories included in a classification, is 100.

The advertisement management part 3 transfers a copy of additional data of the advertisement, that is, the display period data, the audience group specifying category data, data of the number of viewers/listeners for each category of the audience group specifying categories, the total display number data (corresponding to total transmission number data), the preferred transmission time data, the advertisement attribute data, the predetermined transmission order data, the viewer/listener's preference data, and advertisement's duration data, to the calculation part 6. The advertisement management part 3 further adds data indicating the value assigned to each category of the audience group specifying categories (in this example, 100) to the additional data.

D3'. As steps 3, 4 and 5, steps similar to the steps described in items D3, D3a and D3b of the first embodiment are performed.

In the second embodiment, it is also assumed that data indicating categories Ca1 (region A), Cb1 (male), Cc1 (19 years old or under) and Cd3 (hobby C) is included in the personal data.

In the second embodiment, data relating to an upper limit transmission number of an advertisement which will be described in the following step (D4'), that is, data of an upper limit transmission number (initial value), and data indicating the number of times the advertisement was transmitted are recorded, in place of the averaged transmission number in the first embodiment. However, in the personal calculation sheet, a coefficient value (Ku), which is calculated by applying a predetermined coefficient to a remaining number of transmissions until the upper limit transmission number, is recorded.

D4'. In step 6, the calculation part 6 calculates the upper limit transmission number (the value which is the basis of the control coefficient Ku).

The calculation part 6 obtains a value of the upper limit transmission number for each advertisement recorded on the personal calculation sheet based on, among the data stored in association with the personal calculation sheet, the data of the total number of display (KT), the audience group specifying category data (Ca1, Cb1, Cc1 and Cd3 in this example), and data indicating the number of viewers/listeners of each category (Sa1, Sb1, Sc1 and Sd3) stored in association with the audience group specifying data. The upper limit transmission number indicates an upper limit of the number of transmissions to the receiver 20. When the remaining number of transmissions until the upper limit number of transmissions becomes zero, the control coefficient Ku becomes zero. An advertisement for which the control coefficient Ku has become zero is not transmitted any more.

Steps for calculating the upper limit transmission number for one advertisement recorded on the personal calculation sheet, which take into consideration a degree of coincidence between an audience group targeted by each advertisement and an audience group of a listener/viewer of each receiver, which is one characteristic of the present invention, will be hereinafter described. The steps are performed in the calculation part 6.

D4'a. The values of the control coefficient Cpq's of the audience group specifying category in the personal calculation sheet (which is similar to that of Fig. 2) are read out. In this example, the listener/viewer belongs to categories Ca1, Cb1, Cc1 and Cd3, and the personal calculation sheets records data of these control coefficients. As such, for CM 1, control coefficients 40, 80, 10 and 10 assigned to Ca1, Cb1 Cc1 and Cd3 are read out.

D4'b. The control coefficient (Ca1 Cb1, Cc1 Cd3) for each category of the audience group specifying categories in the personal calculation sheet is divided by the total of numerical values (100 in this example) assigned to all the categories included in a main category including the category, thereby finding a weight of the assigned numerical values as a ratio (RCpq). In this example, the total of the numerical values assigned to all the categories in each main category is 100, so that Cpq/100 is the ratio of the assigned numerical values.

$$Rpq = Cpq/100$$

Regarding CM1, the total of four values of ratio is found, namely, Ra1 = 0.4 (= Ca1/100 = 40/100) for the category Ca1, Rb1 = 0.8 for the category Cb1, Rc1 = 0.1 for the category Cc1, and Rd3 = 0.1 for the category Cd3.

D4'c. The contracted total number of displays of an advertisement (the total number of transmissions) (KT) is multiplied by each Rpq found in the above step D4'b individually. From this calculation, a value associating the total number of transmissions of an advertisement KT with a degree of coincidence of a listener/viewer with respect to the advertisement (KRpq) is found.

$$KRpq = KT \times Rpq = KT \times (Cpq/100)$$

For example, if KT of CM1 is 10,000, four values of KRpq, that is, KRa1 = 4,000 (= 10,000 x 0.4), KRb1 = 18,000 (=10,000 x 0.8), KRc1 = 1,000 (=10,000 x 0.1) and KRd3 = 1,000 (=10,000 x 0.1) are found.

D4'd. The number of all listeners/viewers belonging to each category (Spq) which is stored in association with each category of the audience group specifying categories in the personal calculation sheet (or, the number of receivers of all listeners/viewers belonging to the category) is read out.

Since this listener/viewer belongs to the categories Ca1, Cb1, Cc1 and Cd3, the values of Sa1, Sb1, Sc1 and Sd3 are associated therewith and stored in the personal calculations sheet. Consequently, the values of Sa1, Sb1, Sc1 and Sd3 are read out.

D4'e. Each value of KRpq, which is found in the above step of D4'c by taking the degree of coincidence of each category to which the listener/viewer belongs into consideration, is individually divided by the value of Spq which corresponds to each category and is extracted in the above step of D4'd. By this calculation, a plurality of the numbers of transmissions of an advertisement (Kc) to each receiver, which takes the number of viewers/listeners (the number of receivers) belonging to each category into consideration, is found.

$$Kc = KRpq/Spq = KT \times (Cpq/100)/Spq$$

In this example, four values of Kc are found. For example, if Sa1 is 500, Sb1 is 200, Sc1 is 1,000 and Sd3 is 5,000, 8 (= KRa1/Sa1 = 4,000/500), 40 (= KRb1/Sb1 = 8,000/200), 1 (= KRc1/Sc1 = 1,000/1,000) and 0.2 (= KRd3/Sd3 = 1,000/5,000) are found as the four values of Kc.

D4'f. The largest value among the plurality of values of Kc calculated in the above step of D4'e is selected, and the selected value is set to be the final value of Kc. In the above example, the value of Kc is set to 40.

The upper limit transmission number (Ku") that takes a degree of coincidence into consideration is calculated by multiplying this value by an appropriate coefficient (for example, a coefficient indicating room that is statistically found).

$$Ku" = Kc \times coefficient$$

$$=(K \times (Cpq/100)/Spq) \times coefficient$$

It should be understood that the value of the control coefficient Ku which is recorded on the personal calculation sheet is that which is obtained by applying a coefficient to a remaining number of transmissions until the upper limit transmission number (Ku") obtained in the above calculation. Calculations similar to the above are performed for all advertisements recorded on the personal calculation sheet.

Also, when a new person made a contract to become a subscriber and is registered with the customer management part 2, and/or when a subscriber terminated the contract and deregistered his registration with the customer management part 2, the number of viewers/listeners belonging to each category changes. As the number of viewers/listeners changes, the customer management part 2 updates the number of viewers/listeners belonging to each category of the audience group specifying categories, and notifies the calculation part 6 that the number of viewers/listeners is updated. Upon receiving notification of increase or decrease of the number of subscribers, the calculation part 6 re-calculates the upper limit transmission number for the advertisement. For this calculation, the calculation part 6 requests the advertisement management part 3 to provide data indicating the remaining number of transmissions until the total display number KT of the advertisement, and data indicating the number of viewers/listeners (the updated number of viewers/listeners) belonging to each category of the audience group specifying categories recorded on the personal calculation sheet, obtains the same, and newly calculates the upper limit transmission number.

The personal calculation sheet also records the value (Ct) of degree of coincidence between a listener/viewer and each advertisement, the value (Sum) of sum of the control coefficients for each advertisement, and the priority order (N) assigned to each advertisement based on the value of sum (Sum). In the second embodiment, the value (Sum) of sum of the control coefficients in the personal calculation sheet in the second embodiment is obtained by a following formula

$$Tx \times X1 + Ct + Jn \times X6 + Ku \times X7 + Hx \times X8 + Fx \times X9$$

(in the first embodiment, Ka x X7 is included instead of Ku x X7), and the priority order (N) is determined on the basis of the this value of sum.

The advertisement transmitting apparatus 1 performs the above steps for a newly accepted advertisement. Also, an advertisement will not be recorded on the personal calculation sheet if the advertisement is already recorded on the personal calculation sheet.

The calculation part 6 of the advertisement transmitting apparatus 1 stores a computer program for performing the above steps.

E'. Steps for producing command signals relating to deletion of an advertisement on the transmitting side:

The steps of item E' are steps corresponding to the steps described in item E of the above first embodiment (the steps of Fig. 9), and are performed in a similar manner to the steps described in item E. The advertisement management part 3, advertisement data storage part 4, instruction part 5, calculation part 6, and history part 7 respectively store computer programs for performing the steps of item E'.

F'. Steps for producing command signals relating to most preferentially transmitting an advertisement, on the transmitting side:

The steps of item F' are steps corresponding to the steps described in item F of the above first embodiment (the steps of Fig. 10), and are performed in a similar manner to the steps described in item F. The advertisement management part 3, instruction part 5, calculation part 6, and transmitting part 9 respectively store computer programs for performing the steps of item F'.

G'. Steps for producing command signals relating change of the values of control variables applying to the control coefficients, on the transmitting side:

The steps of item G' are steps corresponding to the steps described in item G of the above first embodiment (the steps of Fig. 11), and are performed in the similar manner as the steps described in item G. However, the second embodiment is different in that the control coefficient Ku is used instead of the control coefficient Ka. The advertisement management part 3, instruction part 5, and calculation part 6 respectively store computer programs for performing the steps of item G'.

Like the first embodiment, the processing relating to deletion of an advertisement described in above item E', the processing relating to most preferentially transmit an advertisement described in above item F', and the processing relating to change a control variable described in above item G' are respectively performed at any time when required.

H'. Steps for determining the priority order of advertisements for each of the viewers/listeners, and transmitting the advertisements to a receiver of each of the viewers/listeners:

The steps of item H' correspond to steps 1-36 (step 1 of Fig. 12 to step 36 of Fig. 15) described in item H of the above first embodiment. However, the second embodiment is different from the first embodiment in that the averaged transmission number (control coefficient Ka) used in the first embodiment is replaced by the upper limit transmission number (control coefficient Ku). As such, procedures relating to the upper limit transmission number is different from the procedures in the first embodiment.

H1'. The step 1 corresponds to step 1 of item H1 (step 1 of Fig. 12). However, in the second embodiment, the upper limit transmission number (control coefficient Ku) is used instead of the averaged transmission number (control variable Ka) used in the first embodiment.

In step 1, the calculation part 6 of the advertisement transmitting apparatus 1 determines an initial value of the value representing the weight regarding the upper limit transmission number of an advertisement (control coefficient Ku), based on the upper limit transmission number data stored in association with the advertisement assigned to the registered listener/viewer, that is, in association with the advertisement ID recorded on the personal calculation sheet corresponding to the listener/viewer. The control coefficient Ku is obtained by multiplying by a coefficient a remaining number of transmissions until the upper limit number of transmissions is completed (Ku = a remaining number of transmissions x a coefficient). For example, if it is desired for the value of the control coefficient Ku to be the same as the value of the remaining number of transmissions, the coefficient to be multiplied to the remaining number of transmissions will be set to 1 and the control variable X7 to be applied will be set to 1.

Each time the advertisement is transmitted, 1 is subtracted from the remaining number of transmissions. When the remaining number of transmissions becomes 0, the control coefficient becomes 0. The advertisement for which control coefficient Ku reached 0 will not be transmitted.

For example, when the values of the control coefficient Ka is 40 for CM1, 100 for CM2, 50 for CM3, 40 for CM4, 70 for CM5, and 30 for CM6. In the case that the calculation part 6 determines a priority order of advertisements based only on the values of the control coefficient Ku at this point, the priority order is CM2, CM5, CM3, CM1 and CM4, and CM6 from the top.

H2'. Step 2 corresponds to step 2 described in item H2 (step 2 of Fig. 12), and the step similar to the step described in item H2 is performed.

H3'. Step 3 corresponds to step 3 described in item H3 (step 3 of Fig. 12), and the step similar to the step described in item H3 is performed.

H4'. Step 4 corresponds to step 4 described in item H4 (step 4 of Fig. 12), and the step similar to the step described in item H4 is performed.

H5'. Step 5 corresponds to step 5 described in item H5 (step 5 of Fig. 12), and the step similar to the step described in item H5 is performed.

H6'. Steps 6 and 7 correspond to steps 6 and 7 described in item H6 (steps 6 and 7 of Fig. 12), and the steps similar to the steps described in item H6 are performed.

H7'. Step 8 corresponds to step 8 described in item H7 (step 8 of Fig. 12), and the step similar to the step described in item H7 is performed.

H8'. Step 9 corresponds to step 9 described in item H8 (step 9 of Fig. 13), and the step similar to the step described in item H8 is performed.

H9'. Step 10 corresponds to step 10 described in item H9 (step 10 of Fig. 13), and the step similar to the step described in item H9 is performed.

H10'. Step 11 corresponds to step 11 described in item H10 (step 11 of Fig. 13), and the step similar to the step described in item H10 is performed.

H11'. Steps 12 and 13 correspond to steps 12 and 13 described in item H11 (steps 12 and 13 of Fig. 13), and the steps similar to the steps described in item H12 are performed.

H12'. Steps 14 and 15 correspond to steps 14 and 15 described in item H12 (steps 14 and 15 of Fig. 13), and the steps similar to the steps described in item H12 are performed.

H13'. Steps 16, 17, 18 and 19 correspond to steps 16, 17, 18 and 19 described in item H13 (steps 16 and 17 of Fig. 13, steps 18 and 19 of Fig. 14), and the steps similar to the steps described in item H13 are performed. However, in the second embodiment, the remaining number of transmissions checked in step 16 is the remaining number of transmissions until the upper limit number of transmissions; and if it is determined in step 16 that the remaining number of transmissions is not 0, the calculation part 7 calculates the weight (control coefficient Ku) regarding the remaining number of transmissions of the advertisement and updates the value of the control coefficient Ku in the temporary personal calculation sheet.

H14'. Step 20 corresponds to step 20 described in item H14 (step 20 of Fig. 14), and the step similar to the step described in item H14 is performed.

H15'. Step 21 corresponds to step 21 described in item H15 (step 21 of Fig. 14), and the step similar to the step described in item H15 is performed. However, in the second embodiment, the control coefficient Ku is recorded on the personal calculation sheet in place of the control coefficient Ka; and the calculation part 6 reads out all control coefficients Tx, Cpq (Ca1, Cb1, Cc1, Cd3), Jn, Ku, Hx, Fx for each advertisement in the temporary personal calculation sheet.

H16'. Step 22 corresponds to step 22 described in item H16 (step 22 of Fig. 14), and the step similar to the step described in item H16 is performed. However, in the second embodiment, the control coefficient Ku is recorded on the personal calculation sheet in place of the control coefficient Ka; and the calculation part 6 applies the control variables (Xn) to the control coefficients (Tx, Cpq, Jn, Ku, Hx, Fx) and newly determines the control coefficients. That is, the calculation part 6 reads out the control variables X1 to X9 recorded on the temporary personal calculation sheet, and multiplies each control variable and its corresponding control coefficient, thereby calculating new values of control coefficients, $Tx' (= Tx \times X1)$, $Cax' (= Cax \times X2)$, $Cbx' (= Cbx \times X3)$, $Ccx' (= Ccx \times X4)$, $Cdx' (= Cdx \times X5)$, $Jn' (= Jn \times X6)$, $Ku' (= Ku \times X7)$, $Hx' (= Hx \times X8)$ and $Fx' (Fx \times X9)$.

H17'. Step 23 corresponds to step 23 described in item H17 (step 23 of Fig. 14), and the step similar to the step described in item H17 is performed.

H18'. Steps 24 and 25 correspond to steps 24 and 25 described in item H18 (steps 24 and 25 of Fig. 14), and the steps similar to the steps described in item H18 are performed. However, in the second embodiment, the control coefficient Ku is recorded on the personal calculation sheet in place of the control coefficient Ka; and the calculation part 6 totals the values of the control coefficients Tx', Ku', Jn', Hx', Fx' and Ct for each advertisement recorded on the temporary personal calculation sheet to find a determination element (determination element (Sum) in Fig. 2). Then, in step 25, based on the determination elements (Sum), the calculation part 6 determines a final priority order (priority order (N) in Fig. 2) of transmission of each of the advertisements in the order of larger value of the determination element.

H19'. Step 26 corresponds to step 26 described in item H19 (step 26 of Fig. 14), and the step similar to the step described in item H19 is performed.

H20'. Step 27 corresponds to step 27 described in item H20 (step 27 of Fig. 14), and the step similar to the step described in item H20 is performed.

H21'. Steps 28, 29, 30 and 31 correspond to steps 28, 29, 30 and 31 described in item H21 (steps 28, 29, 30 and 31 of Fig. 15), and the steps similar to the steps described in item H21 are performed. However, in the second embodiment, the remaining number of transmissions to be updated in step 28 is the remaining number of transmissions until the upper limit number of transmissions; and if it is determined in step 29 that the remaining number of transmissions is not 0, the calculation part 7 calculates the weight (control coefficient Ku) regarding the remaining number of transmissions of the advertisement and updates the value of the control coefficient Ku in the temporary personal calculation sheet in step 31.

H22'. Step 32 corresponds to step 32 described in item H22 (step 32 of Fig. 15), and the step similar to the step described in item H22 is performed.

H23'. Steps 33 and 34 correspond to steps 33 and 34 described in item H23 (steps 33 and 34 of Fig.

15), and the steps similar to the steps described in item H23 are performed. However, in the second embodiment, the control coefficient Ku is recorded on the personal calculation sheet in place of the control coefficient Ka. Therefore, when the calculation part 6 formally updates the personal calculation sheet based on a received advertisement ID in step 34, the control coefficient Ku is updated.

H24'. Steps 35 and 36 correspond to steps 35 and 36 described in item H24 (steps 35 and 36 of Fig. 15), and the steps similar to the steps described in item H24 are performed. If it is checked and determined in step 35 that nothing is recorded as the voting data, the process returns to step 4 of Fig. 12 and the operation similar to the above is performed. Also, after step 36, the process returns to step 4 and the operation similar to the above is performed.

The advertisement transmitting apparatus 1 stores a computer program for performing the above steps.

I'. Steps for processing and controlling history data on the receiving side:

The steps of item I' are steps corresponding to the steps described in item I of the above first embodiment (the steps of Fig. 16), and are performed in a similar manner to the steps described in item I. However, the second embodiment is different in that the upper limit transmission number (control coefficient Ku) is used instead of the averaged transmission number (control variable Ka) used in the first embodiment. The advertisement management part 3 and history part 7 respectively store computer programs for performing the steps of item I'.

J'. Steps on the transmitting side for generating statistical data based on the history data:

The steps of item J' are steps corresponding to the steps described in item J of the above first embodiment (the steps of Fig. 17), and are performed in a manner similar to the steps described in item J. The history part 7 of the advertisement transmitting apparatus 1 stores a computer program for performing the steps of item J'.

A series of steps of the second embodiment, from receipt of a request for an advertisement by the advertisement transmitting apparatus 1, through transmitting of the advertisement to each receiver 20 to display (show), to distributing of advertisement fees to each program broadcasting company after completion of display of the advertisement, are completed as described above.

In the above embodiments, for each listener/ viewer who is registered with the transmitting side, advertisements which are appropriate for the listener/viewer are assigned to him/her, a priority order of the advertisements assigned to the listener/viewer is determined, and the advertisements are transmitted to a receiver of the listener/viewer in the order of the priority order. However, if it is not necessary to precisely control transmission of advertisements, the advertisements may be transmitted to the receiver without determining the priority order of the advertisements. For example, the advertisements may be selected in a circulation manner in the order that respective advertisements were assigned to the listener/viewer, in alphabetic order in accordance with advertisement IDs given to the advertisements, etc., and transmitted to the receiver. In the above configuration, when advertisements are assigned to a viewer/listener, advertisements which are appropriate for the listener/viewer are selected. Therefore, improved effects and efficiency of an advertisement can be attained.

Also, in the above embodiments, when it is necessary to transmit a specific advertisement to a receiver of a listener/viewer for displaying it, an advertisement designation command is inputted from the external instruction input part of the advertisement transmitting apparatus 1 to the advertisement management part 3 (refer to item F). However, it is possible to construct the apparatus in such a manner that the advertisement designation command (including an advertisement ID of an advertisement which should be most preferentially transmitted and an instruction for instructing that the advertisement be transmitted most preferentially) is inputted to the advertisement management part 3 in a different manner.

As an example, a construction which may be used in a case, where the transmitting side is a broadcasting station which broadcasts programs on a predetermined channel, and advertisements are transmitted to each receiver during a time frame for advertisements while a program is being broadcasted, will be explained.

For checking whether each receiver is receiving a program being broadcasted, the transmitting side is provided with means for generating a confirmation signal to check whether the receiver 20 is receiving the broadcast, that is, whether the listener/viewer is watching/listening the program, and sending the confirmation signal to each receiver a little time before the starting time of the advertisement frame. The advertisement management part 3 of the advertisement transmitting apparatus 1 is provided with means for receiving from the receiver 20 an advertisement transmission request signal generated based on the confirmation signal, and transmitting advertisements to the receiver based on the received advertisement transmission request signal. The confirmation signal generated at the transmitting side includes data indicating the length of time of the advertisement frame (advertisement frame time data) and data indicating the starting time of the advertisement frame (advertisement frame starting time data). Further, the confirmation signal includes an advertisement designation command, if an advertisement which should be most preferentially displayed exists.

The receiver 20 is provided with means for generating an advertisement transmission request signal based on a confirmation signal received on the receiving part 25; and means for transmitting the generated advertisement transmission request signal to the receiving part 8 of the advertisement transmitting apparatus 1 at a timing that advertisements are received and displayed at the starting time of an advertisement frame, that is, a timing which concerns time for processing during which the advertisement transmitting apparatus 1 receives the advertisement transmission request signal, reads out advertisements, and transmits the advertisement to the receiver 20. The advertisement transmission request signal generated by the receiver includes the personal ID of the listener/viewer of the receiver, and the advertisement frame time data and the advertisement frame starting time data read out of the confirmation signal. Further, the advertisement transmission request signal includes an advertisement designation command, if the command is included in the confirmation signal.

The advertisement transmitting apparatus 1 receives the advertisement transmission request signal transmitted from the receiver 20 on the receiving part 8, and transfers it to the advertisement management part 3. The advertisement management part 3 reads the personal ID and advertisement designation command out of the advertisement transmission request signal, and sends the personal ID and advertisement designation command to the instruction part 5. The instruction part 5 sends the personal ID and advertisement designation command to the calculation part 6. The calculation part 6 checks the personal calculation sheet corresponding to the personal ID, and determines whether the advertisement ID indicated by the advertisement designation command is recorded or not. If it is determined that the advertisement ID of the advertisement which should be most preferentially transmitted is recorded in the personal calculation sheet, the calculation part 6 stores data indicating "the most preferential" in association with the advertisement ID in the personal calculation sheet.

Further, the advertisement management part 3 is provided with means for controlling the timing of transmission of advertisements which reads data indicating the starting time of advertisement frame out of the advertisement transmission request signal, and transmits the advertisement data to the receiver at a timing that the advertisements are showed on the receiver of the listener/viewer at the starting time of the advertisement frame. When the advertisement data is transmitted to the receiver 20, if an advertisement ID to which the data indicating "the most preferential" is added exists in the personal calculation sheet, the calculation part 6 most preferentially sends the advertisement ID and the personal ID corresponding to the personal calculation sheet to the advertisement data storage part 4. Upon receiving the advertisement ID and personal ID, the advertisement data storage part 4 most preferentially reads out the advertisement data corresponding to the advertisement ID, and most preferentially transmits the advertisement data to the receiver of the listener/viewer corresponding to the personal ID via the transmitting part 9. On the other hand, if an advertisement ID to which the data indicating "the most preferential" is added does not exist in the personal calculation sheet, the pieces of advertisement data of respective advertisements are transmitted to the receiver of the listener/viewer corresponding to the personal ID via the transmitting part 9, in the priority order determined by the calculation part 6. In a construction such as the above, it becomes possible to include an advertisement designation command in a confirmation signal which is transmitted to a receiver a little before a starting time of an advertisement frame in a program. As such, an advertiser is able to show a specific advertisement in relation to a program.

Also, in the above embodiments, when a listener/viewer pushes "an interested-in button" or "a not-interested-in button" of the input part 23 while an advertisement is reproduced on the receiver 20, that is, when the listener/viewer votes "interested-in" or "not-interested-in" for the advertisement, the voting data indicating that the listener/viewer voted "interested-in" or "not-interested-in" for the advertisement attribute of the advertisement is stored in the storage part 22, and the stored voting data is transmitted to the advertisement transmitting apparatus 1 at a predetermined timing. However, it is possible to construct the system in such a manner that the vote regarding "interested-in" or "not-interested-in" is automatically performed. For example, it may be constructed in such a manner that, when a listener/viewer watches/listens to a program belonging to a certain category (for example, car) on a receiver, the receiver receives a program attribute data added to the broadcasted program, automatically votes "interested-in" for an attribute of advertisements relating to the category of the program (in this case, advertisement of a car), and stores the voting data in the storage part 22. Also, it may be constructed in such a manner that, when an advertisement has been showed but was not reproduced until the end thereof, the receiver automatically votes "not-interested-in" like the above.

It should be reminded that the advertisements which are transmitted to a receiver of a listener/viewer are the advertisements ranked higher in the priority order determined by the advertisement transmitting apparatus 1. Therefore, if an advertisement which is transmitted to the receiver and displayed thereon is voted "interested-in," the value for preference of the viewer/listener (Fx), which is used in the calculation of the priority order, for the advertisement which is already ranked higher in the priority order is further increased. As a result, advertisements which are waiting for transmission (especially, advertisements having attributes different from the attribute) will be disfavored. Therefore, it may be desirable to set the weight value which is added based on the voting data of "interested-in," such that the added weight value does not extremely affect on the ranks in the priority orders of respective advertisements in the calculation of the priority order. The above is applicable to a case for voting "not-interested-in."

Also, in the above embodiments, the advertisement attributes (that is, categories to which articles advertised by advertisements belong) are defined based on major classifications such as car, medicine, food, etc. However, it is possible to more finely classify the advertisement attributes. For example, in the case of the advertisement attribute "car," advertisement attributes based on the makers of cars, such as those of Ford Motor Co., Chrysler Corp., General Motors Corp., etc., can be defined. Also, it is possible to define finer advertisement attributes based on the types of cars, such as sedan, sport, wagon, etc.

Also, it is possible to construct the apparatus in such a manner that advertisements are transmitted when a transmitting side wishes to transmit them, without considering whether or not the advertisements will be displayed on the receiver. For example, in a case in which advertisements are inserted in an advertisement frame set in a program broadcasted from a transmitting side such as a broadcasting station, if it is not taken into consideration as to whether or not the program is viewed/watched by a listener/viewer, that is, if it is not taken into consideration as to whether or not the advertisements to be inserted in the program are viewed/watched by a listener/viewer, an advertisement transmission request signal is transmitted from the transmitting side to the advertisement transmitting apparatus 1. In this case, for example, the advertisement transmission request signal is generated at the transmitting side a little before a starting time of an advertisement frame and transmitted to the advertisement transmitting apparatus. In the advertisement transmission request signal, data indicating the starting time of the advertisement frame, data indicating the length of time of the advertisement frame, data indicating a channel number in which the advertisement frame is set, etc., are included. The advertisement transmitting apparatus associates a personal ID of a listener/viewer and data indicating channel numbers which the listener/viewer is able to view/listen to and stores them in advance. When the advertisement transmitting apparatus has received the advertisement transmission request signal, it reads out a channel number from the signal, reads out personal IDs associated with the channel number, and transmits to respective receivers corresponding to the read-out personal IDs the advertisements assigned thereto at a timing that the advertisements are inserted in the advertisement frame from the starting time thereof. Also, in this case, as data to be reflected on each personal calculation sheet, history data generated based on advertisement transmission operations within the advertisement transmitting apparatus can be used.

Further, in the present invention, kinds of main classifications of audience group specifying category data and sub-classifications (categories) of each main classification can be appropriately increased or decreased if necessary. In addition, restrictions and rules that are applied when a sponsor (advertiser) assigns a numerical value (a weight value) to each category can be changed arbitrarily.

In addition, in the present invention, kinds of time slots of the preferred transmission time can be increased or decreased appropriately if necessary. In addition, restrictions and rules that are applied when a sponsor assigns a numerical value (a weight value) to each time slot can also be changed arbitrarily.

In addition, in determination of priority orders, there may be a case that a value of a control coefficient of a certain advertisement and a value of a control coefficient of another advertisement become the same and, thus, priority orders of these advertisements become the same. In such a case, the advertisement that was stored earlier is transmitted first, or the advertisement that has an ID number, which is attached to the advertisement, higher in place is transmitted first, for example.

In addition, in the present invention, it is possible to transmit both a sound signal and a picture (image, character) signal to a receiver to reproduce them, and it is possible to transmit either one of a sound signal or a picture (image, character) signal to a receiver to reproduce it.

EFFECTS OF THE INVENTION

As described, the present invention is characterized in that: advertisement data of each of advertisements is stored in a transmitting (broadcasting) side; for each listener/viewer (a receiver of the listener/viewer) registered with the transmitting side, an advertisement (s) is selected based on the degree of coincidence between an audience group which is a target of the advertisement stored in the transmitting side and an audience group to which the listener/viewer belongs, and the selected advertisement(s) is assigned to the listener/viewer; and the assigned advertisement(s) is transmitted from the transmitting side to the receiver of the listener/viewer to display it.

Therefore, the present invention transmits each advertisement to a receiver of each viewer/listener for reproducing the advertisement in such a manner that a sponsor of an advertisement is allowed to present a listener/viewer, who is a target of the advertisement, with the advertisement which is appropriate for him, thereby realizing advertisement effects that the sponsor desires.

Also, the present invention is characterized in that: for advertisement data of each advertisement assigned to each listener/viewer, weighting regarding transmission of the advertisement data to a receiver of the listener/viewer is executed; a priority order for transmitting advertisement data of each advertisement is determined based on the weighting; pieces of advertisement data to be transmitted to the receiver of the listener/viewer are selected from the advertisement data assigned to the listener/viewer based on the priority order; and the pieces of advertisement data selected based on the priority order are transmitted to the receiver of the listener/viewer in accordance with the priority order.

Therefore, the present invention allows a sponsor to weight an advertisement based on a characteristic inherent in the advertisement, allows the advertisement to be transmitted to a receiver of a listener/viewer to reproduce it with a condition that optimally matches the characteristic inherent in the advertisement, thereby realizing advertisement effects that the sponsor desires.

In accordance with the above described, the present invention has a technical effect whereby a publicity effect of an advertisement can be significantly increased compared with a conventional advertisement transmitting technology with which advertisements are transmitted in a fixed order.

Also, in the present invention, since a higher priority order is given to an advertisement with a shorter display period to preferentially transmit the advertisement, there is an effect whereby, even if a display period is short, a predetermined number of displays can be attained.

Also, in the present invention, for each receiver, an averaged transmission number of each advertisement, which is required to complete a predetermined total number of transmissions (total transmission number) within a predetermined period, is set; a higher priority order is given to an advertisement which has the large remaining number of transmissions until the averaged transmission number is reached; and an advertisement having a higher priority order is preferentially transmitted to the receiver. Therefore, it is possible to attain a predetermined number of transmissions within a predetermined display period even if the large number of displays, that is, the large number of transmissions remains, and that a situation in which a certain advertisement is displayed too many times in a specific receiver can be prevented.

Also, in the present invention, a high priority order is given to an advertisement having a high degree of coincidence between information specifying an audience group targeted by an advertisement and information specifying an audience group to which a listener/viewer of a receiver belongs, and such an advertisement is preferentially transmitted to a receiver. That is, since an advertisement that a listener/viewer seems to wish to see is preferentially transmitted to the receiver and displayed, attention of the viewer/listener can be drawn. As a result, the effects and efficiency of an advertisement are extremely improved. Moreover, it is also convenient for a viewer/listener because the viewer/listener can preferentially see an advertisement that the viewer/listener may wish to see or may be interested in.

Also, in the present invention, a predetermined transmission order of advertisements is defined, and higher priority orders are assigned to the advertisements in the order from the top of the predetermined transmission order to preferentially transmit to a receiver an advertisement that is given a high priority order; and a new predetermined transmission order is defined after transmitting the advertisement(s), and a higher priority order is again assigned to the advertisements in the order from the top of the predetermined transmission order to preferentially transmit to the receiver an advertisement that is given a high priority order. Therefore, attention of a viewer/listener can be drawn compared with the case in which advertisements are repeatedly transmitted to a receiver to display in the same order, or with the case in which the same advertisements are continuously transmitted. Consequently, significantly improved effects and efficiency of an advertisement can be attained.

Also, in the present invention, each advertisement is preferentially transmitted in a time slot that matches the lifestyle of a viewer/listener targeted by the advertisement and a time slot that conforms to the nature of goods that is advertised by the advertisement. Therefore, an advertisement that a viewer/listener seems to wish to see is preferentially transmitted to a receiver and displayed in a time slot in which the viewer/listener may view/listen to the advertisement, and attention of the viewer/listener can be drawn, whereby significant improvements in the effects and efficiency of an advertisement is attained.

Also, in the present invention, a listener/viewer of a receiver can indicate a taste (preference) with respect to an attribute of each advertisement assigned to the listener/viewer; the priority order of transmitting advertisements is determined based on the listener/viewer-indicated taste with respect to the attributes of the advertisements; and the advertisements are transmitted to a receiver in accordance with the priority order. Therefore, for a listener/viewer, since an advertisement suitable for the listener/viewer is preferentially transmitted to the receiver and displayed, it has the effect that the listener/viewer can obtain more of his/her desired information.

Also, in the present invention, for each advertisement assigned to each listener/viewer, an upper limit transmission number is set, wherein the upper limit transmission number reflects the degree of coincidence between the listener/viewer and an advertisement assigned to him/her, causes the receivers, to which the advertisement is assigned, to mutually supplement any shortage of the number of transmissions of the advertisement in order to attain a predetermined total number of transmissions (a total number of displays), and prevents the advertisement from being transmitted too many times to each receiver to which the advertisement is assigned; a high priority order is given to an advertisement which has a large remaining number of transmissions until the upper limit transmission number is reached; and such an advertisement is preferentially transmitted to the receiver and displayed. Therefore, even if a large number of transmissions remains, it is possible to attain a predetermined number of transmissions within a predetermined display period, and that a certain advertisement is prevented from being transmitted too many times to a specific receiver. In addition, an advertisement that a listener/viewer seems to wish to see is transmitted to his receiver and displayed many times, and attention of a viewer/listener can be drawn. As a result, the effects and efficiency of an advertisement are extremely improved. In addition, for a listener/viewer, since the number of transmissions, that is, the number of displaying an advertisement suitable for him/her on the receiver increases, and the number of transmitting an advertisement not suitable for him/her decreases, the listener/viewer can obtain more of his/her desired information.

Also, in the present invention, a priority order which is not biased to a specific determination element can be given by comprehensively taking a plurality of determination elements for a priority order into consideration. Therefore, as a result, appropriateness of a priority order given to each advertisement is improved.

Also, in the present invention, display states of advertisements on a receiver are confirmed on a transmitting side, and transmission of advertisements to each receiver is controlled according to the display states. That is, it becomes possible to perform advertisement transmission control of higher accuracy for all receivers. Therefore, for example, in the event of an unexpected accident, even if the total number of displays (the total number of transmissions) contracted with a sponsor cannot be attained within a predetermined period by an ordinary advertisement transmitting operation, the required number of displays (transmissions) can be attained within the predetermined period by controlling transmission of the advertisement on the host side.

Also, in the present invention, it is possible to designate an advertisement that should be transmitted most preferentially. If the designated advertisement is included in the advertisements assigned to a listener/viewer, it is controlled in such a manner that the advertisement is most preferentially transmitted to a receiver of the listener/viewer. Therefore, if a sponsor designates a condition, for example, a date, a time slot, a program, etc., under which an advertisement is to be displayed, the advertisement can be displayed as designated or can be displayed under a condition close to the designated condition. Thus, there is an effect that the sponsor can be satisfied, and there is an effect that an advertisement frame can be sold more easily by the transmitting side. Another effect is that, if it is necessary to urgently transmit a certain advertisement to a receiver to display, the advertisement can be easily inserted in a desired advertisement frame.

Further, it is possible to designate an advertisement that should be transmitted most preferentially, based on a program that a listener/viewer is watching/listening to. Since it becomes possible to most preferentially display an advertisement which is related to a program, improved effects and efficiency of an advertisement can be attained.

Possibility of industrial application

As described above, the method, apparatus and recording medium storing a computer program for causing a computer to execute procedures similar to those of the method of the present invention are appropriate for use in a system which transmits an advertisement from a transmitting side to a receiver of each listener/viewer who is registered with the transmitting side.

**Claims**

1. An advertisement transmitting method for transmitting advertisement data of advertisements from a transmitting side to a receiver of each viewer/listener who is registered with the transmitting side, the method comprising the steps of:
   in the transmitting side,

   (1) obtaining, from each registered viewer/listener, data characterizing the viewer/listener,
   (2) associating data characterizing viewers/listeners targeted by each piece of advertisement data with the piece of advertisement data,
   (3) for each registered viewer/listener, based on a degree of coincidence between the data characterizing the viewer/listener and the data characterizing viewers/listeners targeted by the pieces of advertisement data, selecting from the pieces of advertisement data one or more pieces of advertisement data which may be transmitted to the receiver of the viewer/listener, and assigning the selected pieces of advertisement data to the viewer/listener, and
   (4) to each registered viewer/listener, transmitting the one or more pieces of advertisement data assigned to the viewer/listener from the transmitting side to the receiver of the viewer/listener.

2. The advertisement transmitting method set forth in claim 1 further comprising the steps of:

   for each viewer/listener registered with the transmitting side,
   conducting, for each piece of advertisement data assigned to the viewer/listener, weighting with respect to a priority for transmitting the piece of advertisement data to the receiver of the viewer/listener,
determining, based on the weight, a priority order of each piece of advertisement data for transmitting the advertisement data to the receiver, and
selecting, from the assigned pieces of advertisement data, one or more pieces of advertisement data to be transmitted to the receiver of the viewer/listener, based on the priority orders; and
the step of said item (4) comprising a step of transmitting, based on the priority orders, the one or more pieces of advertisement data selected on the basis of the priority orders from the assigned pieces of advertisement data to the receiver of the viewer/listener.

3. The advertisement transmitting method set forth in claim 2 comprising the steps of:

   (1) for each piece of advertisement data for an advertisement, adding data indicative of a viewing/listening period of the piece of advertisement data,
   (2) based on the viewing/listening period, determining a remaining viewing/listening period of the piece of advertisement data,
   (3) for the remaining viewing/listening period, determining a value of a coefficient representing a weight, wherein the weight becomes greater as the remaining viewing/listening period becomes shorter, and
   (4) based on the values of the coefficients for the respective pieces of advertisement data assigned to the viewer/listener, determining priority orders for transmitting the pieces of advertisement data to the receiver.

4. The advertisement transmitting method set forth in claim 2 or 3 comprising the steps of:

   (1) for each advertisement, selecting, from category data for specifying audience groups, categories which specify audience groups which are targets of the advertisement, wherein the category data for specifying audience groups comprises a plurality of items and each item comprises a plurality of categories of audience groups; assigning a value of a coefficient representing a weight to each of the selected categories, wherein a greater weight is assigned to a category having more importance; adding, to the advertisement data of the advertisement, first data which represents the selected categories and data which represents the values of the coefficients assigned to each of the selected categories,
   (2) selecting, from the category data for specifying audience groups, categories which specify audience groups to which the viewer/listener of the receiver belongs; and storing second data which represents the selected categories,

(3) based on the assigned coefficient values of the selected categories among the first data which coincide with the selected categories represented by the second data, determining a value of a coefficient which represents the degree of coincidence between the categories targeted by the advertisement and the categories to which the viewer/listener belongs, and

(4) based on the values of the coefficients representing the degrees of coincidence for the respective pieces of advertisement data assigned to the viewer/listener, determining priority orders for transmitting the pieces of advertisement data to the receiver.

5. The advertisement transmitting method set forth in any one of claims 2-4 comprising the steps of:

(1a) for each piece of advertisement data of the advertisement, adding data indicative of the number of transmissions of the piece of advertisement data to the receiver,

(2a) based on the number of transmissions, determining a remaining number of transmissions of the piece of advertisement data of the advertisement,

(3a) for the remaining number of transmissions, determining a value of a coefficient representing a weight, wherein a greater weight is given to a larger remaining number of transmissions, and

(4a) based on the values of the coefficients for the respective pieces of advertisement data assigned to the viewer/listener, determining priority orders for transmitting the pieces of advertisement data to the receiver.

6. The advertisement transmitting method set forth in claim 5, wherein the number of transmissions in the step of said item (1a) defines an upper limit of the number of transmissions of the piece of advertisement data of an advertisement to the receiver of the viewer/listener to whom the advertisement is assigned, and the number of transmissions is an averaged transmission number which is assigned equally to each of all viewers/listeners to whom the advertisement is assigned.

7. The advertisement transmitting method set forth in claim 5, wherein the number of transmissions in the step of said item (1a) defines an upper limit of the number of transmissions of the piece of advertisement data of an advertisement to the receiver of the viewer/listener to whom the advertisement is assigned, and the number of transmissions is a transmission number which is assigned individually to each viewer/listener to whom the advertisement is assigned and which is derived based on a degree of coincidence between an audience group targeted by the advertisement and an audience group to which the viewer/listener to whom the advertisement is assigned belongs.

8. The advertisement transmitting method set forth in any one of claims 2-7 comprising the steps of:

(1) among the pieces of advertisement data assigned to the viewer/listener, detecting one or more pieces of advertisement data which has been transmitted to the receiver of the viewer/listener,

(2) for each piece of advertisement data assigned to the viewer/listener, determining a value of a coefficient representing a weight, wherein the weight is determined so as to provide the detected piece of advertisement data with a lower rank in a predetermined transmission order of advertisements than each other piece of advertisement data which is waiting for transmission to the receiver, and

(3) based on the values of the coefficients for the respective pieces of advertisement data assigned to the viewer/listener, determining priority orders for transmitting the pieces of advertisement data to the receiver.

9. The advertisement transmitting method set forth in any one of claims 2-8 comprising the steps of:

(1b) in order to specify one or more times of a day at which the advertisement is desired to be preferentially transmitted to the receiver, for each piece of advertisement data, selecting time slot data from preferential transmission time data which comprises time slot data for each of a plurality of time slots for specifying one or more times of a day at which the advertisement is desired to be preferentially transmitted to the receiver; assigning a value of a coefficient representing a weight to each selected piece of the time slot data, wherein a greater weight is assigned to a selected time slot having more importance; adding, to the advertisement data of the advertisement, one or more selected pieces of time slot data and data which represents the value of the coefficient assigned to each selected piece of the time slot data,

(2b) determining a time slot to which the present time of day belongs,

(3b) reading out the value of the coefficient assigned to the piece of time slot data which corresponds to the time slot determined in the step of said item (2b), and

(4b) based on the values of the coefficients for the respective pieces of advertisement data assigned to the viewer/listener, determining priority orders for transmitting the pieces of advertisement data to the receiver.

10. The advertisement transmitting method set forth in any one of claims 2-9 comprising the steps of:

(1) for each advertisement, selecting advertisement attribute data representative of a category to which an object to be advertised by the advertisement belongs; and adding the selected advertisement attribute data to the advertisement data of the advertisement,

(2) to the advertisement attribute data, assigning a value of a coefficient which represents the importance of the category represented by the advertisement attribute data,

(3) optionally increasing or decreasing, by the viewer/listener of the receiver, the value of the coefficient assigned to the advertisement attribute data, and

(4) based on the values of the coefficients for the respective pieces of advertisement data assigned to the viewer/listener, determining priority orders for transmitting the pieces of advertisement data to the receiver.

11. The advertisement transmitting method set forth in any one of claims 2-10 wherein the step of determining priority orders for transmitting the pieces of advertisement data comprises a step of changing one or more values of the coefficient by applying thereto one or more values of one or more different coefficients.

12. The advertisement transmitting method set forth in any one of claims 1-11 further comprising the steps of:

among the pieces of advertisement data, indicating a piece of advertisement data which should be most preferentially transmitted during a certain advertisement frame, and

if the indicated piece of advertisement data which should be most preferentially transmitted is included in the pieces of advertisement data assigned to the viewer/listener, most-preferentially transmitting the piece of advertisement data to the receiver of the viewer/listener during the advertisement frame.

13. An advertisement transmitting apparatus for transmitting advertisement data of advertisements from a transmitting side to a receiver of each viewer/listener who is registered with the transmitting side, the apparatus comprising:

(1) means for obtaining, from each of the registered viewers/listeners, data characterizing the viewer/listener, and storing the data,

(2) means for associating data characterizing viewers/listeners targeted by each piece of advertisement data with the piece of advertisement data, and storing the data,

(3) means for selecting, for each registered viewer/listener and based on a degree of coincidence between the data characterizing the viewer/listener and the data characterizing viewers/listeners targeted by each piece of advertisement data, from the pieces of advertisement data one or more pieces of advertisement data which may be transmitted to the receiver of the viewer/listener,

(4) means for assigning, to each registered viewer/listener, the pieces of advertisement data selected for the viewer/listener with the registered viewer/listener, and

(5) means for transmitting the one or more pieces of advertisement data associated with the viewer/listener to the receiver of the viewer/listener.

14. The advertisement transmitting apparatus set forth in claim 13 further comprising:

(A) means for conducting, for each piece of advertisement data of the advertisement associated with the viewer/listener, weighting regarding priority for transmitting the advertisement data to the receiver of the viewer/listener, and determining a value of a coefficient representing the weight in such a manner that the weight becomes greater as the priority becomes higher,

(B) means for associating, for each piece of advertisement data associated with the viewer/listener, the piece of advertisement data and the value of the coefficient corresponding to the piece of advertisement data, and storing the data,

(c) means for determining, based on the values of the weights, a priority order of each piece of advertisement data for transmitting the advertisement data to the receiver, and

(D) means for selecting, from the pieces of advertisement data associated with the viewer/listener, one or more pieces of advertisement data to be transmitted to the receiver of the viewer/listener, based on the priority orders; and

the means of said item (5) comprises means for transmitting, based on the priority orders, the one or more pieces of advertisement data selected by the means of said item (D) to the receiver of the viewer/listener.

**15.** The advertisement transmitting apparatus set forth in claim 14, wherein the means of said item (A) comprises:

(1) means for adding, for each piece of advertisement data, data indicative of a viewing/listening period of the piece of advertisement data,
(2) means for determining, based on the viewing/listening period, a remaining viewing/listening period of the piece of advertisement data, and
(3) means for determining a value of a coefficient representing a weight for the remaining viewing/listening period, in such a manner that the weight becomes greater as the remaining viewing/listening period becomes shorter.

**16.** The advertisement transmitting apparatus set forth in claim 14 or 15, wherein the means of said item (A) comprises:

(1) means for associating with each piece of advertisement data, data which is indicative of first selected categories which specify audience groups which are targets of the advertisement, and data which is indicative of values of coefficients assigned to the respective first selected categories, and storing the data; wherein the first selected categories are selected from category data for specifying audience groups, and the category data comprises a plurality of items and each item comprises a plurality of categories to specify audience groups; and the value of the coefficient is assigned in such a manner that a greater value representing a greater weight is assigned to the first selected category having more importance,
(2) means for storing data which is indicative of second selected categories which are selected from the category data for specifying audience groups, wherein the second selected categories specify audience groups to which the viewer/listener of the receiver belongs, and
(3) means for determining a value of a coefficient representing a degree of coincidence between the categories targeted by the advertisement and the categories to which the viewer/listener of the receiver belongs, based on the coefficient values assigned to the first selected categories which coincide with the second selected categories, wherein the degree of coincidence represents a weight which becomes greater as the degree of coincidence becomes higher.

**17.** The advertisement transmitting apparatus set forth in any of claims 14-16, wherein the means of said item (A) comprises:

(1a) means for associating with each piece of advertisement data, data indicative of the number of transmissions of the piece of advertisement data to the receiver,
(2a) means for determining, based on the number of transmissions, a remaining number of transmissions of the piece of advertisement data, and
(3a) means for determining, for the remaining number of transmissions, a value of a coefficient representing a weight, wherein a greater weight is given to a larger remaining number of transmissions.

**18.** The advertisement transmitting apparatus set forth in claims 17, wherein the number of transmissions associated with the piece of advertisement data by the means of said item (1a) defines an upper limit of the number of transmissions of the piece of advertisement data of an advertisement to the receiver of the viewer/listener to whom the advertisement is assigned, and the number of transmissions is an averaged transmission number which is assigned equally to each of all viewers/listeners to whom the advertisement is assigned.

**19.** The advertisement transmitting apparatus set forth in claims 17, wherein the number of transmissions associated with the piece of advertisement data by the means of said item (1a) defines an upper limit of the number of transmissions of the piece of advertisement data of an advertisement to the receiver of the viewer/listener to whom the advertisement is assigned, and the number of transmissions is a transmission number which is assigned individually to each viewer/listener to whom the advertisement is assigned and which is derived based on a degree of coincidence between an audience group targeted by the advertisement and an audience group to which the viewer/listener to whom the advertisement is assigned belongs.

**20.** The advertisement transmitting apparatus set forth in any of claims 14-19, wherein the means of said item (A) comprises:

(1) means for detecting, among the pieces of advertisement data assigned to the viewer/listener, one or more pieces of advertisement data which has been transmitted to the receiver of the viewer/listener, and
(2) means for determining, for each piece of advertisement data assigned to the viewer/listener, a value of a coefficient representing a weight, wherein the weight is determined so as to provide the detected piece of advertisement data with a lower rank in a predetermined transmission order of advertisements than each other piece of advertisement data which is waiting for transmission to the receiver.

21. The advertisement transmitting apparatus set forth in any of claims 14-20, wherein the means of said item (A) comprises:

(1b) means for associating with each piece of advertisement data, time slot data and data indicative of a value of a coefficient assigned to the time slot data, in order to specify one or more times of a day at which the advertisement is desired to be preferentially transmitted to the receiver, and storing the data; wherein the time slot data is selected from preferential display time data which comprises time slot data for each of a plurality of time slots, for specifying one or more times of day when the advertisement is desired to be preferentially transmitted to the receiver; and the value of the coefficient represents a weight of the selected time slot, and a greater weight is assigned to a selected time slot having greater importance,

(2b) means for determining a time slot to which the present time of day belongs,

(3b) means for reading out, from the means of said item (1b) the value of the coefficient assigned to the time slot data which corresponds to the time slot determined by the means of said item (2b), and

(4b) means for determining priority orders for transmitting the respective pieces of advertisement data which are stored in association with the viewer/listener to the receiver of the viewer/listener, based on the values of the coefficient.

22. The advertisement transmitting apparatus set forth in any of claims 14-21, wherein the means of said item (A) comprises:

(1) means for obtaining, for each advertisement, advertisement attribute data representative of a category to which an object to be advertised by the advertisement belongs, and adding the selected advertisement attribute data to the advertisement data of the advertisement,

(2) means for assigning to the advertisement attribute data, a value of a coefficient which represents the importance of the category represented by the advertisement attribute data,

(3) means for optionally increasing or decreasing, by the viewer/listener, the value of the coefficient assigned to the advertisement attribute data, and

(4) means for determining priority orders for transmitting the respective pieces of advertisement data which are stored in association with the viewer/listener to the receiver of the viewer/listener, based on the values of the coefficient.

23. The advertisement transmitting apparatus set forth in any of claims 14-22, wherein the means for determining a priority order of said item (C) comprises means for changing one or more values of the coefficient by applying thereto one or more values of one or more different coefficients.

24. The advertisement transmitting apparatus set forth in any of claims 13-23 further comprising means for indicating, among the pieces of advertisement data, a piece of advertisement data which should be most preferentially transmitted during a certain advertisement frame, and means for most-preferentially transmitting the piece of advertisement data to the receiver of the viewer/listener during the advertisement frame, if the indicated piece of advertisement data which should be most preferentially transmitted is included in the pieces of advertisement data assigned to the viewer/listener.

25. A storage medium for storing a program which enables a computer to carry out a procedure for transmitting advertisement data of advertisements from a transmitting side to a receiver of each viewer/listener who is registered with the transmitting side, the procedure comprising the steps of:
in the transmitting side,

(1) obtaining, from each registered viewer/listener, data characterizing the viewer/listener,

(2) associating data characterizing viewers/listeners targeted by each piece of advertisement data with the piece of advertisement data,

(3) for each registered viewer/listener, based on a degree of coincidence between the data characterizing the viewer/listener and the data characterizing viewers/listeners targeted by the pieces of advertisement data, selecting from the pieces of advertisement data one or more pieces of advertisement data which may be transmitted to the receiver of the viewer/listener, and assigning the selected pieces of advertisement data to the viewer/listener, and

(4) to each registered viewer/listener, transmitting the one or more pieces of advertisement data assigned to the viewer/listener from the transmitting side to the receiver of the viewer/listener.

26. The storage medium set forth in claim 25, wherein the procedure further comprises the steps of:

for each viewer/listener registered with the transmitting side,

conducting, for each piece of advertisement data assigned to the viewer/listener, weighting with respect to a priority for transmitting the piece of advertisement data to the receiver of the viewer/listener,

determining, based on the weight, a priority order of each piece of advertisement data for transmitting the advertisement data to the receiver, and

selecting, from the assigned pieces of advertisement data, one or more pieces of advertisement data to be transmitted to the receiver of the viewer/listener, based on the priority orders; and

the step of said item (4) comprising a step of transmitting, based on the priority orders, the one or more pieces of advertisement data selected on the basis of the priority orders from the assigned pieces of advertisement data to the receiver of the viewer/listener.

**27.** The storage medium set forth in claims 26, wherein the procedure comprises the steps of:

(1) for each piece of advertisement data for an advertisement, adding data indicative of a viewing/listening period of the piece of advertisement data,

(2) based on the viewing/listening period, determining a remaining viewing/listening period of the piece of advertisement data,

(3) for the remaining viewing/listening period, determining a value of a coefficient representing a weight, wherein the weight becomes greater as the remaining viewing/listening period becomes shorter, and

(4) based on the values of the coefficients for the respective pieces of advertisement data assigned to the viewer/listener, determining priority orders for transmitting the pieces of advertisement data to the receiver.

**28.** The storage medium set forth in claim 26 or 27, wherein the procedure comprises the steps of:

(1) for each advertisement, selecting, from category data for specifying audience groups, categories which specify audience groups which are targets of the advertisement, wherein the category data for specifying audience groups comprises a plurality of items and each item comprises a plurality of categories of audience groups; assigning a value of a coefficient representing a weight to each of the selected categories, wherein a greater weight is assigned to a category having more importance; adding, to the advertisement data of the advertisement, first data which represents the selected categories and data which represents the values of the coefficients assigned to each of the selected categories,

(2) selecting, from the category data for specifying audience groups, categories which specify audience groups to which the viewer/listener of the receiver belongs; and storing second data which represents the selected categories,

(3) based on the assigned coefficient values of the selected categories among the first data which coincide with the selected categories represented by the second data, determining a value of a coefficient which represents the degree of coincidence between the categories targeted by the advertisement and the categories to which the viewer/listener belongs, and

(4) based on the values of the coefficients representing the degrees of coincidence for the respective pieces of advertisement data assigned to the viewer/listener, determining priority orders for transmitting the pieces of advertisement data to the receiver.

**29.** The storage medium set forth in any one of claims 26-28, wherein the procedure comprises the steps of:

(1a) for each piece of advertisement data of the advertisement, adding data indicative of the number of transmissions of the piece of advertisement data to the receiver,

(2a) based on the number of transmissions, determining a remaining number of transmissions of the piece of advertisement data of the advertisement,

(3a) for the remaining number of transmissions, determining a value of a coefficient representing a weight, wherein a greater weight is given to a larger remaining number of transmissions, and

(4a) based on the values of the coefficients for the respective pieces of advertisement data assigned to the viewer/listener, determining priority orders for transmitting the pieces of advertisement data to the receiver.

**30.** The storage medium set forth in claim 29, wherein the number of transmissions in the step said item (1a) defines an upper limit of the number of transmissions of the piece of advertisement data of an advertisement to the receiver of the viewer/listener to whom the advertisement is assigned, and the number of transmissions is an averaged transmission number which is assigned equally to each of all viewers/listeners to whom the advertisement is assigned.

**31.** The storage medium set forth in claim 29, wherein the number of transmissions in the step of said item (1a) defines an upper limit of the number of transmissions of the piece of advertisement data of an advertisement to the receiver of the viewer/listener to whom the advertisement is assigned, and the number of transmissions is a transmission number which is assigned individually to each viewer/listener to whom the advertisement is assigned and which is derived based on a degree of coincidence between an audience group targeted by the advertisement and an audience group to which the viewer/listener to whom the advertisement is assigned belongs.

**32.** The storage medium set forth in any one of claims 26-31, wherein the procedure comprises the steps of:

(1) among the pieces of advertisement data assigned to the viewer/listener, detecting one or more pieces of advertisement data which has been transmitted to the receiver of the viewer/listener,

(2) for each piece of advertisement data assigned to the viewer/listener, determining a value of a coefficient representing a weight, wherein the weight is determined so as to provide the detected piece of advertisement data with a lower rank in a predetermined transmission order of advertisements than each other piece of advertisement data which is waiting for transmission to the receiver, and

(3) based on the values of the coefficients for the respective pieces of advertisement data assigned to the viewer/listener, determining priority orders for transmitting the pieces of advertisement data to the receiver.

**33.** The storage medium set forth in any one of claims 26-32, wherein the procedure comprises the steps of:

(1b) in order to specify one or more times of a day at which the advertisement is desired to be preferentially transmitted to the receiver, for each piece of advertisement data, selecting time slot data from preferential transmission time data which comprises time slot data for each of a plurality of time slots for specifying one or more times of a day at which the advertisement is desired to be preferentially transmitted to the receiver; assigning a value of a coefficient representing a weight to each selected piece of the time slot data, wherein a greater weight is assigned to a selected time slot having more importance; adding, to the advertisement data of the advertisement, one or more selected pieces of time slot data and data which represents the value of the coefficient assigned to each selected piece of the time slot data,

(2b) determining a time slot to which the present time of day belongs,

(3b) reading out the value of the coefficient assigned to the piece of time slot data which corresponds to the time slot determined in the step of said item (2b), and

(4b) based on the values of the coefficients for the respective pieces of advertisement data assigned to the viewer/listener, determining priority orders for transmitting the pieces of advertisement data to the receiver.

**34.** The storage medium set forth in any one of claims 26-33, wherein the procedure comprises the steps of:

(1) for each advertisement, selecting advertisement attribute data representative of a category to which an object to be advertised by the advertisement belongs; and adding the selected advertisement attribute data to the advertisement data of the advertisement,

(2) to the advertisement attribute data, assigning a value of a coefficient which represents the importance of the category represented by the advertisement attribute data,

(3) optionally increasing or decreasing, by the viewer/listener of the receiver, the value of the coefficient assigned to the advertisement attribute data, and

(4) based on the values of the coefficients for the respective pieces of advertisement data assigned to the viewer/listener, determining priority orders for transmitting the pieces of advertisement data to the receiver.

**35.** The storage medium set forth in any one of claims 26-34, wherein the step of determining priority orders for transmitting the pieces of advertisement data comprises a step of changing one or more values of the coefficient by applying thereto one or more values of one or more different coefficients.

**36.** The storage medium set forth in any one of claims 25-35, wherein the procedure comprises the steps of:

among the pieces of advertisement data, indicating a piece of advertisement data which should be most preferentially transmitted during a certain advertisement frame, and
if the indicated piece of advertisement data which should be most preferentially transmitted is included in the pieces of advertisement data assigned to the viewer/listener, most-preferentially transmitting the piece of advertisement data to the receiver of the viewer/listener during the advertisement frame.

## Fig.1

| CALCULATION ELEMENT NAME | CONTROL COEFFICIENT NAME | | | VALUE OF CONTROL COEFFICIENT FOR EACH ADVERTISEMENT | | | | | | |
|---|---|---|---|---|---|---|---|---|---|---|
| | | | | CM 1 | CM 2 | CM 3 | CM 4 | CM 5 | CM 6 | CM 7 |
| DISPLAY PERIOD | T t (TOTAL DISPLAY PERIOD) | | | 60 | 40 | 30 | 30 | 60 | 100 | 20 |
| | T r (REMAINING DISPLAY PERIOD) | | | 12 | 12 | 18 | 21 | 30 | 90 | 5 |
| AUDIENCE GROUP SPECIFYING CATEGORY | Cpq | Cax (REGION) | Ca1 (REGION A) | 40 | 100. | 20 | 30 | 10 | 40 | 0 |
| | | | Ca2 (REGION B) | 0 | 0 | 60 | 10 | 10 | 10 | 30 |
| | | | • | • | • | • | • | • | • | |
| | | | Cam (REGION m) | 20 | 0 | 0 | 20 | 10 | 30 | 10 |
| | | Cbx (SEX) | Cb1 (MALE) | 80 | 50 | 30 | 70 | 60 | 80 | 0 |
| | | | Cb2 (FEMALE) | 20 | 50· | 70 | 30 | 40 | 20 | 100 |
| | | Ccx (AGE) | Cc1 (~19YRS. OLD) | 10 | 50 | 50 | 30 | 10 | 40 | 0 |
| | | | Cc2 (20~34) | 20 | 30 | 35 | 30 | 10 | 25 | 30 |
| | | | Cc3 (35~49) | 40 | 20 | 15 | 20 | 20 | 15 | 40 |
| | | | Cc4 (50~64) | 20 | 0 | 0 | 10 | 20 | 10 | 20 |
| | | | Cc5 (65YRS. OLD~) | 10 | 0 | 0 | 10 | 40 | 10 | 10 |
| | | Cdx (HOBBY) | Cd1 (HOBBY A) | 50 | 20 | 80 | 10 | 90 | 30 | 60 |
| | | | Cd2 (HOBBY B) | 40 | 30 | 10 | 20 | 0 | 60 | 40 |
| | | | Cd3 (HOBBY C) | 10 | 50 | 10 | 70 | 10 | 10 | 0 |
| PREDETERMINED TRANSMISSION ORDER | J n | | | 1000 | 1000 | 1000 | 1000 | 1000 | 1000 | 1000 |
| TOTAL DISPLAY NUMBER | K T | | | 400 | 1000 | 500 | 400 | 700 | 300 | 600 |
| PREFERRED TRANSMISSION TIME | H x | H 1 (1:00~5:00) | | 0 | 0 | 0 | 0 | 30 | 0 | 10 |
| | | H 2 (5:00~9:00) | | 0 | 20 | 0 | 0 | 20 | 20 | 20 |
| | | H 3 (9:00~13:00) | | 0 | 20 | 50 | 0 | 0 | 30 | 30 |
| | | H 4 (13:00~17:00) | | 0 | 20 | 0 | 20 | 0 | 20 | 20 |
| | | H 5 (17:00~21:00) | | 100 | 20 | 50 | 60 | 20 | 30 | 10 |
| | | H 6 (21:00~1:00) | | 0 | 20 | 0 | 20 | 30 | 0 | 10 |
| TASTE OF VIEWER/LISTENER (ADVERTISEMENT ATTRIBUTE) | F x | | | 50 (F1) | 50 (F1) | 50 (F2) | 50 (F1) | 50 (F3) | 50 (F2) | 50 (F4) |
| | | | | | | | | | | |
| A VALUE OF A DEGREE OF COINCIDENCE IN THE CASE THAT A VIEWER/LISTENER OF A RECEIVER BELONGS TO CATEGORIES Ca1, Cb1, Cc1 AND Cd3: CT (CT=Ca1+Cb1+Cc1+Cd3) | | | | 140 | 250 | 110 | 200 | 90 | 170 | 0 |

## Fig.2

| CALCULATION ELEMENT NAME | CONTROL COEFFICIENT NAME | | | VALUE OF CONTROL COEFFICIENT FOR EACH ADVERTISEMENT | | | | | | CONTROL VARIABLE |
|---|---|---|---|---|---|---|---|---|---|---|
| | | | | CM 1 | CM 2 | CM 3 | CM 4 | CM 5 | CM 6 | |
| DISPLAY PERIOD | $Tx$ | | | 800 | 700 | 400 | 300 | 500 | 100 | X 1 |
| AUDIENCE GROUP SPECIFYING CATEGORY | $Cpq$ | $Cax$ (REGION) | $Ca1$ (REGION A) | 40 | 100 | 20 | 30 | 10 | 40 | X 2 |
| | | $Cbx$ (SEX) | $Cb1$ (MALE) | 80 | 50 | 30 | 70 | 60 | 80 | X 3 |
| | | $Ccx$ (AGE) | $Cc1$ (~19 YRS. OLD) | 10 | 50 | 50 | 30 | 10 | 40 | X 4 |
| | | $Cdx$ (HOBBY) | $Cd3$ (HOBBY C) | 10 | 50 | 10 | 70 | 10 | 10 | X 5 |
| PREDETERMINED TRANSMISSION ORDER | $Jn$ | | | 1500 | 1400 | 1300 | 1200 | 1100 | 1000 | X 6 |
| AVERAGED TRANSMISSION NUMBER | $Ka$ | | | 40 | 100 | 50 | 40 | 70 | 30 | X 7 |
| PREFERRED TRANSMISSION TIME | $Hx$ | H 1 (1:00~5:00) | | 0 | 0 | 0 | 0 | 30 | 0 | X 8 |
| | | H 2 (5:00~9:00) | | 0 | 20 | 0 | 0 | 20 | 20 | |
| | | H 3 (9:00~13:00) | | 0 | 20 | 50 | 0 | 0 | 30 | |
| | | H 4 (13:00~17:00) | | 0 | 20 | 0 | 20 | 0 | 20 | |
| | | H 5 (17:00~21:00) | | 100 | 20 | 50 | 60 | 20 | 30 | |
| | | H 6 (21:00~1:00) | | 0 | 20 | 0 | 20 | 30 | 0 | |
| TASTE OF VIEWER/LISTENER (ADVERTISEMENT ATTRIBUTE) | $Fx$ | | | 70 (F1) | 70 (F1) | 20 (F2) | 70 (F1) | 50 (F3) | 20 (F2) | X 9 |

| | CM 1 | CM 2 | CM 3 | CM 4 | CM 5 | CM 6 |
|---|---|---|---|---|---|---|
| A VALUE OF THE DEGREE OF COINCIDENCE IN THE CASE THAT THE VIEWER/LISTENER OF A RECEIVER BELONGS TO CATEGORIES Ca1, Cb1, Cc1 AND Cd3, AND THE VALUES OF CONTROL VARIABLES X2 TO X5 ARE 1: $Ct$ ($Ct = Ca1 \times X2 + Cb1 \times X3 + Cc1 \times X4 + Cd3 \times X5$) | 140 | 250 | 110 | 200 | 90 | 170 |
| A DETERMINATION ELEMENT IN THE CASE THAT THE VIEWER/LISTENER OF THE RECEIVER BELONGS TO CATEGORIES Ca1, Cb1, Cc1 AND Cd3, THE PRESENT TIME BELONGS TO H6, AND THE VALUES OF ALL CONTROL VARIABLES ARE 1: $Sum$ ($Sum = Tx \times X1 + Ct + Jn \times X6 + Ku \times X7 + Hx \times X8 + Fx \times X9$) | 2550 | 2540 | 1880 | 1830 | 1840 | 1320 |
| PRIORITY ORDER: N | 1 | 2 | 3 | 5 | 4 | 6 |

# Fig.3

EXTERNAL INSTRUCTION INPUT

CUSTOMER REGISTRATION INPUT

ADVERTISEMENT REGISTRATION INPUT

1

6 — PERSONAL CALCULATION SHEET

CALCULATION PART

9

TRANSMITTING PART

2

CUSTOMER MANAGEMENT PART

3

ADVERTISEMENT MANAGEMENT PART

5 — INSTRUCTION PART

ADVERTISEMENT DATA STORAGE PART

4

RECEIVING PART

8

7 — HISTORY PART

EP 1 292 146 A1

## Fig.4

EP 1 292 146 A1

## Fig.5

```
        ┌───────────┐
        │   START   │
        └─────┬─────┘
              ↓
1 ─┐ ┌────────────────────────────────────────────┐
   └─│ INPUT PERSONAL DATA OF A VIEWER/LISTENER (A1) │
     └────────────────────┬───────────────────────┘
                          ↓
2 ─┐ ┌──────────────────────────────┐
   └─│   PROVIDE A PERSONAL ID (A2)  │
     └──────────────┬───────────────┘
                    ↓
        ┌───────────┐
        │    END    │
        └───────────┘
```

## Fig.6

```
        ┌───────────┐
        │   START   │
        └─────┬─────┘
              ↓
1 ─┐ ┌──────────────────────────────────────────────────────────────────────┐
   └─│ OBTAIN THE NUMBER OF VIEWERS/LISTENERS BELONGING TO EACH CATEGORY      │
     │ OF EACH CLASSIFICATION OF THE AUDIENCE GROUP SPECIFYING CATEGORY (B1)  │
     └──────────────────────────────┬───────────────────────────────────────┘
                                    ↓
                        ┌───────────┐
                        │    END    │
                        └───────────┘
```

## Fig.7

```
        ┌───────────┐
        │   START   │
        └─────┬─────┘
              ↓
1 ─┐ ┌──────────────────────────────────────────────────────────────────────┐
   └─│ FROM CLIENT OF ADVERTISEMENT, RECEIVE ADVERTISEMENT DATA, DISPLAY      │
     │ PERIOD DATA OF ADVERTISEMENT, DATA INDICATING TOTAL NUMBER OF TIMES    │
     │ OF DISPLAYS OF ADVERTISEMENT DATA, AUDIENCE GROUP SPECIFYING CATEGORY  │
     │ DATA, PREFERRED TRANSMISSION TIME DATA, ADVERTISEMENT ATTRIBUTE DATA,  │
     │ AND ADVERTISEMENT LENGTH DATA (C1)                                     │
     └──────────────────────────────┬───────────────────────────────────────┘
                                    ↓
2 ─┐ ┌──────────────────────────────────────────────────────────────────────┐
   └─│ ASSOCIATE EACH CATEGORY OF EACH CLASSIFICATION OF AUDIENCE GROUP       │
     │ SPECIFYING CATEGORY DATA WITH DATA OF THE NUMBER OF VIEWERS/LISTENERS  │
     │ BELONGING TO THE CATEGORY (C2)                                         │
     └──────────────────────────────┬───────────────────────────────────────┘
                                    ↓
3 ─┐ ┌──────────────────────────────────────────────────────────────────────┐
   └─│ GENERATE ADVERTISEMENT ID DATA FOR ACCEPTED ADVERTISEMENT, AND         │
     │ ASSOCIATE AND STORE THE ADVERTISEMENT ID WITH ADVERTISEMENT DATA       │
     │ AND DATA ADDED TO THE ADVERTISEMENT DATA (C3)                          │
     └──────────────────────────────┬───────────────────────────────────────┘
                                    ↓
                        ┌───────────┐
                        │    END    │
                        └───────────┘
```

# Fig.8

START

1 — SEND COPIES OF DATA INDICATING PERSONAL ID AND CATEGORIES TO WHICH THE VIEWER/LISTENER BELONGS TO CALCULATION PART 6 (D1)

2 — SEND COPIES OF DISPLAY PERIOD DATA OF ADVERTISEMENT, AUDIENCE GROUP SPECIFYING CATEGORY DATA, DATA INDICATING TOTAL NUMBER OF TIMES OF DISPLAYS OF ADVERTISEMENT, PREFERRED TRANSMISSION TIME DATA, ADVERTISEMENT ATTRIBUTE DATA, PREDETERMINED TRANSMISSION ORDER DATA, VIEWER/LISTENER'S TASTE DATA, AND ADVERTISEMENT LENGTH DATA TO CALCULATION PART 6 (D2)

3 — SHOULD ADVERTISEMENT BE ASSIGNED TO VIEWER/LISTENER ? (D3)

NO

4 — DISCARD RECEIVED COPY OF ADDITIONAL DATA (D3a)

YES

5 — REGISTER RECEIVED ADDITIONAL DATA WITH PERSONAL CALCULATION SHEET (D3b)

6 — CALCULATE AVERAGED TRANSMISSION NUMBER (D4)

END

## Fig.9

```
                    ( START )
                        |
1 ~  INPUT ADVERTISEMENT ID OF ADVERTISEMENT WHICH SHOULD BE DELETED
     AND DELETION COMMAND TO INSTRUCTION PART (E1)
                        |
2 ~         IS ADVERTISEMENT              NO
            WHICH SHOULD BE      ----------------
            DELETED STORED ? (E2)               |
                        |                       |
                      YES                       |
3 ~  DELETE DATA RELATING TO ADVERTISEMENT WHICH SHOULD BE DELETED (E2)
                        |                       |
                        |<----------------------
                    ( END )
```

# Fig.10

```
                    ┌─────────────┐
                    │    START    │
                    └─────────────┘
                           │
                           ▼
```

1 ── WHEN IT IS NECESSARY TO MOST PREFERENTIALLY TRANSMIT A SPECIFIC ADVERTISEMENT,
     INPUT INFORMATION FOR DESIGNATING THE ADVERTISEMENT FROM EXTERNAL INSTRUCTION
     INPUT PART TO ADVERTISEMENT MANAGEMENT PART 3 (F1)

2 ── INPUT ADVERTISEMENT DESIGNATION COMMAND FROM ADVERTISEMENT MANAGEMENT PART 3
     TO INSTRUCTION PART 5 (F1)

3 ── IS ADVERTISEMENT WHICH SHOULD
     BE MOST PREFERENTIALLY
     DISPLAYED STORED ? (F2)                          NO

     YES

4 ── ADD DATA WHICH INDICATES MOST PREFERENTIAL TO ADVERTISEMENT ID OF ADVERTISEMENT
     WHICH SHOULD BE MOST PREFERENTIALLY DISPLAYED (F2)

```
                    ┌─────────────┐
                    │     END     │
                    └─────────────┘
```

# Fig.11

```
              ┌──────────────┐
              │    START     │
              └──────┬───────┘
                     │
                     ▼
1 ─── ┌────────────────────────────────────────────────────────────────────────────────┐
      │ DETERMINE VALUES OF CONTROL VARIABLES BASED ON HISTORY DATA AND/OR BUSINESS INFORMATION (G1) │
      └────────────────────────────────────┬───────────────────────────────────────────┘
                     │
                     ▼
2 ─── ┌────────────────────────────────────────────────────────────────────────────────┐
      │ CHANGE CONTROL VARIABLES IN EACH PERSONAL CALCULATION SHEET TO NEW CONTROL VARIABLES (G2) │
      └────────────────────────────────────┬───────────────────────────────────────────┘
                     │
                     ▼
              ┌──────────────┐
              │     END      │
              └──────────────┘
```

# Fig.12

START

1 — CALCULATE INITIAL VALUE OF WEIGHT FOR THE UPPER LIMIT NUMBER OF TRANSMISSIONS (AVERAGED TRANSMISSION NUMBER) (Ka) FOR EACH RECEIVER (H1)

2 — PREDETERMINE TRANSMISSION ORDER OF EACH ADVERTISEMENT, AND DETERMINE INITIAL VALUE OF CONTROL COEFFICIENT Jn FOR PREDETERMINED TRANSMISSION ORDER (H2)

3 — SET CONTROL COEFFICIENT (Fx) WHICH REFLECTS TASTE OF AUDIENCE FOR EACH CATEGORY OF ADVERTISEMENT AT INITIAL VALUE (H3)

I (FROM FIG. 13, FIG. 15)

4 — HAS PREDETERMINED TIME PASSED (E.G., ONE MONTH) SINCE SETTING Fx AT INITIAL VALUE? (H4)    YES

NO

5 — CALCULATE CONTROL COEFFICIENT Tx FOR DISPLAY PERIOD OF EACH ADVERTISEMENT, BASED ON DISPLAY PERIOD DATA (H5)

6 — IS THERE ADVERTISEMENT FOR WHICH Tr (DEADLINE − PRESENT DATE) < 0? (H6)    YES

NO

7 — DELETE ITS ADVERTISEMENT DATA AND ADDED DATA FROM THE PERSONAL CALCULATION SHEET (H6)

8 — HAS A PREDETERMINED TIME (E.G., 24 HOURS) PASSED? (H8)    YES

NO

TO B OF FIG. 13

## Fig.13

B

9 — HAS ADVERTISEMENT TRANSMISSION REQUEST SIGNAL RECEIVED? (H8)

NO → TO I OF FIG. 12

YES

10 — GENERATE TEMPORARY PERSONAL CALCULATION SHEET (H9)

11 — IS ADVERTISEMENT ID OF ADVERTISEMENT WHICH SHOULD BE MOST PREFERENTIALLY TRANSMITTED INCLUDED IN THE TEMPORARY PERSONAL CALCULATION SHEET? (H10)

YES

NO

12 — TRANSMIT THE ADVERTISEMENT HAVING THE ADVERTISEMENT ID (H11)

13 — IF THE ADVERTISEMENT WHICH SHOULD BE MOST PREFERENTIALLY TRANSMITTED IS TRANSMITTED, DELETE DATA INDICATING "MOST PREFERENTIAL", WHICH HAS BEEN ADDED TO THE ADVERTISEMENT ID OF THE ADVERTISEMENT, FROM THE TEMPORARY PERSONAL CALCULATION SHEET (H11)

14 — DOES TIME OF ADVERTISEMENT TIME FRAME REMAIN? (H12)

NO → TO II OF FIG. 14

YES

15 — UPDATE ADVERTISEMENT FRAME TIME DATA TO INDICATE THE REMAINING TIME (H12)

16 — IS THE REMAINING NUMBER OF TRANSMISSIONS OF THE DISPLAYED ADVERTISEMENT 0? (H13)

YES

NO

17 — DELETE THE ADVERTISEMENT ID AND ADDED DATA FROM THE PERSONAL CALCULATION SHEET (H13)

TO C1 OF FIG. 14          TO C2 OF FIG. 14          TO C3 OF FIG. 14

## Fig.14

C1    C2    C3

18 — CALCULATE WEIGHT (Ka) FOR THE REMAINING NUMBER
OF TRANSMISSIONS WITH RESPECT TO THE DISPLAYED
ADVERTISEMENT, AND UPDATE Ka (H13)

19 — DETERMINE CONTROL COEFFICIENT Jn
FOR PREDETERMINED TRANSMISSION ORDER (H13)

20 — READ PRESENT TIME OF DAY; AND, FOR EACH ADVERTISEMENT, READ OUT CONTROL COEFFICIENT Hx
FOR TIME SLOT TO WHICH THE PRESENT TIME OF DAY BELONGS,
FROM PERSONAL CALCULATION SHEET (H14)

21 — READ OUT CONTROL COEFFICIENTS Tx, Cpq (Ca1, Cb1, Cc1, Cd3 IN THIS EXAMPLE), Jn, Ka AND Fx
FOR EACH ADVERTISEMENT FROM PERSONAL CALCULATION SHEET (H15)

22 — APPLY CONTROL VARIABLE Xn TO EACH CONTROL COEFFICIENT RECORDED
IN PERSONAL CALCULATION SHEET (Tx×X1=Tx': Ca1×X2=Ca1': Cb1×X3=Cb1':
Cc1×X4=Cc1': Cd3×X5=Cd3': Jn×X6=Jn': Ka×X7=Ka': Hx×X8=Hx': Fx×X9=Fx') (H16)

23 — CALCULATE DEGREE OF COINCIDENCE Ct (= Ca1'+ Cb1'+Cc1'+ Cd3') BETWEEN VIEWERS/LISTENERS
TARGETED BY EACH ADVERTISEMENT AND AUDIENCE GROUP TO WHICH VIEWER/LISTENER
OF RECEIVER BELONGS (H17)

24 — FOR EACH ADVERTISEMENT RECORDED IN PERSONAL CALCULATION SHEET, TOTAL THE VALUES
OF CONTROL COEFFICIENTS Tx', Ct, Ka', Jn', Hx', Fx', AND OBTAIN DETERMINATION ELEMENT (Sum) (H18)

25 — DETERMINE PRIORITY ORDER FOR DISPLAYING EACH ADVERTISEMENT
IN THE ORDER OF LARGER VALUE OF Sum (H18)

26 — TRANSMIT ADVERTISEMENTS TO RECEIVER IN THE ORDER OF DETERMINED PRIORITY ORDER
FOR DISPLAYING THEM (H19)

II (FROM FIG. 13)

27 — GENERATE HISTORY DATA BASED ON DATA RELATING TO TRANSMISSION OF ADVERTISEMENTS
FROM ADVERTISEMENT DATA STORAGE PART (H20)

TO D OF FIG. 15

## Fig.15

D

28 — UPDATE DATA OF REMAINING NUMBER OF TRANSMISSIONS
IN PERSONAL CALCULATION SHEET (H21)

29 — ARE THERE ANY ADVERTISEMENTS
FOR WHICH REMAINING NUMBER OF
TRANSMISSIONS ARE 0 IN TEMPORARY
PERSONAL CALCULATION SHEET ?
(H21)

YES

30 — DELETE ITS ADVERTISEMENT ID AND
ITS RELATED DATA FROM PERSONAL
CALCULATION SHEET (H21)

NO

31 — CALCULATE WEIGHT (Ka) FOR THE REMAINING NUMBER OF TRANSMISSIONS WITH RESPECT
TO THE TRANSMITTED ADVERTISEMENT, AND UPDATE Ka IN PERSONAL CALCULATION SHEET (H21)

32 — DETERMINE CONTROL COEFFICIENT Jn FOR PREDETERMINED TRANSMISSION ORDER
IN TEMPORARY PERSONAL CALCULATION SHEET (H22)

33 — FROM RECEIVER, RECEIVE ADVERTISEMENT ID OF DISPLAYED ADVERTISEMENT, PERSONAL ID, PROGRAM
ID OF PROGRAM WHICH WAS VIEWED/LISTENED TO UNTIL JUST BEFORE DISPLAY OF ADVERTISEMENT,
DATA INDICATING TIME AND DATE DATA WHEN ADVERTISEMENT WAS DISPLAYED, AND VOTING DATA (H23)

34 — FORMALLY UPDATE PERSONAL CALCULATION SHEET (H23)

35 — DID VIEWER/LISTENER
PRESSED "INTERESTED-IN BUTTON" OR
"NOT-INTERESTED-IN BUTTON" WITH
RESPECT TO DISPLAYED ADVERTISEMENT
DURING THE ADVERTISEMENT
IS DISPLAYED? (H24)

YES

36 — INCREASE OR DECREASE VALUE OF CONTROL COEFFICIENT
Fx WITH RESPECT TO ALL ADVERTISEMENTS BELONGING
TO THE SAME CATEGORY (I.E. ALL ADVERTISEMENTS HAVING
SAME ATTRIBUTE) AS THE CATEGORY OF THE ADVERTISEMENT,
WITH RESPECT TO THAT (ATTRIBUTE OF ADVERTISEMENT)
THE BUTTON WAS PRESSED (H24)

NO

TO I OF FIG. 12

# Fig.16

START

1 — ADVERTISEMENT TRANSMITTING APPARATUS RECEIVES HISTORY DATA AND STORES IT (I1)

2 — CALCULATE REMAINING NUMBER OF TRANSMISSIONS OF EACH ADVERTISEMENT (I2)

3 — IS REMAINING NUMBER OF TRANSMISSIONS < 0 OR =0 ? (I3)

NO

YES

4 — GENERATE DELETION COMMAND (I3)

5 — GENERATE CONTROL VARIABLE APPLICATION COMMAND (I3)

END

# Fig.17

START

1 — CALCULATE THE NUMBER THAT EACH ADVERTISEMENT WAS DISPLAYED WITH RESPECT TO EACH PROGRAM (CONTENT) (J1)

2 — OBTAIN RATIO OF THE TOTAL NUMBER OF DISPLAYS DEFINED BY CLIENT OF ADVERTISEMENT AND THE NUMBER OF DISPLAYS FOR EACH PROGRAM (J2)

3 — DISTRIBUTE ADVERTISEMENT FEES PAID BY THE CLIENT TO RESPECTIVE COMPANIES WHICH DISTRIBUTED RESPECTIVE PROGRAMS, RESPECTIVELY, IN ACCORDANCE WITH THE ABOVE OBTAINED RATIO (J3)

END

# Fig.18

```
                    ┌──────────────┐
                    │    START     │
                    └──────┬───────┘
                           │
                           ▼
   ┌────────────────────────────────────────────────────────────────────┐
 1 │ SEND COPIES OF DATA INDICATING PERSONAL ID AND CATEGORIES           │
   │ TO WHICH THE VIEWER/LISTENER BELONGS TO CALCULATION PART 6 (D'1)     │
   └────────────────────────────────────┬───────────────────────────────┘
                                        │
                                        ▼
   ┌────────────────────────────────────────────────────────────────────┐
 2 │ SEND, TO CALCULATION PART 6, COPIES OF DISPLAY PERIOD DATA OF        │
   │ ADVERTISEMENT, AUDIENCE GROUP SPECIFYING CATEGORY DATA, DATA         │
   │ REPRESENTING THE NUMBER OF VIEWERS/LISTENERS BELONGING TO            │
   │ EACH OF AUDIENCE GROUP SPECIFYING CATEGORIES, DATA INDICATING        │
   │ TOTAL NUMBER OF TIMES OF DISPLAYS OF ADVERTISEMENT, PREFERRED        │
   │ TRANSMISSION TIME DATA, ADVERTISEMENT ATTRIBUTE DATA,                │
   │ PREDETERMINED TRANSMISSION ORDER DATA, VIEWER/LISTENER'S TASTE       │
   │ DATA, AND ADVERTISEMENT LENGTH DATA, AND DATA INDICATING VALUE       │
   │ ASSIGNED TO EACH OF AUDIENCE GROUP SPECIFYING CATEGORIES (D'2)       │
   └────────────────────────────────────┬───────────────────────────────┘
                                        │
                                        ▼
                          ◇◇◇◇◇◇◇◇◇◇◇◇◇◇◇◇             NO   4    ┌──────────────────────────┐
 3                      SHOULD ADVERTISEMENT  ◇──────────────────▶│ DISCARD RECEIVED COPY    │
                        BE ASSIGNED TO                            │ OF ADDITIONAL DADA (D3'a) │
                        VIEWER/LISTENER ? (D'3)                   └───────────┬──────────────┘
                          ◇◇◇◇◇◇◇◇◇◇◇◇◇◇◇◇                                    │
                                 │ YES                                        │
                                 ▼                                           │
   ┌────────────────────────────────────────────────────────────────────┐   │
 5 │ REGISTER RECEIVED ADDITIONAL DADA WITH PERSONAL CALCULATION SHEET   │   │
   │ (D3'b)                                                              │   │
   └────────────────────────────────────┬───────────────────────────────┘   │
                                        │                                    │
                                        ▼                                    │
   ┌────────────────────────────────────────────────────────────────────┐   │
 6 │ CALCULATE UPPER LIMIT TRANSMISSION NUMBER (D4(D4'a-D4'f))           │   │
   └────────────────────────────────────┬───────────────────────────────┘   │
                                        │◀───────────────────────────────────┘
                                        ▼
                                ┌──────────────┐
                                │     END      │
                                └──────────────┘
```

<table>
<tr><td colspan="2" align="center">**INTERNATIONAL SEARCH REPORT**</td><td colspan="2">International application No.<br><br>PCT/JP00/03103</td></tr>
</table>

| A. CLASSIFICATION OF SUBJECT MATTER |
| --- |
| Int.Cl$^7$  H04N7/173 |
| According to International Patent Classification (IPC) or to both national classification and IPC |

| B. FIELDS SEARCHED |
| --- |
| Minimum documentation searched (classification system followed by classification symbols)<br>Int.Cl$^7$  H04N7/10, 7/14-7/173, 7/20 |
| Documentation searched other than minimum documentation to the extent that such documents are included in the fields searched<br>Jitsuyo Shinan Koho        1922-1996    Toroku Jitsuyo Shinan Koho  1994-2000<br>Kokai Jitsuyo Shinan Koho  1971-2000    Jitsuyo Shinan Toroku Koho  1996-2000 |
| Electronic data base consulted during the international search (name of data base and, where practicable, search terms used) |

**C. DOCUMENTS CONSIDERED TO BE RELEVANT**

| Category* | Citation of document, with indication, where appropriate, of the relevant passages | Relevant to claim No. |
| --- | --- | --- |
| X | JP 9-251296 A (Yamaha Corporation),<br>22 September, 1997 (22.09.97),<br>Full text; Figs. 1 to 10   (Family: none) | 1,2,4,10,13,<br>14,16,22,25,<br>26,28,34 |
| Y | | 3,5,6,8,9,<br>11,12,15,17,<br>18,20,21,23,<br>24,27,29,30,<br>32,33,35,36 |
| A | | 7,19,31 |
| Y | JP 9-116812 A (BROTHER INDUSTRIES, LTD.),<br>02 May, 1997 (02.05.97),<br>Full text; Figs. 1 to 6   (Family: none) | 3,5,6,8,9,<br>11,12,15,17,<br>18,20,21,23,<br>24,27,29,30,<br>32,33,35,36 |
| A | | 1,2,4,7,10,<br>13,14,16,19,<br>22,25,26,28,<br>31,34 |
| A | JP 9-83991 A (Toshiba Corporation),<br>28 March, 1997 (28.03.97), | 1-36 |

| ☒ Further documents are listed in the continuation of Box C. | ☐ See patent family annex. |
| --- | --- |

| * Special categories of cited documents:<br>"A"  document defining the general state of the art which is not considered to be of particular relevance<br>"E"  earlier document but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
| Date of the actual completion of the international search<br>07 August, 2000 (07.08.00) | Date of mailing of the international search report<br>22 August, 2000 (22.08.00) |
| Name and mailing address of the ISA/<br>Japanese Patent Office | Authorized officer |
| Facsimile No. | Telephone No. |

Form PCT/ISA/210 (second sheet) (July 1992)

**EP 1 292 146 A1**

**INTERNATIONAL SEARCH REPORT**

| International application No. |
| --- |
| PCT/JP00/03103 |

C (Continuation). DOCUMENTS CONSIDERED TO BE RELEVANT

| Category* | Citation of document, with indication, where appropriate, of the relevant passages | Relevant to claim No. |
| --- | --- | --- |
| | Full text; Figs. 1 to 13 (Family: none) | |
| A | JP 11-55636 A (Matsushita Electric Ind. Co., Ltd.), 26 February, 1999 (26.02.99), page 7; Fig. 5 (Family: none) | 1-36 |
| A | JP 9-163351 A (Wing Lab. K.K.), 20 June, 1997 (20.06.97), Full text; Fig. 1 (Family: none) | 1-36 |

Form PCT/ISA/210 (continuation of second sheet) (July 1992)

73